(19) Europäisches Patentamt
European Patent Office
Office européen des brevets

(11) **EP 3 570 547 A1**

(12) **EUROPEAN PATENT APPLICATION**
published in accordance with Art. 153(4) EPC

(43) Date of publication:
**20.11.2019 Bulletin 2019/47**

(51) Int Cl.:
**H04N 19/54** (2014.01)    **H04N 19/70** (2014.01)

(21) Application number: **17891818.1**

(22) Date of filing: **28.12.2017**

(86) International application number:
**PCT/JP2017/047373**

(87) International publication number:
**WO 2018/131523 (19.07.2018 Gazette 2018/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **12.01.2017 JP 2017003465**

(71) Applicant: **Sony Corporation Tokyo 180-0075 (JP)**

(72) Inventor: **KONDO, Kenji Tokyo 108-0075 (JP)**

(74) Representative: **D Young & Co LLP 120 Holborn London EC1N 2DY (GB)**

(54) **IMAGE PROCESSING DEVICE AND IMAGE PROCESSING METHOD**

(57)    The present disclosure relates to an image processing device and an image processing method that enable generation of a predicted image of a rectangular block with high accuracy in a case where the predicted image of the block is generated on the basis of motion vectors of two vertices of the block.

A prediction unit generates a predicted image of a PU on the basis of motion vectors of two vertices arranged in a direction of a side having a larger size out of a size in a longitudinal direction and a size in a lateral direction of the PU. The present disclosure can be applied to, for example, an image encoding device or the like that performs motion compensation by affine transformation based on two motion vectors and performs inter-predic-tion processing.

*FIG. 10*

**Description**

TECHNICAL FIELD

The present disclosure relates to an image processing device and an image processing method, and more particularly, to an image processing device and an image processing method that enable generation of a predicted image of a rectangular block with high accuracy in a case where the predicted image of the block is generated on the basis of motion vectors of two vertices of the block.

BACKGROUND ART

In the joint video exploration team (JVET) that searches for a next generation video coding of international telecommunication union telecommunication standardization sector (ITU-T), inter-prediction processing (affine motion compensation (MC) prediction) has been devised that is performed by affine transformation of a reference image on the basis of motion vectors of two vertices (for example, see Non-patent Documents 1 and 2). As a result, at the time of the inter-prediction processing, a predicted image can be generated in which changes in shape are compensated, such as translation (parallel movement) between screens, motion in a rotational direction, and scaling.

Furthermore, in the JVET, a technology called quad tree plus binary tree (QTBT) described in Non-Patent Document 3 is adopted as a technology for forming a coding unit (CU). Thus, there is a possibility that the shape of the CU is not only a square but also a rectangle.

CITATION LIST

NON-PATENT DOCUMENT

Non-Patent Document 1: Jianle Chen et al., "Algorithm Description of Joint Exploration Test Model 4 (JVET-C1001)", JVET of ITU-T SG16 WP3 and ISO/IEC JTC1/SC29/WG11, 26 May-1 June 2016
Non-Patent Document 2: Feng Zou, "Improved affine motion prediction (JVET-C0062)", JVET of ITU-T SG16 WP3 and ISO/IEC JTC1/SC29/WG11, 26 May-1 June 2016
Non-Patent Document 3: "EE2.1: Quadtree plus binary tree structure integration with JEM tools (JVET-C0024)", JVET of ITU-T SG16 WP3 and ISO/IEC JTC1/SC29/WG11, 16 May 2016

SUMMARY OF THE INVENTION

PROBLEMS TO BE SOLVED BY THE INVENTION

In a case where a prediction unit (PU) is the same rectangular block as the CU, if affine transformation in the inter-prediction processing is performed on the basis of motion vectors of two vertices on a short side of the PU, degradation in prediction accuracy due to errors of the motion vectors becomes large as compared with a case where affine transformation is performed on the basis of motion vectors of two vertices on a long side.

However, it has not been devised to change positions in the PU of vertices corresponding to the two motion vectors used in the affine transformation of the inter-prediction processing, depending on the shape of the PU. Thus, in a case where the shape of the PU is a rectangle, there has been a case where the predicted image cannot be generated with high accuracy.

The present disclosure has been made in view of such a situation, and it is an object to enable generation of a predicted image of a rectangular block with high accuracy in a case where the predicted image of the block is generated on the basis of motion vectors of two vertices of the block.

SOLUTIONS TO PROBLEMS

An image processing device according to an aspect of the present disclosure is an image processing device including a prediction unit that generates a predicted image of a block on the basis of motion vectors of two vertices arranged in a direction of a side having a larger size out of a size in a longitudinal direction and a size in a lateral direction of the block.

An image processing method according to an aspect of the present disclosure corresponds to the image processing device according to the aspect of the present disclosure.

In the aspect of the present disclosure, the predicted image of the block is generated on the basis of the motion vectors of the two vertices arranged in the direction of the side having the larger size out of the size in the longitudinal direction and the size in the lateral direction of the block.

EFFECTS OF THE INVENTION

According to the aspect of the present disclosure, a predicted image can be generated. Furthermore, according to the aspect of the present disclosure, a predicted image of a rectangular block can be generated with high accuracy in a case where the predicted image of the block is generated on the basis of motion vectors of two vertices of the block.

Note that, the effect described here is not necessarily limited, and can be any effect described in the present disclosure.

BRIEF DESCRIPTION OF DRAWINGS

Fig. 1 is a diagram describing inter-prediction processing that performs motion compensation on the basis of one motion vector.
Fig. 2 is a diagram describing inter-prediction processing that performs motion compensation on the basis of one motion vector and rotation angle.
Fig. 3 is a diagram describing inter-prediction processing that performs motion compensation on the basis of two motion vectors.
Fig. 4 is a diagram describing inter-prediction processing that performs motion compensation on the basis of three motion vectors.
Fig. 5 is a diagram describing blocks before and after affine transformation based on three motion vectors.
Fig. 6 is a diagram describing QTBT.
Fig. 7 is a diagram describing inter-prediction processing based on two motion vectors for a rectangular PU.
Fig. 8 is a diagram describing inter-prediction processing based on two motion vectors in which errors have occurred, for the rectangular PU.
Fig. 9 is a diagram describing inter-prediction processing based on three motion vectors for the rectangular PU.
Fig. 10 is a block diagram illustrating a configuration example of an embodiment of an image encoding device.
Fig. 11 is a diagram describing two pieces of motion vector information.
Fig. 12 is a diagram describing adjacent vectors.
Fig. 13 is an example illustrating a region of a CU whose Affine flag is set to 1.
Fig. 14 is a diagram illustrating an example of a boundary of the region of the CU whose Affine flag is set to 1.
Fig. 15 is a diagram illustrating another example of the boundary of the region of the CU whose Affine flag is set to 1.
Fig. 16 is a flowchart describing image encoding processing.
Fig. 17 is a flowchart describing a first example of inter-prediction processing mode setting processing.
Fig. 18 is a flowchart describing a second example of the inter-prediction processing mode setting processing.
Fig. 19 is a flowchart describing merge affine transformation mode encoding processing.
Fig. 20 is a flowchart describing AMVP affine transformation mode encoding processing.
Fig. 21 is a flowchart describing Affine flag encoding processing.
Fig. 22 is a block diagram illustrating a configuration example of an embodiment of an image decoding device.
Fig. 23 is a flowchart describing image decoding processing.
Fig. 24 is a flowchart describing merge affine transformation mode decoding processing.
Fig. 25 is a flowchart describing AMVP affine transformation mode decoding processing.
Fig. 26 is a block diagram illustrating a configuration example of hardware of a computer.
Fig. 27 is a block diagram illustrating an example of a schematic configuration of a television device.
Fig. 28 is a block diagram illustrating an example of a schematic configuration of a mobile phone.
Fig. 29 is a block diagram illustrating an example of a schematic configuration of a recording/reproducing device.
Fig. 30 is a block diagram illustrating an example of a schematic configuration of an imaging device.
Fig. 31 is a block diagram illustrating an example of a schematic configuration of a video set.
Fig. 32 is a block diagram illustrating an example of a schematic configuration of a video processor.
Fig. 33 is a block diagram illustrating another example of the schematic configuration of the video processor.
Fig. 34 is a block diagram illustrating an example of a schematic configuration of a network system.

MODE FOR CARRYING OUT THE INVENTION

Hereinafter, a premise of the present disclosure and modes for carrying out the present disclosure (hereinafter referred to as embodiments) will be described. Note that, description will be made in the following order.

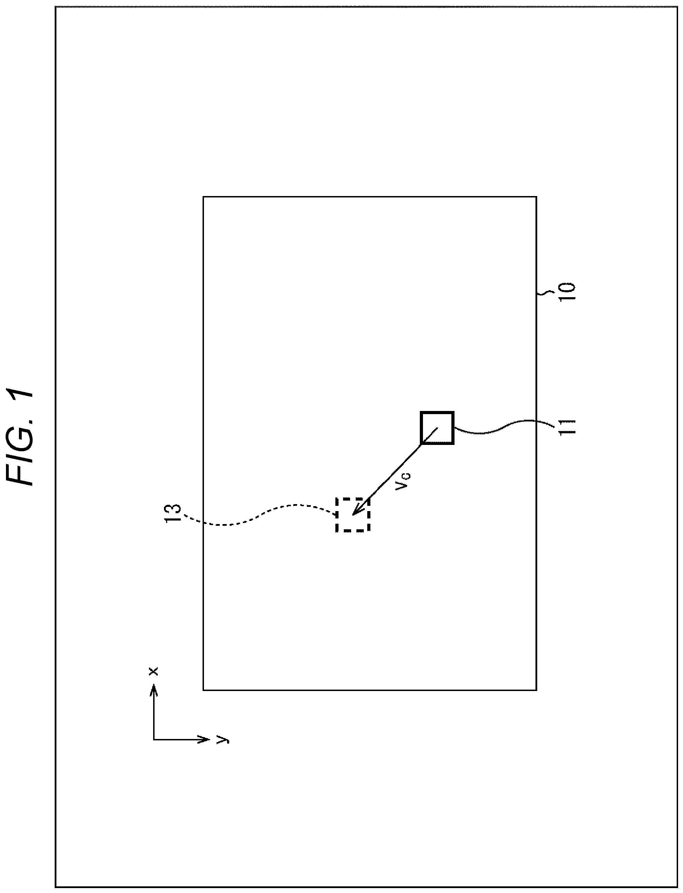

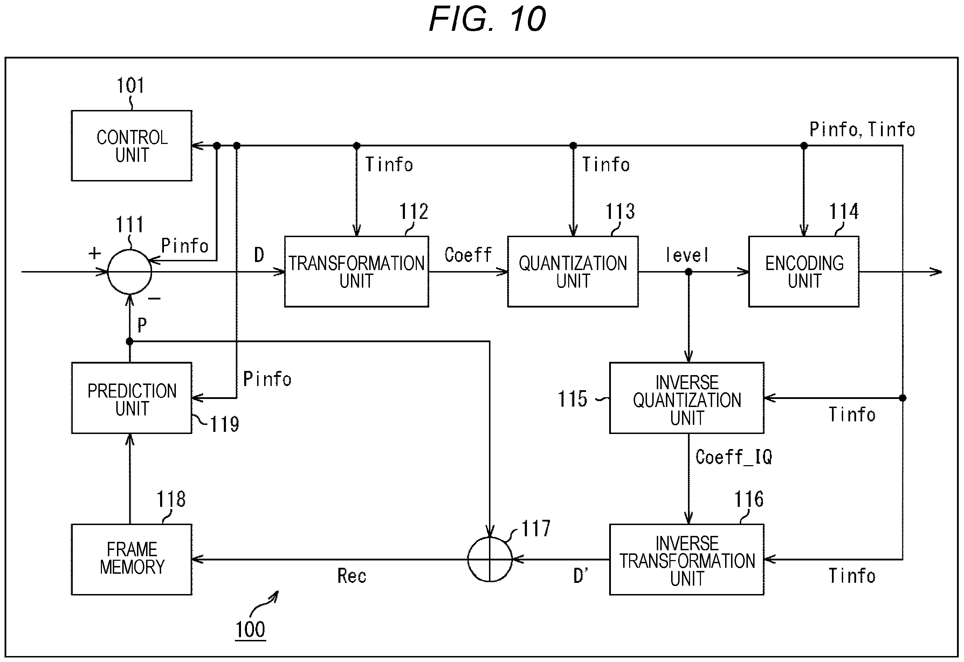

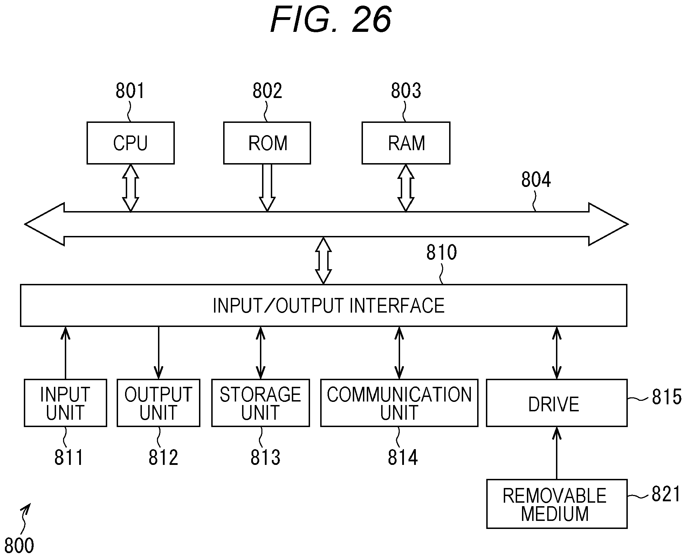

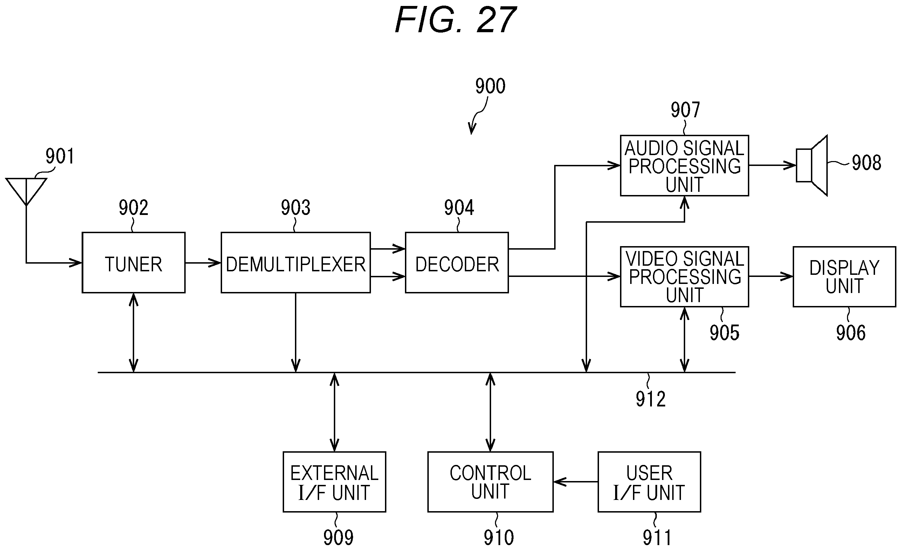

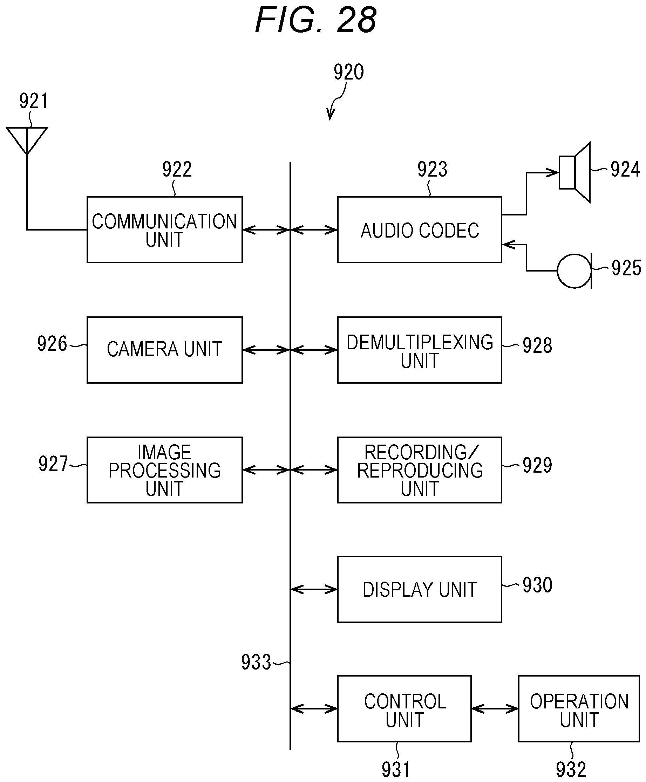

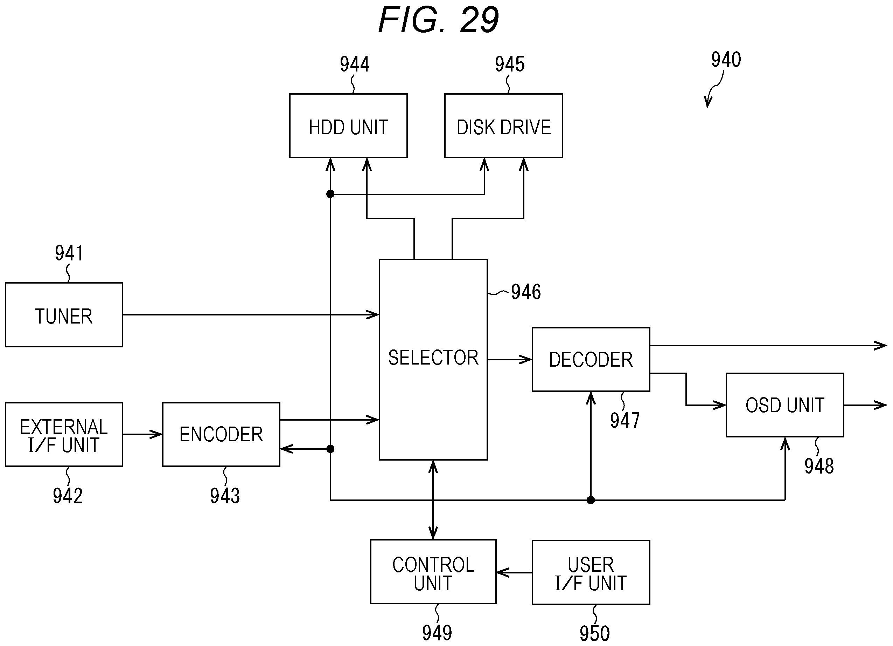

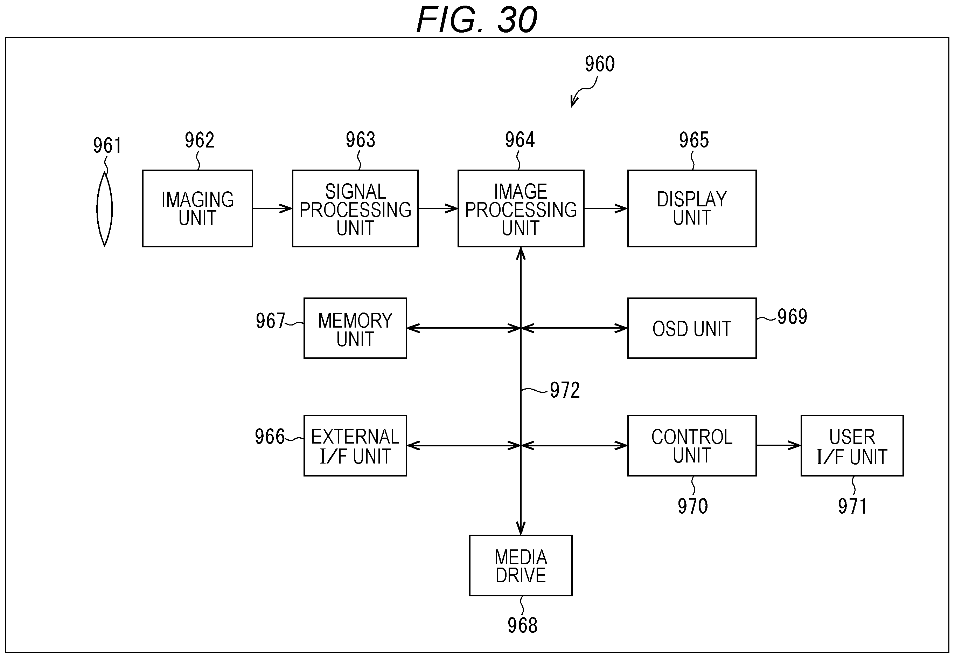

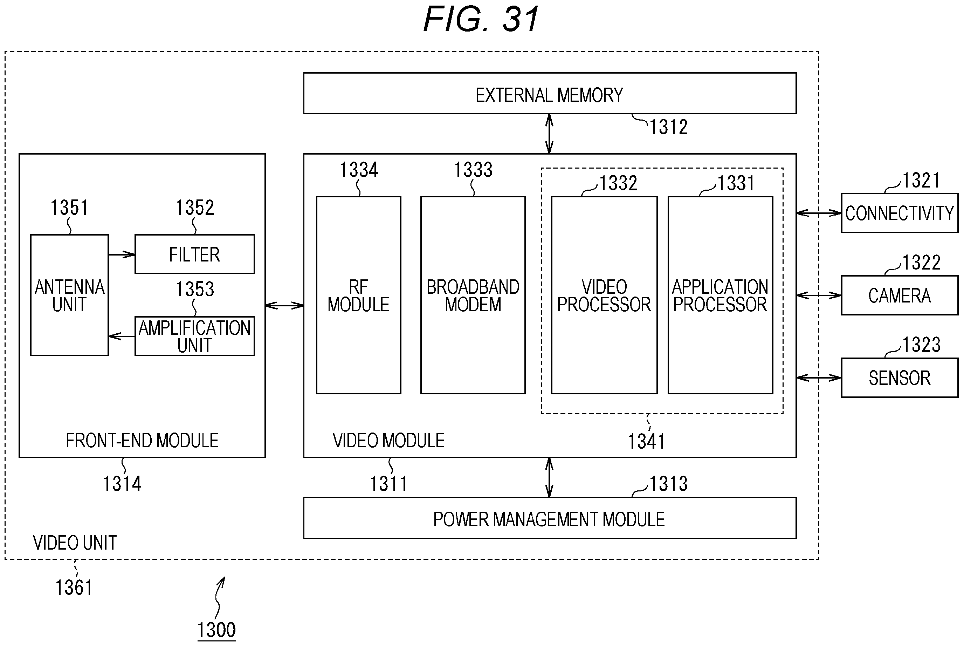

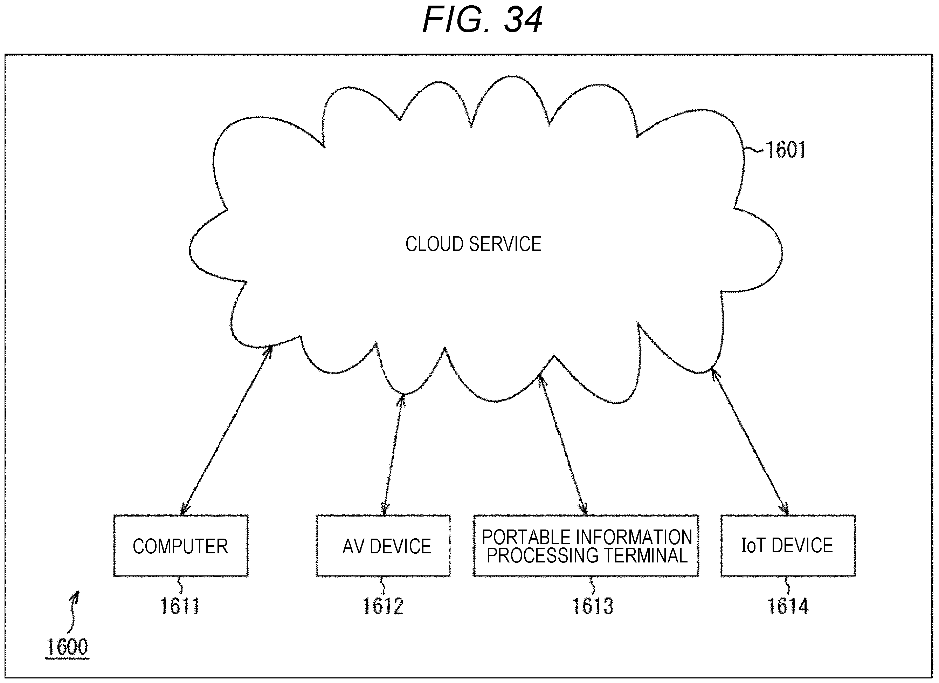

0. Premise of the present disclosure (Figs. 1 to 9)
1. First embodiment: image processing device (Figs. 10 to 25)
2. Second embodiment: computer (Fig. 26)
3. Third embodiment: television device (Fig. 27)
4. Fourth embodiment: mobile phone (Fig. 28)
5. Fifth embodiment: recording/reproducing device (Fig. 29)
6. Sixth embodiment: imaging device (Fig. 30)
7. Seventh embodiment: video set (Figs. 31 to 33)
8. Eighth embodiment: network system (Fig. 34)

<Premise of the present disclosure>

(Description of inter-prediction processing that performs motion compensation on the basis of one motion vector)

Fig. 1 is a diagram describing inter-prediction processing that performs motion compensation on the basis of one motion vector.
Note that, in the following description, unless otherwise specified, a lateral direction (horizontal direction) of an image (picture) is defined as an x direction and a longitudinal direction (vertical direction) is defined as a y direction.
As illustrated in Fig. 1, in the inter-prediction processing that performs motion compensation on the basis of one motion vector, one motion vector $v_c(v_{cx}, v_{cy})$ is determined for a PU 11 (current block) to be predicted. Then, a block 13 of the same size as the PU 11 existing at a position apart from the PU 11 by the motion vector $v_c$, in a reference image at a time different from that of a picture 10 including the PU 11, is subjected to translation on the basis of the motion vector $v_c$, whereby a predicted image of the PU 11 is generated.
In other words, in the inter-prediction processing that performs motion compensation on the basis of one motion vector, affine transformation is not performed on the reference image, and a predicted image is generated in which only the translation between screens is compensated. Furthermore, two parameters $v_{cx}$ and $v_{cy}$ are used for the inter-prediction processing. Such inter-prediction processing is adopted in advanced video coding (AVC), high efficiency video coding (HEVC), and the like.

(Description of inter-prediction processing that performs motion compensation on the basis of one motion vector and rotation angle)

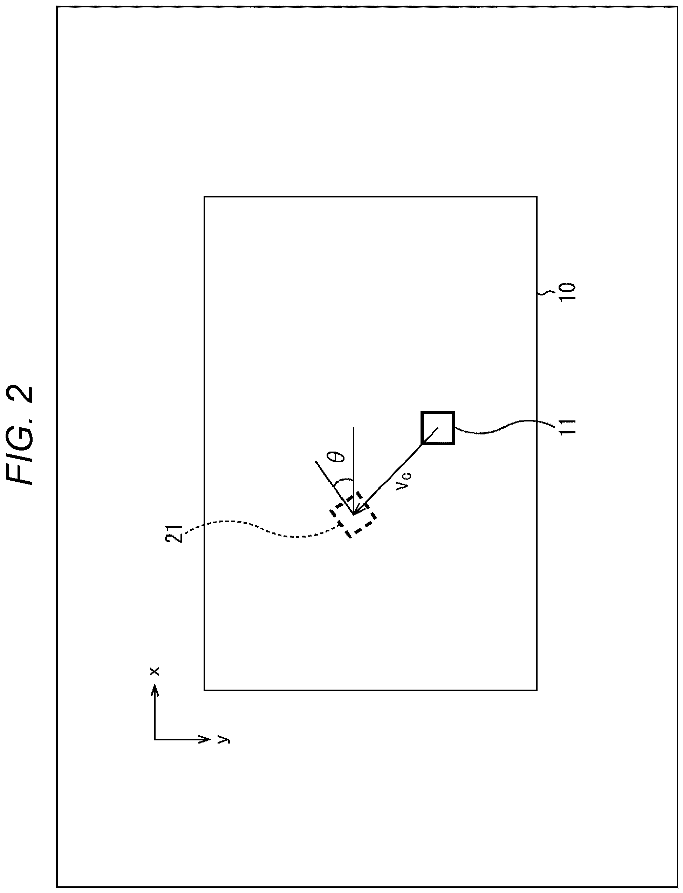

Fig. 2 is a diagram describing inter-prediction processing that performs motion compensation on the basis of one motion vector and rotation angle.
As illustrated in Fig. 2, in the inter-prediction processing that performs motion compensation on the basis of one motion vector and rotation angle, one motion vector $v_c(v_{cx}, v_{cy})$ and rotation angle $\theta$ is determined for the PU 11 to be predicted. Then, a block 21 of the same size as the PU 11 existing at the position apart from the PU 11 by the motion vector $v_c$ with an inclination of the rotation angle $\theta$, in the reference image at a time different from that of the picture 10 including the PU 11, is subjected to affine transformation on the basis of the motion vector $v_c$ and the rotation angle $\theta$, whereby a predicted image of the PU 11 is generated.
In other words, in the inter-prediction processing that performs motion compensation on the basis of one motion vector and rotation angle, affine transformation is performed on the reference image on the basis of the one motion vector and rotation angle. As a result, a predicted image is generated in which the translation between the screens and the motion in a rotational direction are compensated. Thus, accuracy of the predicted image is improved as compared with that in the inter-prediction processing that performs motion compensation on the basis of one motion vector. Furthermore, three parameters $v_{cx}$, $v_{cy}$, and $\theta$ are used for the inter-prediction processing.

(Description of inter-prediction processing that performs motion compensation on the basis of two motion vectors)

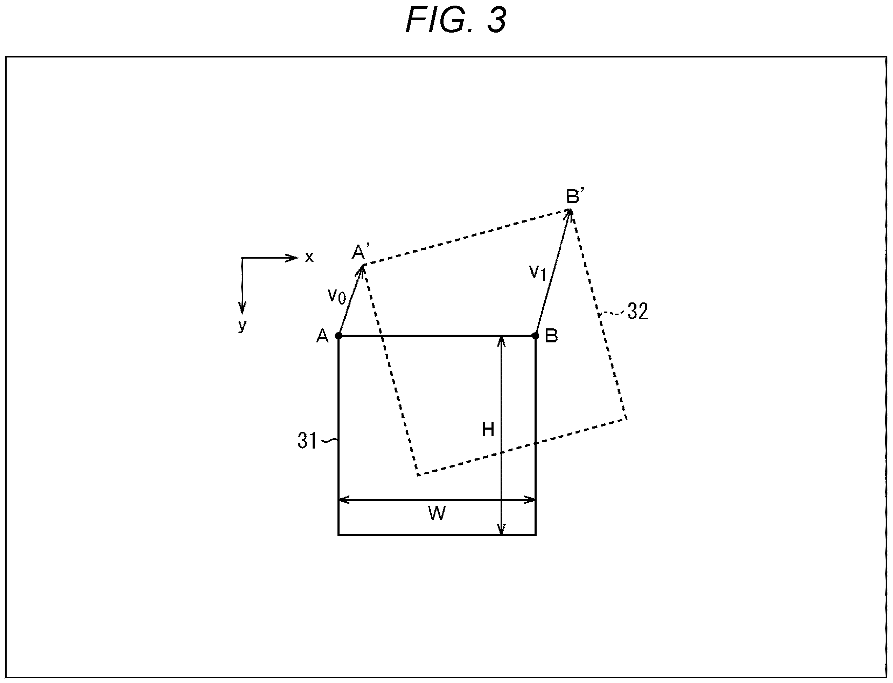

Fig. 3 is a diagram describing inter-prediction processing that performs motion compensation on the basis of two motion vectors.
As illustrated in Fig. 3, in the inter-prediction processing that performs motion compensation on the basis of two motion vectors, a motion vector $v_0(v_{0x}, v_{0y})$ at an upper left vertex A of a PU 31 and a motion vector $v_1(v_{1x}, v_{1y})$ at

an upper right vertex B are determined for the PU 31 to be predicted.

Then, a block 32 with a point A' apart from the vertex A by the motion vector $v_0$ as the upper left vertex, and a point B' apart from the vertex B by the motion vector $v_1$ as the upper right vertex, in the reference image at a time different from that of a picture including the PU 31, is subjected to affine transformation on the basis of the motion vector $v_0$ and the motion vector $v_1$, whereby a predicted image of the PU 31 is generated.

Specifically, the PU 31 is split into blocks of a predetermined size (hereinafter referred to as motion compensation unit blocks). Then, a motion vector $v(v_x, v_y)$ of each motion compensation unit block is obtained by an expression (1) below on the basis of the motion vector $v_0(v_{0x}, v_{0y})$ and the motion vector $v_1(v_{1x}, v_{1y})$.

[Expression 1]

$$v_x = \frac{(v_{1x} - v_{0x})}{W} x - \frac{(v_{1y} - v_{0y})}{H} y + v_{0x}$$

$$v_y = \frac{(v_{1y} - v_{0y})}{W} x + \frac{(v_{1x} - v_{0x})}{H} y + v_{0y}$$

$$\cdots (1)$$

Note that, W is a size of the PU 31 in the x direction, and H is a size of the PU 31 in the y direction. Thus, in a case where the PU 31 is a square, W and H are equal to each other. Furthermore, x and y are positions in the x direction and y direction of the motion compensation unit block, respectively. According to the expression (1), the motion vector v of the motion compensation unit block is determined on the basis of the position of the motion compensation unit block.

Then, a block of the same size as the motion compensation unit block apart from each motion compensation unit block, in the reference image by the motion vector v, is subjected to translation on the basis of the motion vector v, whereby a predicted image of each motion compensation unit block is generated.

As described above, in the inter-prediction processing that performs motion compensation on the basis of two motion vectors, affine transformation is performed on the reference image on the basis of the two motion vectors. As a result, a predicted image can be generated in which changes in shape are compensated, such as not only the translation between the screens and the motion in the rotational direction but also scaling. Thus, the accuracy of the predicted image is improved as compared with that in the inter-prediction processing that performs motion compensation on the basis of one motion vector and rotation angle. Furthermore, four parameters $v_{0x}$, $v_{0y}$, $v_{1x}$, and $v_{1y}$ are used for the inter-prediction processing. Such inter-prediction processing is adopted in joint exploration model (JEM) reference software.

Note that, the affine transformation based on the two motion vectors is an affine transformation on the premise that the blocks before and after the affine transformation are rectangular. To perform affine transformation even in a case where the blocks before and after the affine transformation are quadrangles other than rectangles, three motion vectors are necessary.

(Description of inter-prediction processing that performs motion compensation on the basis of three motion vectors)

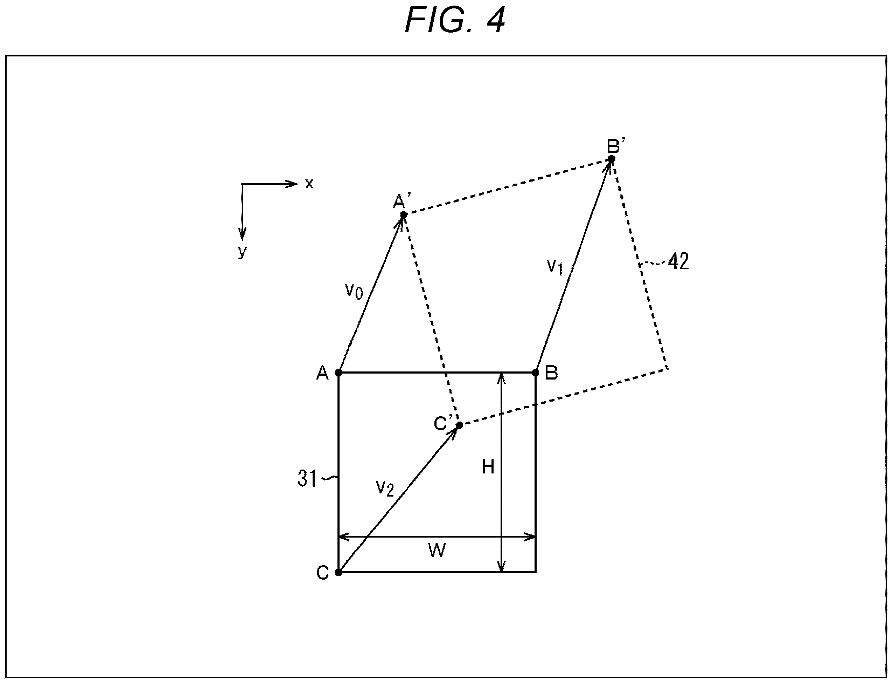

Fig. 4 is a diagram describing inter-prediction processing that performs motion compensation on the basis of three motion vectors.

As illustrated in Fig. 4, in the inter-prediction processing that performs motion compensation on the basis of three motion vectors, not only the motion vector $v_0(v_{0x}, v_{0y})$ and the motion vector $v_1(v_{1x}, v_{1y})$, but also a motion vector $v_2(v_{2x}, v_{2y})$ of a lower left vertex C is determined for the PU 31 to be predicted.

Then, a block 42 with the point A' apart from the vertex A by the motion vector $v_0$ as the upper left vertex, the point B' apart from the vertex B by the motion vector $v_1$ as the upper right vertex, and a point C' apart from the vertex C by the motion vector $v_2$ as the lower left vertex, in the reference image at a time different from that of the picture including the PU 31, is subjected to affine transformation on the basis of the motion vectors $v_0$ to $v_2$, whereby a predicted image of the PU 31 is generated.

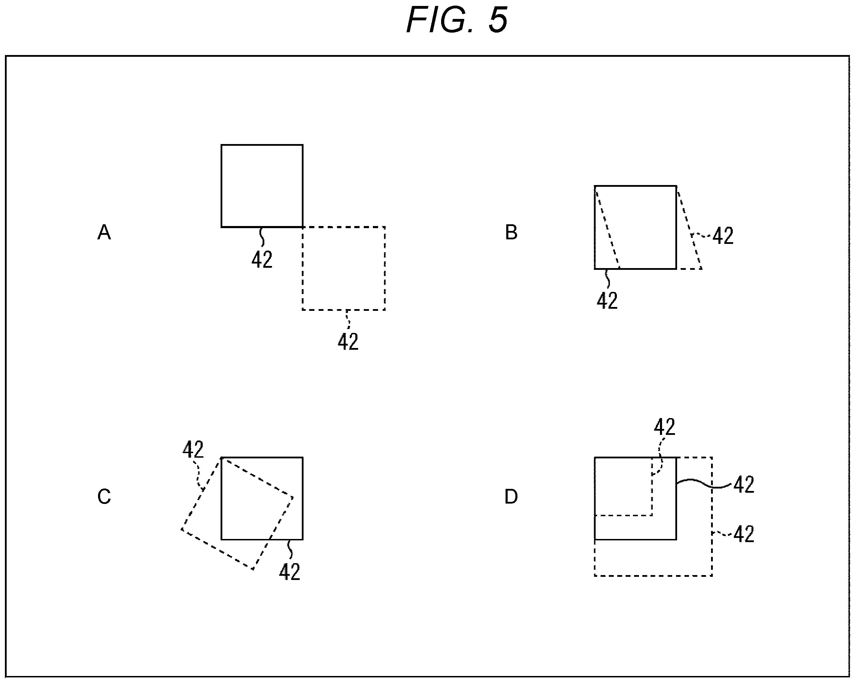

In other words, in the inter-prediction processing that performs motion compensation on the basis of three motion vectors, affine transformation is performed on the reference image on the basis of the three motion vectors. As a result, the block 42 is subjected to translation as illustrated in A of Fig. 5, subjected to skew as illustrated in B of Fig. 5, subjected to rotation as illustrated in C of Fig. 5, or subjected to scaling as illustrated in D of Fig. 5.

As a result, a predicted image is generated in which changes in shape are compensated, such as the translation between the screens, the motion in the rotational direction, the scaling, and the skew. Note that, in Fig. 5, the block 42 before the affine transformation is indicated by a solid line, and the block 42 after the affine transformation is indicated by a dotted line.

On the other hand, in the inter-prediction processing that performs motion compensation on the basis of two motion vectors described with reference to Fig. 3, for the predicted image, changes in shape can be compensated, such as the translation between the screens, the motion in the rotational direction, and the scaling, but the skew cannot be compensated. Thus, in the inter-prediction processing that performs motion compensation on the basis of three motion vectors, the accuracy of the predicted image is improved as compared with that in the inter-prediction processing that performs motion compensation on the basis of two motion vectors.

However, in the inter-prediction processing that performs motion compensation on the basis of three motion vectors, six parameters $v_{0x}$, $v_{0y}$, $v_{1x}$, $v_{1y}$, $V_{2x}$, and $v_{2y}$ are used for the inter-prediction processing. Thus, the number of parameters used for the inter-prediction processing increases as compared with that in the inter-prediction processing that performs motion compensation on the basis of one motion vector and rotation angle or two motion vectors. There is therefore a trade-off relationship between improvement in prediction accuracy of the inter-prediction processing using affine transformation and suppression of overhead.

Thus, in the JVET, a technology has been devised for switching the inter-prediction processing that performs motion compensation on the basis of two motion vectors and the inter-prediction processing that performs motion compensation on the basis of three motion vectors, by a control signal.

(Description of QTBT)

In a conventional image encoding format such as Moving Picture Experts Group 2 (MPEG2) (ISO/IEC 13818-2) or AVC, encoding processing is executed in a processing unit called a macroblock. The macroblock is a block having a uniform size of 16 × 16 pixels. On the other hand, in HEVC, encoding processing is executed in a processing unit (coding unit) called CU. The CU is a block having a variable size formed by recursive splitting of a largest coding unit (LCU) that is a maximum coding unit. A maximum size of the CU that can be selected is 64 × 64 pixels. A minimum size of the CU that can be selected is 8 × 8 pixels. The CU of the minimum size is called a smallest coding unit (SCU). Note that, the maximum size of the CU is not limited to 64 × 64 pixels, and may be a larger block size such as 128 × 128 pixels or 256 × 256 pixels.

As described above, as a result that the CU having a variable size is adopted, in HEVC, image quality and coding efficiency can be adaptively adjusted depending on a content of the image. Prediction processing for predictive coding is executed in a processing unit called a PU. The PU is formed by splitting of the CU with one of several splitting patterns. Furthermore, the PU includes a processing unit called a prediction block (PB) for each luminance (Y) and color difference (Cb, Cr). Moreover, orthogonal transformation processing is executed in a processing unit called a transform unit (TU). The TU is formed by splitting of the CU or PU up to a certain depth. Furthermore, the TU includes a processing unit (transformation block) called a transform block (TB) for each luminance (Y) and color difference (Cb, Cr) .

In the following, there are cases where description is made by using "block" as a partial region or processing unit of the image (picture) (not a block of the processing part). The "block" in this case indicates an arbitrary partial region in the picture, and its size, shape, characteristic, and the like are not limited. That is, the "block" in this case includes an arbitrary partial region (processing unit), for example, the TB, TU, PB, PU, SCU, CU, LCU (CTB), sub-block, macroblock, tile, slice, or the like.

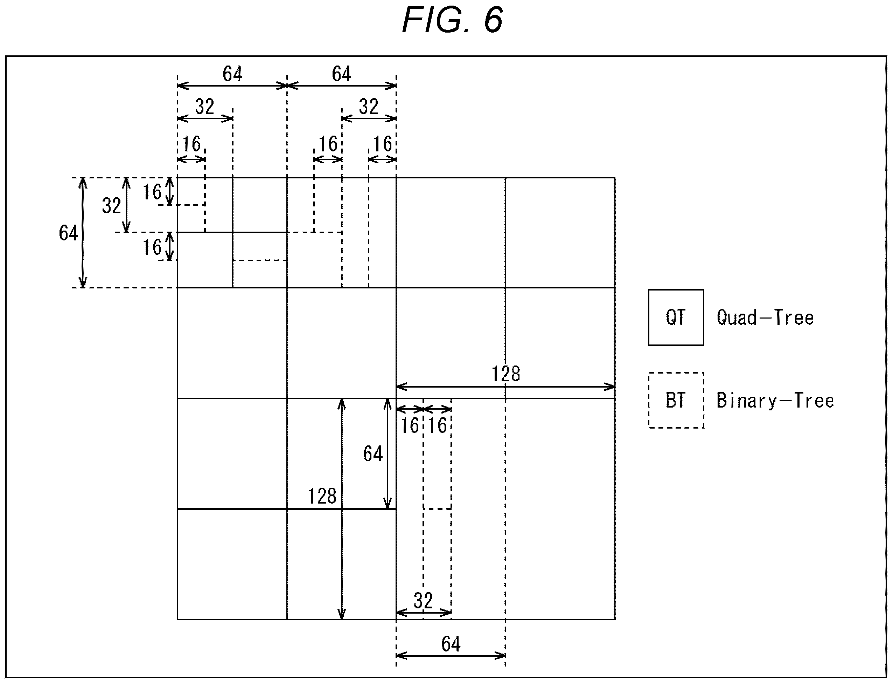

Fig. 6 is a diagram describing QTBT adopted in the JVET.

In HEVC, one block can only be split into four (= 2 × 2) sub-blocks by splitting in the horizontal direction and the vertical direction. On the other hand, in QTBT, one block can be split not only into four (= 2 × 2) sub-blocks but also into two (= 1 × 2, 2 × 1) sub-blocks by splitting in only either one of the horizontal direction or the vertical direction. In other words, in QTBT, formation of the CU is performed by recursive repetition of splitting of one block into four or two sub-blocks, and as a result, a tree structure is formed in a form of a quadtree (Quad-Tree) or binary tree (Binary-Tree). Note that, in the following description, the PU and the TU are assumed to be the same as the CU.

(Description of inter-prediction processing based on two motion vectors for rectangular PU)

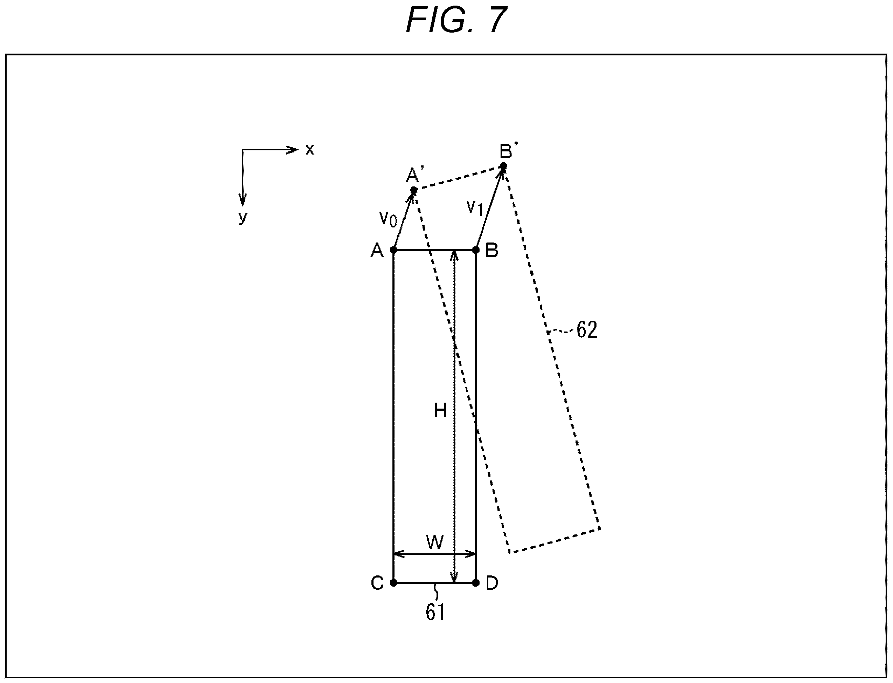

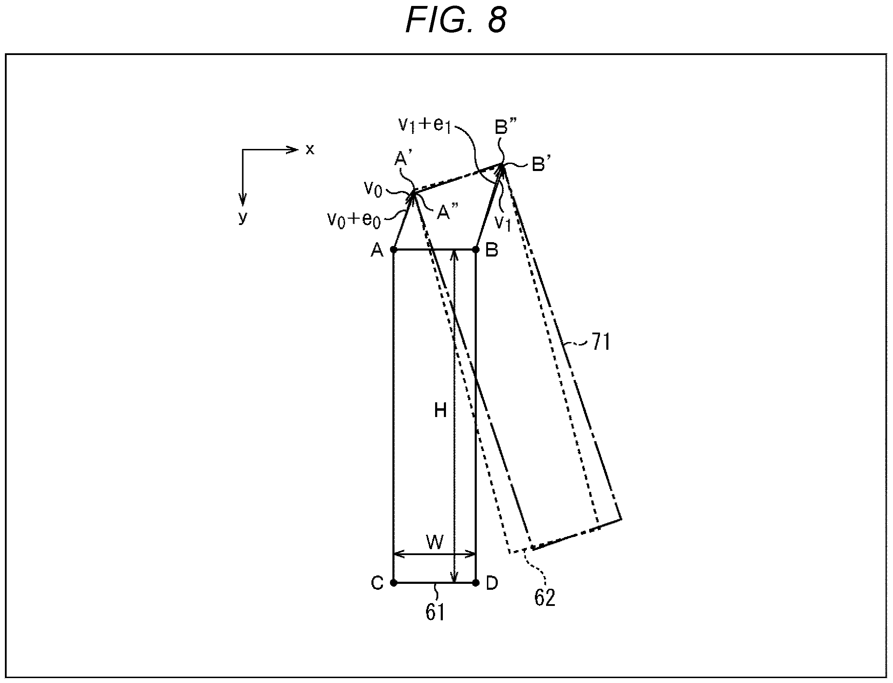

Figs. 7 and 8 are diagrams each describing inter-prediction processing based on two motion vectors for a rectangular PU.

In the example of Fig. 7, a PU 61 to be predicted is a longitudinally elongated rectangle in which a size H in the y direction is large as compared with a size W in the x direction. In this case, similarly to the case of Fig. 3, if the inter-prediction processing that performs motion compensation on the basis of two motion vectors is performed on the PU 61, as illustrated in Fig. 7, a block 62 in the reference image at a time different from that of a picture including the PU 61 is subjected to affine transformation on the basis of the motion vector $v_0$ and the motion vector $v_1$, whereby a predicted image of the PU 61 is generated. Note that, the block 62 is a block with the point A' apart from the vertex A by the motion vector $v_0$ as the upper left vertex, and the point B' apart from the vertex B by the motion vector $v_1$ as the upper right vertex.

Here, as illustrated in Fig. 8, when an error $e_0$ occurs in the motion vector $v_0$ and an error $e_1$ occurs in the motion vector $v_1$, a block 71 in the reference image is subjected to affine transformation on the basis of a motion vector $v_0 + e_0$ and a motion vector $v_1 + e_1$, whereby the predicted image of the PU 61 is generated. Note that, the block 71 is a block with a point A" apart from the vertex A by the motion vector $v_0 + e_0$ as the upper left vertex, and a point B" apart from the vertex B by the motion vector $v_1 + e_1$ as the upper right vertex.

An error of the motion vector v of each of motion compensation blocks of the PU 61 is influenced by the error $e_0$ of the motion vector $v_0$ and the error $e_1$ of the motion vector $v_1$ used for calculation of the motion vector v. Furthermore, the influence is larger as a distance increases from the vertex A corresponding to the motion vector $v_0$ and the vertex B corresponding to the motion vector $v_1$.

Furthermore, in the examples of Figs. 7 and 8, since the vertex A and the vertex B are arranged in the x direction that is the short side direction of the PU 61, a distance between the vertex A and the vertex C facing the vertex A, and a distance between the vertex B and the vertex D facing the vertex B are large.

Thus, a deviation between the block 62 and the block 71 becomes large. The accuracy of the predicted image is therefore degraded, and a residual between the PU 61 and the predicted image is increased. As a result, in a case where the residual subjected to orthogonal transformation is not made to be zero by quantization, the coding efficiency is degraded of an encoded stream including the residual after the quantization. Furthermore, in a case where the residual subjected to orthogonal transformation is made to be zero by quantization, the accuracy of the predicted image is degraded, so that image quality of a decoded image is degraded.

(Description of inter-prediction processing based on three motion vectors for rectangular PU)

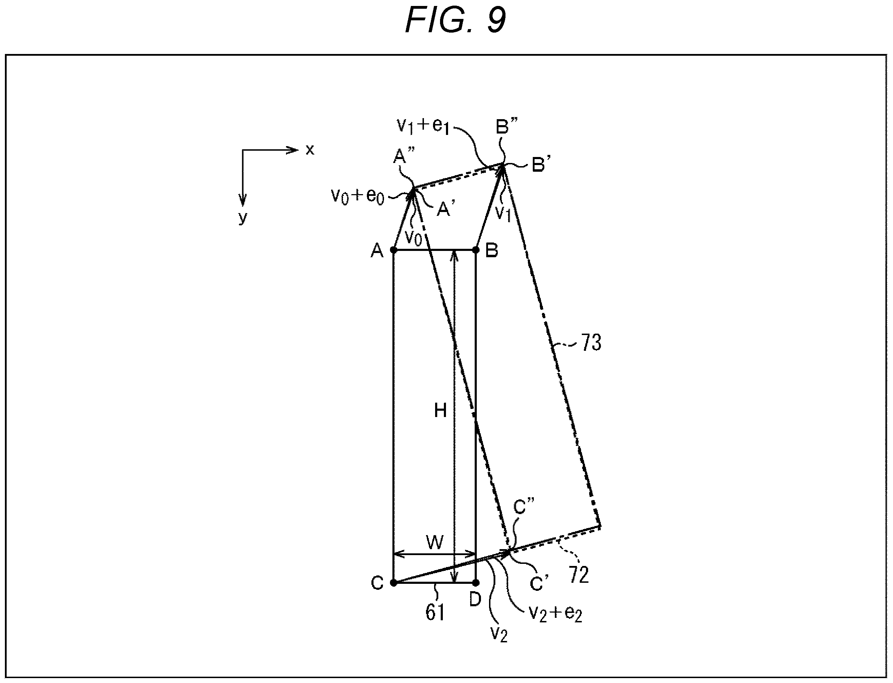

Fig. 9 is a diagram describing inter-prediction processing based on three motion vectors for the rectangular PU.

When the inter-prediction processing that performs motion compensation on the basis of three motion vectors is performed on the longitudinally elongated rectangular PU 61 similarly to the case of Fig. 4, as illustrated in Fig. 9, a block 72 in the reference image at a time different from that of the picture including the PU 61 is subjected to affine transformation on the basis of the motion vectors $v_0$ to $v_2$, whereby a predicted image of the PU 61 is generated. Note that, the block 72 is a block with the point A' apart from the vertex A by the motion vector $v_0$ as the upper left vertex, the point B' apart from the vertex B by the motion vector $v_1$ as the upper right vertex, and the point C' apart from the vertex C by the motion vector $v_2$ as the lower left vertex.

Here, as illustrated in Fig. 9, when errors $e_1$ to $e_2$ occur in the motion vectors $v_0$ to $v_3$, respectively, a block 73 in the reference image is subjected to affine transformation on the basis of motion vectors $v_0 + e_0$, $v_1 + e_1$, and $v_2 + e_2$, whereby the predicted image of the PU 61 is generated. Note that, the block 73 is a block with the point A" apart from the vertex A by the motion vector $v_0 + e_0$ as the upper left vertex, the point B" apart from the vertex B by the motion vector $v_1 + e_1$ as the upper right vertex, and a point C" apart from the vertex C by a motion vector $v_2 + e_2$ as the lower left vertex.

In this case, by the motion vector $v_2 + e_2$, as in the case of Fig. 8, it can be prevented that the error of the motion vector v becomes larger for the lower side motion compensation block in the PU 61.

However, as described above, in the inter-prediction processing based on the three motion vectors, since the number of parameters is six, the overhead increases and the coding efficiency decreases. Thus, in the present disclosure, positions of vertices corresponding to two motion vectors are changed on the basis of a magnitude relationship between the size H and the size W, whereby the prediction accuracy is improved of the inter-prediction processing based on two motion vectors.

<First embodiment>

(Configuration example of image encoding device)

Fig. 10 is a block diagram illustrating a configuration example of an embodiment of an image encoding device as an image processing device to which the present disclosure is applied. An image encoding device 100 of Fig. 10 is a device that encodes a prediction residual between an image and its predicted image, such as AVC and HEVC. For example, the image encoding device 100 implements HEVC technology and technology devised by the JVET.

Note that, in Fig. 10, main processing parts and data flows are illustrated, and the ones illustrated in Fig. 10 are not necessarily all. That is, in the image encoding device 100, there may be a processing part not illustrated as a block in Fig. 10, or processing or a data flow not illustrated as an arrow or the like in Fig. 10.

The image encoding device 100 of Fig. 10 includes a control unit 101, a calculation unit 111, a transformation unit 112, a quantization unit 113, an encoding unit 114, an inverse quantization unit 115, an inverse transformation unit 116, a calculation unit 117, a frame memory 118, and a prediction unit 119. The image encoding device 100 performs encoding for each CU on a picture that is an input moving image of a frame basis.

Specifically, the control unit 101 of the image encoding device 100 sets encoding parameters (header information Hinfo, prediction information Pinfo, transformation information Tinfo, and the like) on the basis of input from the outside, rate-distortion optimization (RDO), and the like.

The header information Hinfo includes information, for example, a video parameter set (VPS), a sequence parameter set (SPS), a picture parameter set (PPS), a slice header (SH), and the like. For example, the header information Hinfo includes information that defines an image size (lateral width PicWidth, a longitudinal width PicHeight), a bit depth (luminance bitDepthY, color difference bitDepthC), a maximum value MaxCUSize/minimum value MinCUSize of CU size, and the like. Of course, a content of the header information Hinfo is arbitrary, and any information other than the above example may be included in the header information Hinfo.

The prediction information Pinfo includes, for example, a split flag indicating presence or absence of splitting in the horizontal direction or the vertical direction in each split hierarchy at the time of formation of the PU (CU). Furthermore, the prediction information Pinfo includes mode information pred mode flag indicating whether the prediction processing of the PU is intra-prediction processing or inter-prediction processing, for each PU.

In a case where the mode information pred mode flag indicates the inter-prediction processing, the prediction information Pinfo includes a Merge flag, an Affine flag, motion vector information, reference image specifying information that specifies the reference image, and the like. The Merge flag is information indicating whether a mode of the inter-prediction processing is a merge mode or an AMVP mode. The merge mode is a mode in which the inter-prediction processing is performed on the basis of a prediction vector selected from candidates including a motion vector (hereinafter referred to as an adjacent vector) generated on the basis of a motion vector of an encoded adjacent PU adjacent to a PU to be processed. The AMVP mode is a mode in which the inter-prediction processing is performed on the basis of a motion vector of the PU to be processed. The Merge flag is set to 1 in a case where it is indicated that the mode is the merge mode, and is set to 0 in a case where it is indicated that the mode is the AMVP mode.

The Affine flag is information indicating whether motion compensation is performed in an affine transformation mode or in a translation mode, in the inter-prediction processing. The translation mode is a mode in which motion compensation is performed by translation of the reference image on the basis of one motion vector. The affine transformation mode is a mode in which motion compensation is performed by affine transformation on the reference image on the basis of two motion vectors. The Affine flag (multiple vectors prediction information) is set to 1 in a case where it is indicated that motion compensation is performed in the affine transformation mode, and is set to 0 in a case where it is indicated that motion compensation is performed in the translation mode.

In a case where the Merge flag is set to 1, the motion vector information is prediction vector information that specifies a prediction vector from candidates including the adjacent vector, and in a case where the Merge flag is set to 0, the motion vector information is the prediction vector information, and a difference between the prediction vector and the motion vector of the PU to be processed. Furthermore, in a case where the Affine flag is set to 1, two pieces of motion vector information are included in the prediction information Pinfo, and in a case where the Affine flag is set to 0, one motion vector information is included.

In a case where the mode information pred mode flag indicates the intra-prediction processing, the prediction information Pinfo includes intra-prediction mode information indicating an intra-prediction mode that is a mode of the intra-prediction processing, and the like. Of course, a content of the prediction information Pinfo is arbitrary, and any information other than the above example may be included in the prediction information Pinfo.

The transformation information Tinfo includes TBSize indicating a size of the TB, and the like. Of course, a content of the transformation information Tinfo is arbitrary, and any information other than the above example may be included in the transformation information Tinfo.

The calculation unit 111 sequentially sets the input picture as a picture to be encoded, and sets a CU (PU, TU) to be encoded for the picture to be encoded on the basis of the split flag of the prediction information Pinfo. The calculation unit 111 obtains a prediction residual D by subtracting, from an image I (current block) of the PU to be encoded, a predicted image P (predicted block) of the PU supplied from the prediction unit 119, and supplies the prediction residual D to the transformation unit 112.

On the basis of the transformation information Tinfo supplied from the control unit 101, the transformation unit 112 performs orthogonal transformation or the like on the prediction residual D supplied from the calculation unit 111, and derives a transformation coefficient Coeff. The transformation unit 112 supplies the transformation coefficient Coeff to the quantization unit 113.

On the basis of the transformation information Tinfo supplied from the control unit 101, the quantization unit 113 scales (quantizes) the transformation coefficient Coeff supplied from the transformation unit 112, and derives a quantization transformation coefficient level level. The quantization unit 113 supplies the quantization transformation coefficient level level to the encoding unit 114 and the inverse quantization unit 115.

The encoding unit 114 encodes the quantization transformation coefficient level level, and the like supplied from the quantization unit 113 with a predetermined method. For example, the encoding unit 114 transforms the encoding parameters (header information Hinfo, prediction information Pinfo, transformation information Tinfo, and the like) supplied from the control unit 101, and the quantization transformation coefficient level level supplied from the quantization unit 113, into syntax values of respective syntax elements along a definition in a syntax table. Then, the encoding unit 114 encodes each syntax value (for example, performs arithmetic encoding such as context-based adaptive binary arithmetic coding (CABAC)).

The encoding unit 114 multiplexes, for example, coded data that is a bit string of each syntax element obtained as a result of encoding, and outputs the multiplexed data as an encoded stream.

On the basis of the transformation information Tinfo supplied from the control unit 101, the inverse quantization unit 115 scales (inversely quantizes) a value of the quantization transformation coefficient level level supplied from the quantization unit 113, and derives a transformation coefficient Coeff_IQ after inverse quantization. The inverse quantization unit 115 supplies the transformation coefficient Coeff_IQ to the inverse transformation unit 116. The inverse quantization performed by the inverse quantization unit 115 is inverse processing of the quantization performed by the quantization unit 113, and is processing similar to inverse quantization performed in an image decoding device as described later.

On the basis of the transformation information Tinfo supplied from the control unit 101, the inverse transformation unit 116 performs inverse orthogonal transformation and the like on the transformation coefficient Coeff_IQ supplied from the inverse quantization unit 115, and derives a prediction residual D'. The inverse transformation unit 116 supplies the prediction residual D' to the calculation unit 117. The inverse orthogonal transformation performed by the inverse transformation unit 116 is inverse processing of the orthogonal transformation performed by the transformation unit 112, and is processing similar to inverse orthogonal transformation performed in the image decoding device as described later.

The calculation unit 117 adds the prediction residual D' supplied from the inverse transformation unit 116 and the predicted image P corresponding to the prediction residual D' supplied from the prediction unit 119 together, to derive a local decoded image Rec. The calculation unit 117 supplies the local decoded image Rec to the frame memory 118.

The frame memory 118 reconstructs a decoded image on a picture basis by using the local decoded image Rec supplied from the calculation unit 117, and stores the decoded image in a buffer in the frame memory 118. The frame memory 118 reads a decoded image specified by the prediction unit 119 as a reference image from the buffer, and supplies the image to the prediction unit 119. Furthermore, the frame memory 118 may store the header information Hinfo, the prediction information Pinfo, the transformation information Tinfo, and the like related to generation of the decoded image in the buffer in the frame memory 118.

On the basis of the mode information pred_mode_flag of the prediction information Pinfo, the prediction unit 119 acquires, as a reference image, the decoded image at the same time as that of the CU to be encoded stored in the frame memory 118. Then, using the reference image, the prediction unit 119 performs, on the PU to be encoded, the intra-prediction processing in the intra-prediction mode indicated by the intra-prediction mode information.

Furthermore, on the basis of the mode information pred_mode_flag of the prediction information Pinfo and the reference image specifying information, the prediction unit 119 acquires, as a reference image, a decoded image at a time different from that of the CU to be encoded stored in the frame memory 118. On the basis of the Merge flag, the Affine flag, and the motion vector information, the prediction unit 119 performs motion compensation in the translation mode or the affine transformation mode, and performs inter-prediction processing in the merge mode or the AMVP mode, on the reference image.

The prediction unit 119 supplies the predicted image P of the PU to be encoded generated as a result of the intra-prediction processing or the inter-prediction processing to the calculation unit 111 and the calculation unit 117.

(Description of two pieces of motion vector information)

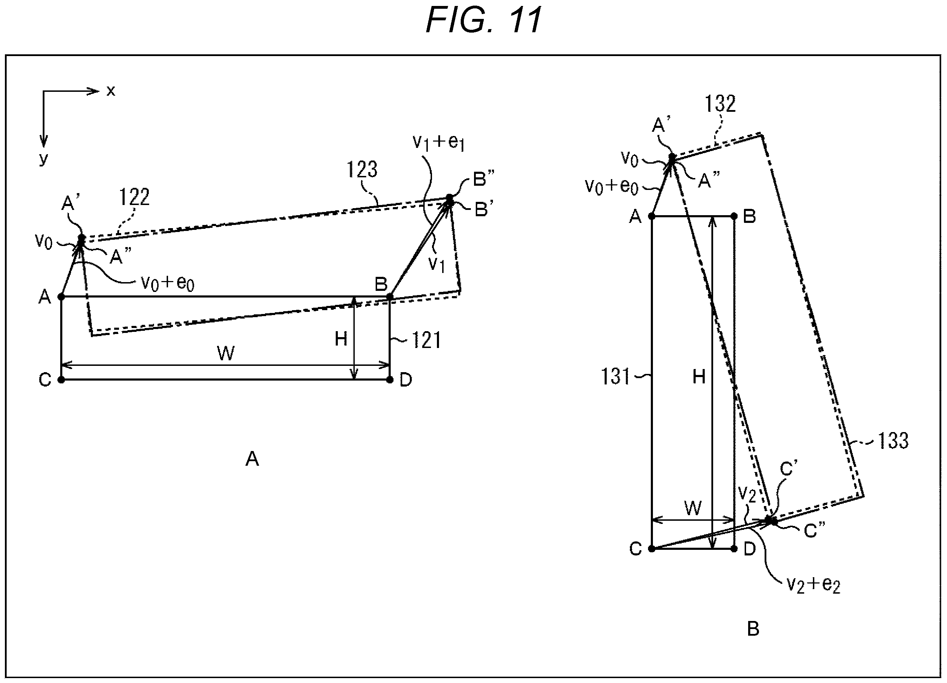

Fig. 11 is a diagram describing two pieces of motion vector information set on the basis of the RDO by the control unit 101.

As illustrated in A of Fig. 11, in a case where a PU 121 to be predicted is a laterally elongated rectangle in which the size W in the x direction is large as compared with the size H in the y direction, the control unit 101 sets motion vector information of the motion vector $v_0$ of the upper left vertex A of the PU 121 and the motion vector $v_1$ of the upper right vertex B, on the basis of the RDO. In other words, on the basis of the RDO, the control unit 101 sets the motion vector information of the motion vectors $v_0$ and $v_1$ of the two vertices A and B arranged in the x direction that is a direction of a side having a larger size W out of the size H and the size W.

Thus, the prediction unit 119 performs affine transformation on the block 122 in the reference image at a time different from that of the PU 121 on the basis of the motion vector $v_0$ and the motion vector $v_1$ corresponding to the set two pieces of motion vector information, thereby generating a predicted image of the PU 121. Note that, the block 122 is a block with the point A' apart from the vertex A by the motion vector $v_0$ as the upper left vertex, and the point B' apart from the vertex B by the motion vector $v_1$ as the upper right vertex.

Here, as illustrated in A of Fig. 11, when the error $e_0$ occurs in the motion vector $v_0$ and the error $e_1$ occurs in the motion vector $v_1$, the prediction unit 119 performs affine transformation on the block 123 in the reference image on the basis of the motion vectors $v_0 + e_0$ and the motion vector $v_1 + e_1$, thereby generating the predicted image of the PU 121. Note that, the block 123 is a block with the point A" apart from the vertex A by the motion vector $v_0 + e_0$ as the upper left vertex, and the point B" apart from the vertex B by the motion vector $v_1 + e_1$ as the upper right vertex.

An error of the motion vector v of each of the motion compensation blocks of the PU 121 is influenced by the error $e_0$ of the motion vector $v_0$ and the error $e_1$ of the motion vector $v_1$ used for calculation of the motion vector v. Furthermore, the influence is larger as a distance increases from the vertex A corresponding to the motion vector $v_0$ and the vertex B corresponding to the motion vector $v_1$.

However, in A of Fig. 11, since the vertex A and the vertex B are arranged in the x direction that is the long side direction of the PU 121, the distance between the vertex A and the vertex C facing the vertex A, and a distance between the vertex B and the vertex D facing the vertex B are small. Thus, a deviation between the block 122 and the block 123 becomes small as compared with a case where affine transformation is performed on the basis of the motion vectors of the vertices A and C arranged in the short side direction of the PU 121.

On the other hand, as illustrated in B of Fig. 11, in a case where a PU 131 to be predicted is a longitudinally elongated rectangle in which the size H in the y direction is large as compared with the size W in the x direction, the control unit 101 sets motion vector information of the motion vector $v_0$ of the upper left vertex A of the PU 131 and the motion vector $v_2$ of the lower left vertex C, on the basis of the RDO. In other words, on the basis of the RDO, the control unit 101 sets the motion vector information of the motion vectors $v_0$ and $v_2$ of the two vertices A and C arranged in the y direction that is a direction of a side having a larger size H out of the size W and the size H.

Thus, the prediction unit 119 performs affine transformation on the block 132 in the reference image at a time different from that of the PU 131 on the basis of the motion vector $v_0$ and the motion vector $v_2$ corresponding to the set two pieces of motion vector information, thereby generating a predicted image of the PU 131. Note that, the block 132 is a block with the point A' apart from the vertex A by the motion vector $v_0$ as the upper left vertex, and the point C' apart from the vertex C by the motion vector $v_2$ as the lower left vertex.

Here, as illustrated in B of Fig. 11, when the error $e_0$ occurs in the motion vector $v_0$ and the error $e_2$ occurs in the motion vector $v_2$, the prediction unit 119 performs affine transformation on the block 133 in the reference image on the basis of the motion vectors $v_0 + e_0$ and the motion vector $v_2 + e_2$, thereby generating the predicted image of the PU 131. Note that, the block 133 is a block with the point A" apart from the vertex A by the motion vector $v_0 + e_0$ as the upper left vertex, and the point C" apart from the vertex C by the motion vector $v_2 + e_2$ as the lower left vertex.

In this case, the motion vector $v(v_x, v_y)$ of each of the motion compensation blocks of the PU 131 is obtained by an expression (2) below, and the error of the motion vector v is influenced by the error $e_0$ of the motion vector $v_0$ and the error $e_2$ of the motion vector $v_2$ used for calculation of the motion vector v. Furthermore, the influence is larger as a distance increases from the vertex A corresponding to the motion vector $v_0$ and the vertex C corresponding to the motion vector $v_2$.

[Expression 2]

$$v_x = \frac{(v_{2y} - v_{0y})}{W} x + \frac{(v_{2x} - v_{0x})}{H} y + v_{0x}$$

$$\cdots (2)$$

$$v_y = -\frac{(v_{2x} - v_{0x})}{W} x + \frac{(v_{2y} + v_{0y})}{H} y + v_{0y}$$

However, in B of Fig. 11, since the vertex A and the vertex C are arranged in the y direction that is the long side direction of the PU 131, a distance between the vertex A and the vertex B facing the vertex A, and a distance between the vertex C and the vertex D facing the vertex C are small. Thus, a deviation between the block 132 and the block 133 becomes small as compared with a case where affine transformation is performed on the basis of the motion vectors of the vertices A and B arranged in the short side direction of the PU 131.

Note that, in a case where no error occurs in the motion vectors $v_0$ to $v_2$, a predicted image generated by affine transformation based on the motion vector $v_0$ and the motion vector $v_1$ and a predicted image generated by affine transformation based on the motion vector $v_0$ and the motion vector $v_2$ are the same as each other.

(Description of adjacent vector)

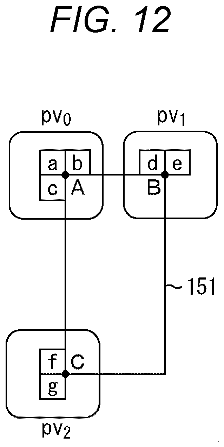

Fig. 12 is a diagram describing adjacent vectors as candidates for prediction vectors.

The prediction unit 119 generates an adjacent vector to be a candidate for a prediction vector $pv_0$ of the motion vector $v_0$ of the upper left vertex A in the PU 151 to be predicted of Fig. 12 on the basis of a motion vector of a block a that is an encoded PU on the upper left of a PU 151 with the vertex A as a vertex, a block b that is an encoded PU on the upper side, or a block c that is an encoded PU on the left side.

Furthermore, the prediction unit 119 generates an adjacent vector to be a candidate for a prediction vector $pv_1$ of the motion vector $v_1$ of the upper right vertex B in the PU 151 on the basis of a block d that is an encoded PU on the upper side of the PU 151 with the vertex B as a vertex, or a block e that is an encoded PU on the upper right side.

The prediction unit 119 generates an adjacent vector to be a candidate for a prediction vector $pv_2$ of the motion vector $v_2$ of the vertex C on the basis of a block f that is an encoded PU on the left side of the PU 151 with the vertex C as a vertex, or a block g that is an encoded PU on the lower left side. Note that, the motion vectors of the blocks a to g each are one motion vector for the block held in the prediction unit 119.

As a result of the above, there are 12 (= $3 \times 2 \times 2$) combinations of candidates of motion vectors to be used for generation of the adjacent vectors to be candidates for the prediction vectors $pv_0$ to $pv_2$. The prediction unit 119 selects a combination in which a DV obtained by an expression (3) below becomes the smallest out of the 12 combinations of the candidates, as a combination of the motion vectors to be used for generation of the adjacent vectors to be the candidates for the prediction vectors $pv_0$ to $pv_2$.

[Expression 3]

$$DV = |(v_{1x}{}' - v_{0x}{}')H - (v_{2y}{}' - v_{0y}{}')W| + |(v_{1y}{}' - v_{0y}{}')H - (v_{2x}{}' - v_{0x}{}')W|$$

$$\cdots (3)$$

Note that, motion vectors in the x direction and y direction of any of the blocks a to c to be used for generation of the prediction vector $pv_0$ are represented by $v_{0x}{}'$ and $v_{0y}{}'$, respectively. Motion vectors in the x direction and y direction of any of the blocks d and e to be used for generation of the prediction vector $pv_1$ are represented by $v_{1x}{}'$ and $v_{1y}{}'$, respectively. Motion vectors in the x direction and y direction of any of the blocks f and g to be used for generation of the prediction vector $pv_2$ are $v_{2x}{}'$ and $v_{2y}{}'$, respectively.

According to the expression (3), the DV becomes small in a case where other than the skew that is impossible by the affine transformation based on the two motion vectors is performed by affine transformation based on the motion vectors $v_0{}'$ ($v_{0x}{}'$, $v_{0y}{}'$) to $v_2{}'$ ($v_{2x}{}'$, $v_{2y}{}'$).

(Description of encoding of Affine flag)

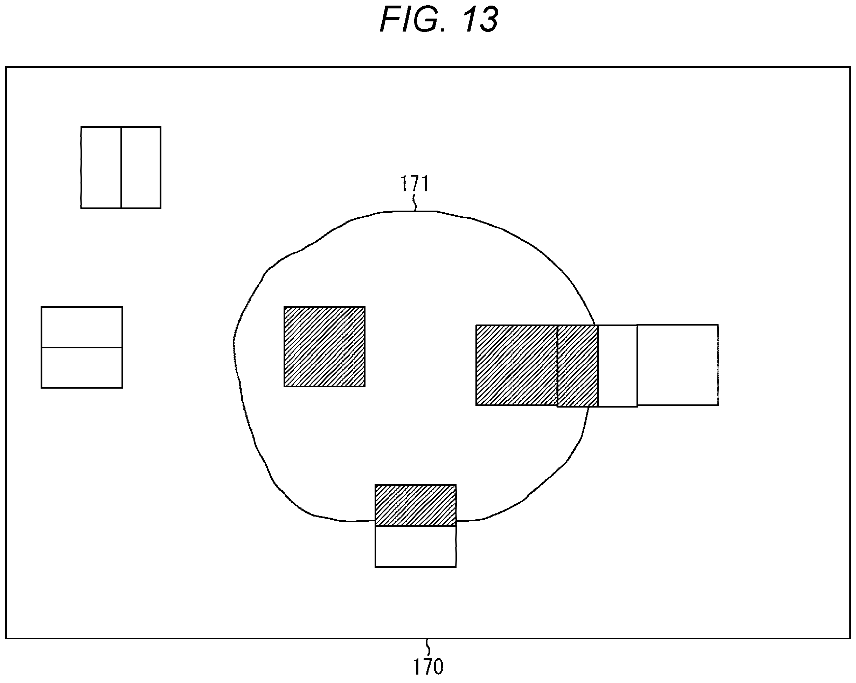

Fig. 13 is an example illustrating a region of a CU (PU) whose Affine flag is set to 1.

Note that, in Fig. 13, white rectangles in an image 170 each represent a CU (PU) whose Affine flag is set to 0, and hatched rectangles each represent a CU (PU) whose Affine flag is set to 1. Furthermore, in Fig. 13, only some of the CUs in the image 170 are illustrated for ease of viewing of the drawing.

As illustrated in Fig. 13, it is presumed that a region 171 of the CU (PU) whose Affine flag is set to 1 in the image 170 exists collectively.

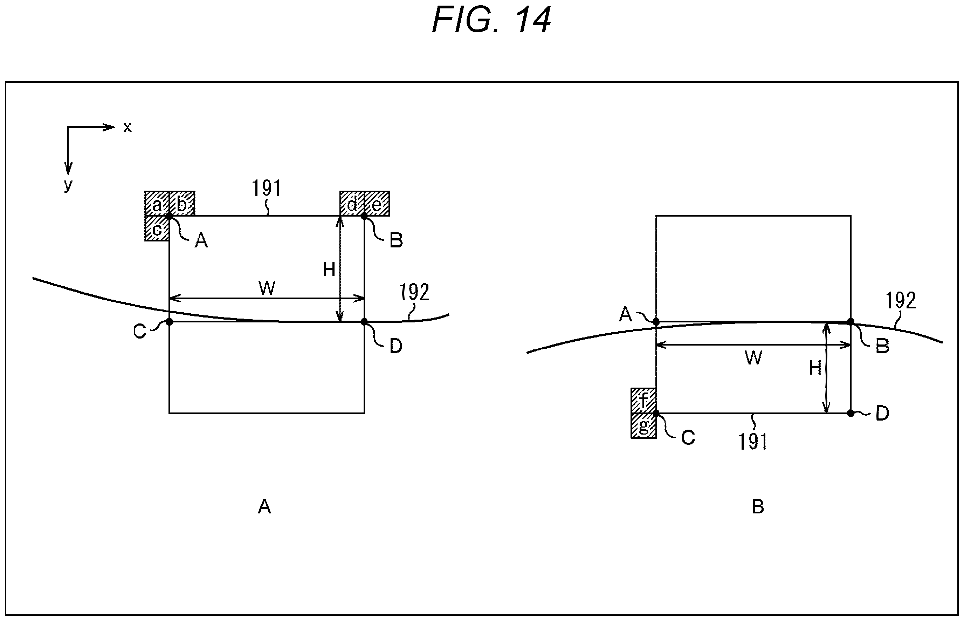

Thus, for example, as illustrated in A of Fig. 14, in a case where there is a laterally elongated PU 191 in which the size W is large as compared with the size H, when the Affine flags are set to 1 of the blocks a to e adjacent to the vertex A and the vertex B of the upper side in the x direction of the PU 191, there is a high possibility that the lower side of the PU 191 is a boundary 192 of the region 171. Thus, there is a high possibility that the Affine flag of PU 191 is set to 1.

Furthermore, as illustrated in B of Fig. 14, when the Affine flags are set to 1 of the blocks f and g adjacent to the vertex C of the lower side in the x direction of the PU 191, there is a high possibility that the upper side of the PU 191 is the boundary 192. Thus, there is a high possibility that the Affine flag of PU 191 is set to 1.

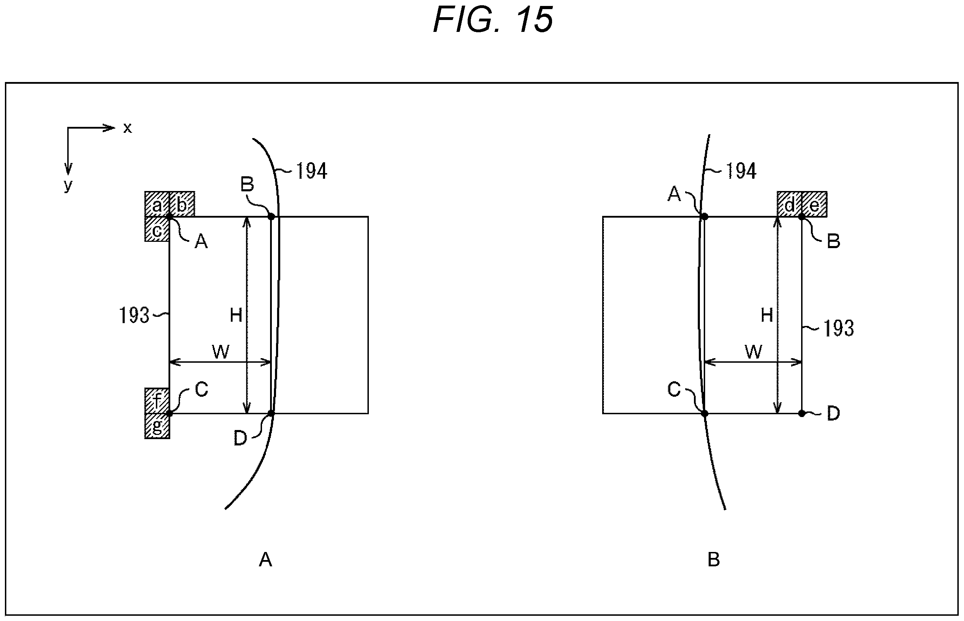

On the other hand, as illustrated in A of Fig. 15, in a case where there is a longitudinally elongated PU 193 in which the size H is large as compared with the size W, when the Affine flags are set to 1 of the blocks a to c, f, and g adjacent to the vertex A and the vertex C of the left side in the y direction of the PU 193, there is a high possibility that the right side of the PU 193 is a boundary 194 of the region 171. Thus, there is a high possibility that the Affine flag of the PU 193 is set to 1.

Furthermore, as illustrated in B of Fig. 15, when the Affine flags are set to 1 of the blocks d and e adjacent to the vertex B of the right side in the y direction of the PU 193, there is a high possibility that the left side of the PU 193 is the boundary 194. Thus, there is a high possibility that the Affine flag of the PU 193 is set to 1.

The encoding unit 114 therefore switches contexts of a probability model of CABAC of the Affine flag of the PU on the basis of whether or not the Affine flag is set to 1 of an adjacent PU adjacent to a vertex of a side in a direction of a side having a larger size out of the size W in the x direction and the size H in the y direction of the PU (CU).

Specifically, in a case where the Affine flag of the laterally elongated PU 191 is encoded with CABAC, when the Affine flags are set to 1 in equal to or greater than a predetermined number of blocks out of the blocks a to e, or the blocks f and g, the encoding unit 114 uses that there is a high possibility that the Affine flag is set to 1, as the context of the probability model.

On the other hand, when the Affine flags are set to 1 in less than the predetermined number of blocks out of the blocks a to e, or the blocks f and g, the encoding unit 114 uses that there is a low possibility that the Affine flag is set to 1, as the context of the probability model.

Furthermore, in a case where the Affine flag of the longitudinally elongated PU 193 is encoded with CABAC, when the Affine flags are set to 1 in equal to or greater than the predetermined number of blocks out of the blocks a to c, f, and g, or the blocks d and e, the encoding unit 114 uses that there is a high possibility that the Affine flag is set to 1, as the context of the probability model.

On the other hand, when the Affine flags are set to 1 in less than the predetermined number of blocks out of the blocks a to c, f, and g, or the blocks d and e, the encoding unit 114 uses that there is a low possibility that the Affine flag is set to 1, as the context of the probability model.

Moreover, in a case where the PU is a square, when the Affine flags are set to 1 in equal to or greater than the predetermined number of blocks out of the blocks a to e, the encoding unit 114 uses that there is a high possibility that the Affine flag is set to 1, as the context of the probability model.

On the other hand, when the Affine flags are set to 1 in less than the predetermined number of blocks out of the blocks a to e, the encoding unit 114 uses that there is a low possibility that the Affine flag is set to 1, as the context of the probability model.

Then, in a case where the Affine flag is encoded with CABAC by using that there is a high possibility that the Affine flag is set to 1, as the context of the probability model, the encoding unit 114 performs encoding by setting the probability model of CABAC so that a probability of being 1 becomes high. As a result, a code amount in a case where the Affine flag is set to 1 becomes small as compared with a code amount in a case where the Affine flag is set to 0.

Furthermore, in a case where the Affine flag is encoded by CABAC by using that there is a low possibility that the Affine flag is set to 1, as the context, the encoding unit 114 encodes the probability model of CABAC so that a probability of being 0 becomes high. As a result, the code amount in the case where the Affine flag is set to 0 becomes small as compared with the code amount in the case where the Affine flag is set to 1.

As a result, the encoding unit 114 can reduce the Affine flag's code amount that is the overhead, and improve the coding efficiency.

Note that, the contexts may be switched by the number of blocks in which the Affine flag is set to 1, instead of being switched depending on whether or not the number of blocks whose Affine flag is set to 1 is equal to or greater than a predetermined number. In this case, for example, the probability of being 1 in the probability model of CABAC is changed depending on the number of blocks whose Affine flag is set to 1.

Furthermore, the encoding unit 114 may switch codes (bit strings) to be assigned to the Affine flag, instead of switching the contexts of the probability model of CABAC on the basis of the Affine flags of the blocks a to g.

In this case, the encoding unit 114 sets a code length (bit length) of the code to be assigned to the Affine flag set to 1 to be short as compared with that to the Affine flag set to 0, instead of setting the probability model of CABAC so that the probability of being 1 becomes high. Furthermore, the encoding unit 114 sets the code length of the code to be assigned to the Affine flag set to 0 to be short as compared with that to the Affine flag set to 1, instead of setting the probability model of CABAC so that the probability of being 0 becomes high.

(Description of processing of image processing device)

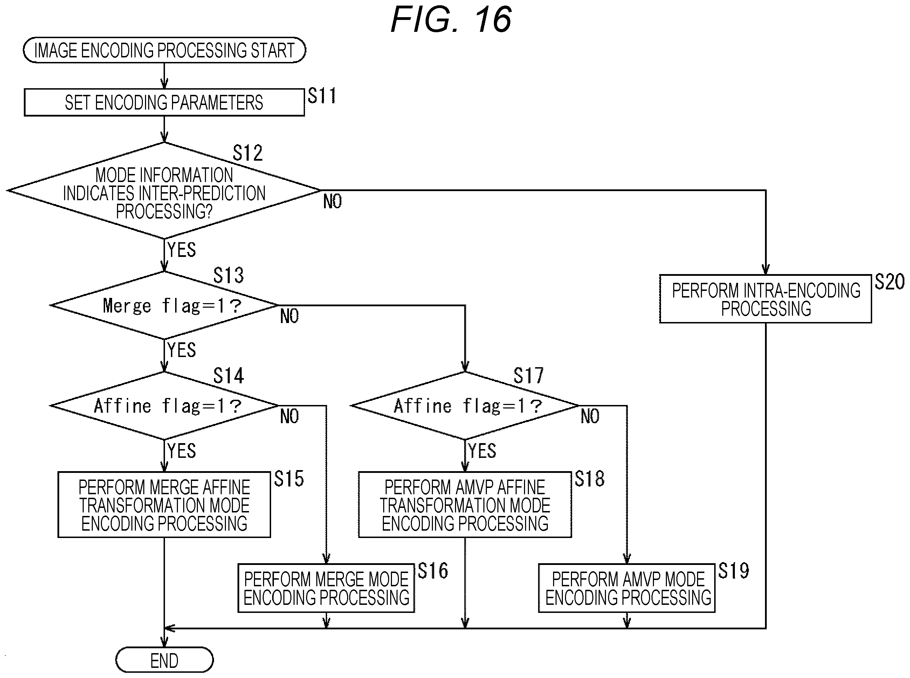

Fig. 16 is a flowchart describing image encoding processing in the image encoding device 100 of Fig. 10.

In step S11 of Fig. 16, the control unit 101 sets the encoding parameters (header information Hinfo, prediction information Pinfo, transformation information Tinfo, and the like) on the basis of the input from the outside, the RDO, and the like. The control unit 101 supplies the set encoding parameters to each block.

In step S12, the prediction unit 119 determines whether or not the mode information pred mode flag of the prediction information Pinfo indicates the inter-prediction processing. In a case where it is determined in step S12 that the inter-prediction processing is indicated, in step S13, the prediction unit 119 determines whether or not the Merge flag of the prediction information Pinfo is set to 1.

In a case where it is determined in step S13 that the Merge flag is set to 1, in step S14, the prediction unit 119 determines whether or not the Affine flag of the prediction information Pinfo is set to 1. In a case where it is determined in step S14 that the Affine flag is set to 1, the processing proceeds to step S15.

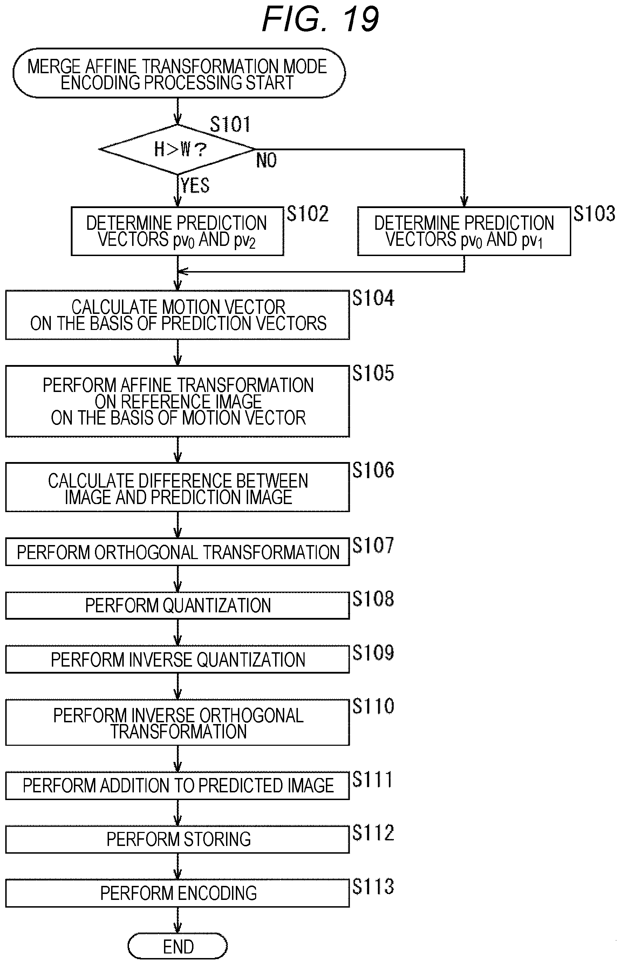

In step S15, the prediction unit 119 performs merge affine transformation mode encoding processing that encodes the image I to be encoded, by using the predicted image P generated by performing motion compensation in the affine transformation mode and performing the inter-prediction processing in the merge mode. Details of the merge affine transformation mode encoding processing will be described with reference to Fig. 19 as described later. After completion of the merge affine transformation mode encoding processing, the image encoding processing is completed.

On the other hand, in a case where it is determined in step S14 that the Affine flag is not set to 1, in other words, in a case where the Affine flag is set to 0, the processing proceeds to step S16.

In step S16, the prediction unit 119 performs merge mode encoding processing that encodes the image I to be encoded, by using the predicted image P generated by performing motion compensation in the translation mode and performing the inter-prediction processing in the merge mode. After completion of the merge mode encoding processing, the image encoding processing is completed.

Furthermore, in a case where it is determined in step S13 that the Merge flag is not set to 1, in other words, in a case where the Merge flag is set to 0, in step S17, the prediction unit 119 determines whether or not the Affine flag of the prediction information Pinfo is set to 1. In a case where it is determined in step S17 that the Affine flag is set to 1, the processing proceeds to step S18.

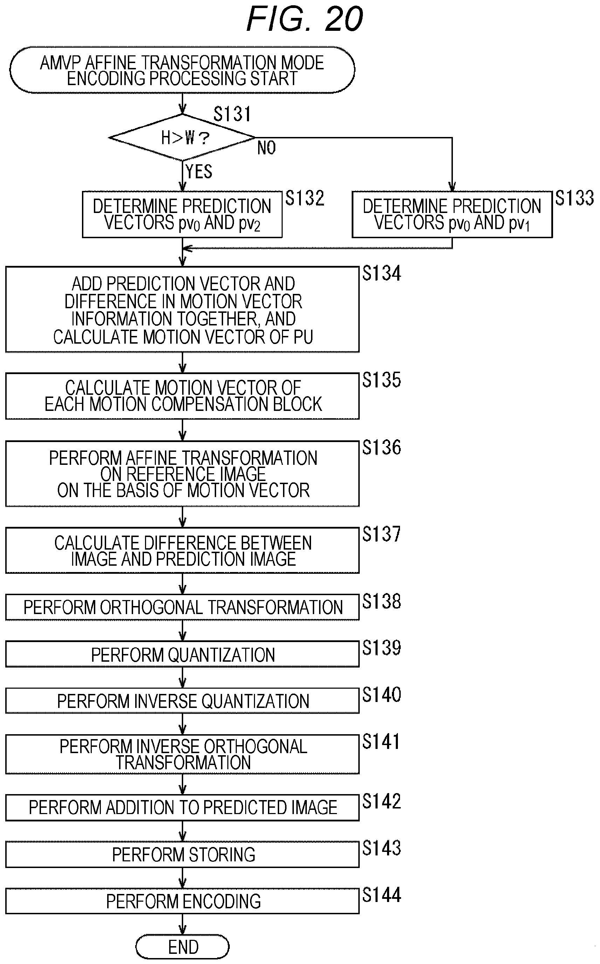

In step S18, the prediction unit 119 performs AMVP affine transformation mode encoding processing that encodes the image I to be encoded, by using the predicted image P generated by performing motion compensation in the affine transformation mode and performing the inter-prediction processing in the AMVP mode. Details of the AMVP affine transformation mode encoding processing will be described with reference to Fig. 20 as described later. After completion of the AMVP affine transformation mode encoding processing, the image encoding processing is completed.

On the other hand, in a case where it is determined in step S17 that the Affine flag is not set to 1, in other words, in a case where the Affine flag is set to 0, the processing proceeds to step S19.

In step S19, the prediction unit 119 performs AMVP mode encoding processing that encodes the image I to be encoded, by using the predicted image P generated by performing motion compensation in the translation mode and performing the inter-prediction processing in the AMVP mode. After completion of the AMVP mode encoding processing, the image encoding processing is completed.

Furthermore, in a case where it is determined in step S12 that the inter-prediction processing is not indicated, in other words, in a case where the mode information pred mode flag indicates the intra-prediction processing, the processing proceeds to step S20.

In step S20, the prediction unit 119 performs intra-encoding processing that encodes the image I to be encoded, by using the predicted image P generated by the intra-prediction processing. Then, the image encoding processing is completed.

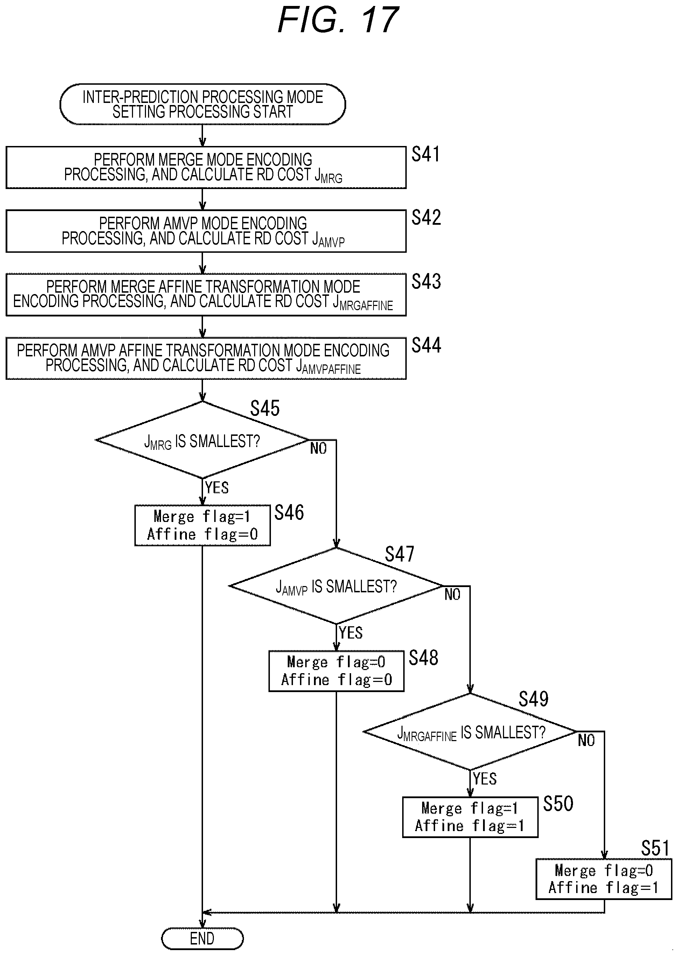

Fig. 17 is a flowchart describing a first example of inter-prediction processing mode setting processing that sets the Merge flag and the Affine flag, in the processing in step S11 of Fig. 16. The inter-prediction processing mode setting processing is performed on the PU (CU) basis, for example.

In step S41 of Fig. 17, the control unit 101 controls each block to perform the merge mode encoding processing for each prediction information Pinfo other than the Merge flag and Affine flag to be candidates, on the PU (CU) to be processed, and calculates an RD cost $J_{MRG}$. Note that, the calculation of the RD cost is performed on the basis of a generated bit amount (code amount) obtained as a result of the encoding, an error sum of squares (SSE) of the decoded image, and the like.

In step S42, the control unit 101 controls each block to perform the AMVP mode encoding processing for each prediction information Pinfo other than the Merge flag and Affine flag to be candidates, on the PU (CU) to be processed, and calculates an RD cost $J_{AMVP}$.

In step S43, the control unit 101 controls each block to perform the merge affine transformation mode encoding processing for each prediction information Pinfo other than the Merge flag and Affine flag to be candidates, on the PU (CU) to be processed, and calculates an RD cost $J_{MRGAFFINE}$.

In step S44, the control unit 101 controls each block to perform the AMVP affine transformation mode encoding processing for each prediction information Pinfo other than the Merge flag and Affine flag to be candidates, on the PU (CU) to be processed, and calculates an RD cost $J_{AMVPAFFINE}$.

In step S45, the control unit 101 determines whether or not the RD cost $J_{MRG}$ is the smallest among the RD costs $J_{MRG}$, $J_{AMVP}$, $J_{MRGAFFINE}$, and $J_{AMVPAFFINE}$.

In a case where it is determined in step S45 that the RD cost $J_{MRG}$ is the smallest, in step S46, the control unit 101 sets the Merge flag of the PU to be processed to 1, and sets the Affine flag to 0. Then, the inter-prediction processing mode setting processing is completed.

In a case where it is determined in step S45 that the RD cost $J_{MRG}$ is not the smallest, the processing proceeds to step S47. In step S47, the control unit 101 determines whether or not the RD cost $J_{AMVP}$ is the smallest among the RD costs $J_{MRG}$, $J_{AMVP}$, $J_{MRGAFFINE}$, and $J_{AMVPAFFINE}$.

In a case where it is determined in step S47 that the RD cost $J_{AMVP}$ is the smallest, in step S48, the control unit 101 sets the Merge flag and Affine flag of the PU to be processed to 0, and completes the inter-prediction processing mode setting processing.

On the other hand, in a case where it is determined in step S47 that the RD cost $J_{AMVP}$ is not the smallest, the processing proceeds to step S49. In step S49, the control unit 101 determines whether or not the RD cost $J_{MRGAFFINE}$ is the smallest among the RD costs $J_{MRG}$, $J_{AMVP}$, $J_{MRGAFFINE}$, and $J_{AMVPAFFINE}$.

In a case where it is determined in step S49 that the RD cost $J_{MRGAFFINE}$ is the smallest, in step S50, the control unit 101 sets the Merge flag and Affine flag of the PU to be processed to 1, and completes the inter-prediction processing mode setting processing.

On the other hand, in a case where it is determined in step S49 that the RD cost $J_{MRGAFFINE}$ is not the smallest, in other words, in a case where the RD cost $J_{AMVPAFFINE}$ is the smallest among the RD costs $J_{MRG}$, $J_{AMVP}$, $J_{MRGAFFINE}$, and $J_{AMVPAFFINE}$, the processing proceeds to step S51. In step S51, the control unit 101 sets the Merge flag of the PU to be processed to 0, and sets the Affine flag to 1. Then, the inter-prediction processing mode setting processing is completed.

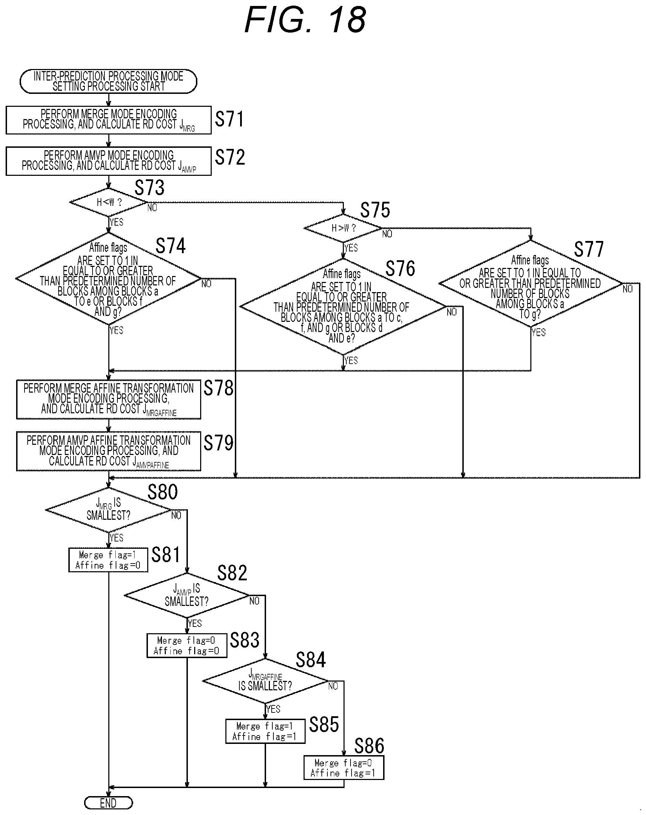

Fig. 18 is a flowchart describing a second example of the inter-prediction processing mode setting processing that sets the Merge flag and the Affine flag, in the processing in step S11 of Fig. 16. The inter-prediction processing mode setting processing is performed on the PU (CU) basis, for example.

Since the processing in steps S71 and S72 of Fig. 18 is similar to the processing in steps S41 and S42 of Fig. 17, the description will be omitted.

In step S73, the control unit 101 determines whether or not the size H in the y direction of the PU to be processed is small as compared with the size W in the x direction. In a case where it is determined in step S73 that the size H is small as compared with the size W, in other words, in a case where the shape of the PU to be processed is a laterally elongated rectangle, the processing proceeds to step S74.

In step S74, the control unit 101 determines whether or not the Affine flags are set to 1 in equal to or greater than the predetermined number of blocks out of the blocks a to e, or the blocks f and g adjacent to the PU to be processed.

In a case where it is determined in step S74 that the Affine flags are set to 1 in equal to or greater than the predetermined number of blocks out of the blocks a to e, or the blocks f and g, the control unit 101 determines that there is a high possibility that the Affine flag of the PU to be processed is set to 1, and advances the processing to step S78.

On the other hand, in a case where it is determined in step S73 that the size H is not small as compared with the size W, the processing proceeds to step S75. In step S75, the control unit 101 determines whether or not the size H in the y direction of the PU to be processed is large as compared with the size W in the x direction. In a case where it is determined in step S75 that the size H is large as compared with the size W, in other words, in a case where the shape of the PU to be processed is a longitudinally elongated rectangle, the processing proceeds to step S76.

In step S76, the control unit 101 determines whether or not the Affine flags are set to 1 in equal to or greater than the predetermined number of blocks out of the blocks a to c, f, and g, or the blocks d and e adjacent to the PU to be processed.

In a case where it is determined in step S76 that the Affine flags are set to 1 in equal to or greater than the predetermined number of blocks out of the blocks a to c, f, and g, or the blocks d and e, the control unit 101 determines that there is a high possibility that the Affine flag of the PU to be processed is set to 1. Then, the control unit 101 advances the processing to step S78.

On the other hand, in a case where it is determined in step S75 that the size H is not large as compared with the size W, in other words, in a case where the size H and the size W are the same as each other, the processing proceeds to step S77. In step S77, the control unit 101 determines whether or not the Affine flags are set to 1 in equal to or greater than the predetermined number of blocks out of the blocks a to g adjacent to the PU to be processed.

In a case where it is determined in step S77 that the Affine flags are set to 1 in equal to or greater than the predetermined number of blocks out of the blocks a to g, the control unit 101 determines that there is a high possibility that the Affine flag of the PU to be processed is set to 1, and advances the processing to step S78.

Since the processing in steps S78 and S79 is similar to the processing in steps S43 and S44 of Fig. 17, the description will be omitted. After the processing of step S79, the processing proceeds to step S80.

In a case where it is determined in step S74 that the Affine flags are set to 1 in less than the predetermined number of blocks out of the blocks a to e, or the blocks f and g, the control unit 101 determines that there is a low possibility that the Affine flag of the PU to be processed is set to 1. Then, the control unit 101 skips steps S78 and S79, and advances the processing to step S80.

Furthermore, in a case where it is determined in step S76 that the Affine flags are set to 1 in less than the predetermined number of blocks out of the blocks a to c, f, and g, or the blocks d and e, the control unit 101 determines that there is a low possibility that the Affine flag of the PU to be processed is set to 1. Then, the control unit 101 skips steps S78 and S79, and advances the processing to step S80.

Moreover, in a case where it is determined in step S77 that the Affine flags are set to 1 in less than the predetermined number of blocks out of the blocks a to g, the control unit 101 determines that there is a low possibility that the Affine flag of the PU to be processed is set to 1. Then, the control unit 101 skips steps S78 and S79, and advances the processing to step S80.

In step S80, the control unit 101 determines whether or not the RD cost $J_{MRG}$ is the smallest among the calculated RD costs $J_{MRG}$, $J_{AMVP}$, $J_{MRGAFFINE}$, and $J_{AMVPAFFINE}$, or the RD costs $J_{MRG}$ and $J_{AMVP}$.

In a case where it is determined in step S80 that the RD cost $J_{MRG}$ is the smallest, in step S81, the control unit 101 sets the Merge flag of the PU to be processed to 1, and sets the Affine flag to 0. Then, the inter-prediction processing mode setting processing is completed.

In a case where it is determined in step S80 that the RD cost $J_{MRG}$ is not the smallest, the processing proceeds to step S82. In step S82, the control unit 101 determines whether or not it is the smallest among the calculated RD costs $J_{MRG}$, $J_{AMVP}$, $J_{MRGAFFINE}$, and $J_{AMVPAFFINE}$, or the RD costs $J_{MRG}$ and $J_{AMVP}$.

In a case where it is determined in step S82 that the RD cost $J_{AMVP}$ is the smallest, in step S83, the control unit 101 sets the Merge flag and Affine flag of the PU to be processed to 0, and completes the inter-prediction processing mode setting processing.

On the other hand, in a case where it is determined in step S82 that the RD cost $J_{AMVP}$ is not the smallest, the processing proceeds to step S84. In step S84, the control unit 101 determines whether or not the RD cost $J_{MRGAFFINE}$ is the smallest among the calculated RD costs $J_{MRG}$, $J_{AMVP}$, $J_{MRGAFFINE}$, and $J_{AMVPAFFINE}$, or the RD costs $J_{MRG}$ and $J_{AMVP}$.

In a case where it is determined in step S84 that the RD cost $J_{MRGAFFINE}$ is the smallest, in step S85, the control unit 101 sets the Merge flag and Affine flag of the PU to be processed to 1, and completes the inter-prediction processing mode setting processing.

On the other hand, in a case where it is determined in step S84 that the RD cost $J_{MRGAFFINE}$ is not the smallest, in other words, the RD cost $J_{AMVPAFFINE}$ is the smallest among the calculated RD costs $J_{MRG}$, $J_{AMVP}$, $J_{MRGAFFINE}$, and $J_{AMVPAFFINE}$, or the RD costs $J_{MRG}$ and $J_{AMVP}$, the processing proceeds to step S86. In step S86, the control unit 101 sets the Merge flag of the PU to be processed to 0, and sets the Affine flag to 1. Then, the inter-prediction processing mode setting processing is completed.

As described above, in the inter-prediction processing mode setting processing of Fig. 18, it is presumed that the region of the PU whose Affine flag is set to 1 exists collectively in the image as described with reference to Fig. 13, and the processing of steps S78 and S79 is performed only in a case where the Affine flags are set to 1 in equal to or greater than the predetermined number of blocks adjacent to the PU to be processed. Thus, a calculation amount can be reduced as compared with the inter-prediction processing mode setting processing of Fig. 17.

Fig. 19 is a flowchart describing the merge affine transformation mode encoding processing. The merge affine transformation mode encoding processing is performed on the CU (PU) basis, for example.

In step S101 of Fig. 19, the prediction unit 119 determines whether or not the size H of the PU to be processed is large as compared with the size W. In a case where it is determined in step S101 that the size H of the PU to be processed is large as compared with the size W, in other words, in a case where the shape of the PU to be processed is a longitudinally elongated rectangle, the processing proceeds to step S102.

In step S102, the prediction unit 119 determines the prediction vector $pv_0$ and the prediction vector $pv_2$ on the basis of the prediction vector information. Specifically, in a case where the prediction vector information is information that specifies the adjacent vector, the prediction unit 119 calculates the DVs of all the combinations of the motion vectors to be used for generation of the adjacent vectors to be the prediction vectors $pv_0$ to $pv_2$ on the basis of the held motion vectors of the blocks a to g. Then, the prediction unit 119 determines the prediction vector $pv_0$ and the prediction vector $pv_2$ by using a combination of motion vectors in which the DV becomes the smallest. Then, the processing proceeds to step S104.

On the other hand, in a case where it is determined in step S101 that the size H of the PU to be processed is not large as compared with the size W, in other words, in a case where the shape of the PU to be processed is a square or a laterally elongated rectangle, the processing proceeds to step S103.

In step S103, the prediction unit 119 determines the prediction vector $pv_0$ and the prediction vector $pv_1$ on the basis of the prediction vector information. Specifically, in a case where the prediction vector information is information that specifies the adjacent vector, the prediction unit 119 calculates the DVs of all the combinations of the motion vectors to be used for generation of the adjacent vectors to be the prediction vectors $pv_0$ to $pv_2$ on the basis of the held motion vectors of the blocks a to g. Then, the prediction unit 119 determines the prediction vector $pv_0$ and the prediction vector $pv_1$ by using a combination of motion vectors in which the DV becomes the smallest. Then, the processing proceeds to step S104.

Note that, in a case where the size H is the same as the size W, in other words, in a case where the shape of the PU to be processed is a square, the prediction unit 119 may perform the processing of step S102 instead of the processing of step S103.

In step S104, the prediction unit 119 calculates the motion vector v of each of the motion compensation blocks by the above-described expression (1) or (2) by using each of the prediction vectors determined in step S102 or S103 as the motion vector of the PU to be processed.

Specifically, in a case where the prediction vector $pv_0$ and the prediction vector $pv_2$ are determined in step S102, the prediction unit 119 uses the prediction vector $pv_0$ as the motion vector $v_0$ and the prediction vector $pv_2$ as the motion vector $v_2$, and calculates the vector v by the expression (2).

On the other hand, in a case where the prediction vector $pv_0$ and the prediction vector $pv_1$ are determined in

step S103, the prediction unit 119 uses the prediction vector $pv_0$ as the motion vector $v_0$ and the prediction vector $pv_1$ as the motion vector $v_1$, and calculates the motion vector v by the expression (1).

In step S105, the prediction unit 119 translates a block of the reference image specified by the reference image specifying information stored in the frame memory 118 on the basis of the motion vector v for each of the motion compensation blocks, thereby performing affine transformation on the reference image. The prediction unit 119 supplies the reference image subjected to motion compensation by affine transformation as the predicted image P to the calculation unit 111 and the calculation unit 117.

In step S106, the calculation unit 111 calculates a difference between the image I and the predicted image P as the prediction residual D, and supplies the difference to the transformation unit 112. An amount of data is reduced of the prediction residual D obtained in this way as compared with the original image I. Thus, the amount of data can be compressed as compared with a case where the image I is directly encoded.

In step S107, the transformation unit 112 performs orthogonal transformation and the like on the prediction residual D supplied from the calculation unit 111 on the basis of the transformation information Tinfo supplied from the control unit 101, and derives the transformation coefficient Coeff. The transformation unit 112 supplies the transformation coefficient Coeff to the quantization unit 113.

In step S108, the quantization unit 113 scales (quantizes) the transformation coefficient Coeff supplied from the transformation unit 112 on the basis of the transformation information Tinfo supplied from the control unit 101, and derives the quantization transformation coefficient level level. The quantization unit 113 supplies the quantization transformation coefficient level level to the encoding unit 114 and the inverse quantization unit 115.

In step S109, on the basis of the transformation information Tinfo supplied from the control unit 101, the inverse quantization unit 115 inversely quantizes the quantization transformation coefficient level level supplied from the quantization unit 113, with a quantization characteristic corresponding to a characteristic of the quantization in step S108. The inverse quantization unit 115 supplies the transformation coefficient Coeff_IQ resultantly obtained to the inverse transformation unit 116.

In step S110, on the basis of the transformation information Tinfo supplied from the control unit 101, the inverse transformation unit 116 performs inverse orthogonal transformation or the like with a method corresponding to the orthogonal transformation or the like in step S107 on the transformation coefficient Coeff_IQ supplied from the inverse quantization unit 115, and derives the prediction residual D'.

In step S111, the calculation unit 117 adds the prediction residual D' derived by the processing in step S110 to the predicted image P supplied from the prediction unit 119, thereby generating the local decoded image Rec.

In step S112, the frame memory 118 reconstructs the decoded image on the picture basis by using the local decoded image Rec obtained by the processing in step S111, and stores the decoded image in the buffer in the frame memory 118.

In step S113, the encoding unit 114 encodes the encoding parameters set by the processing in step S11 of Fig. 16 and the quantization transformation coefficient level level obtained by the processing in step S108 with the predetermined method. The encoding unit 114 multiplexes the coded data resultantly obtained, and outputs the data as the encoded stream to the outside of the image encoding device 100. The encoded stream is transmitted to a decoding side via a transmission line or a recording medium, for example.

Upon completion of the processing in step S113, the merge affine transformation mode encoding processing is completed.

Fig. 20 is a flowchart describing the AMVP affine transformation mode encoding processing. The AMVP affine transformation mode encoding processing is performed, for example, on the CU (PU) basis.

Since steps S131 to S133 of Fig. 20 are similar to the processing in steps S101 to S103 of Fig. 19, the description will be omitted.

In step S134, the prediction unit 119 adds each of the prediction vectors determined in step S132 or S133 and the difference in the motion vector information corresponding to the prediction vector together, and calculates the motion vector of the PU to be processed.

Specifically, in a case where the prediction vector $pv_0$ and the prediction vector $pv_2$ are determined in step S132, the prediction unit 119 adds the prediction vector $pv_0$, and a difference $dv_0$ between the prediction vector $pv_0$ in the motion vector information and the motion vector of the PU to be processed together. Then, the prediction unit 119 sets the motion vector obtained as a result of the addition as the motion vector $v_0$ of the PU to be processed. Furthermore, the prediction unit 119 adds the prediction vector $pv_2$, and difference $dv_2$ between the prediction vector $pv_2$ in the motion vector information and the motion vector of the PU to be processed together, and sets the motion vector resultantly obtained as the motion vector $v_2$ of the PU to be processed.

On the other hand, in a case where the prediction vector $pv_0$ and the prediction vector $pv_1$ are determined in step S133, the prediction unit 119 adds the prediction vector $pv_0$ and the difference $dv_0$ together, and sets the motion vector resultantly obtained as the motion vector $v_0$ of the PU to be processed. Furthermore, the prediction unit 119 adds the prediction vector $pv_1$, and a difference $dv_1$ between the prediction vector $pv_1$ in the motion vector information and the motion vector of the PU to be processed together, and sets the motion vector resultantly obtained as the motion vector $v_1$ of the PU to be processed.

In step S135, the prediction unit 119 calculates the motion vector v of each of the motion compensation blocks by the above-described expression (1) or (2) by using the motion vector of the PU to be processed calculated in step S134.

Specifically, in a case where the motion vector $v_0$ and the motion vector $v_2$ are determined in step S134, the prediction unit 119 calculates the motion vector v by the expression (2) by using the motion vector $v_0$ and the motion vector $v_2$.

On the other hand, in a case where the motion vector $v_0$ and the motion vector $v_1$ are determined in step S134, the prediction unit 119 calculates the motion vector v by the expression (1) by using the motion vector $v_0$ and the motion vector $v_1$.

Since the processing in steps S136 to S144 is similar to the processing in steps S105 to S113 of Fig. 19, the description will be omitted.

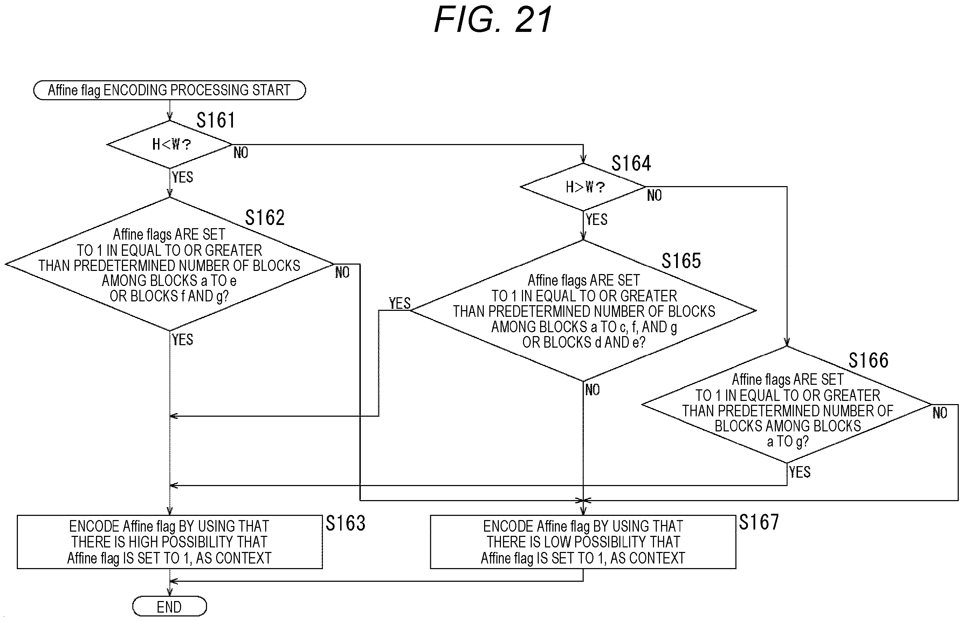

Fig. 21 is a flowchart describing Affine flag encoding processing that encodes the Affine flag in the processing in step S113 of Fig. 19 and step S144 of Fig. 20.

Since the processing in steps S161 and S162 of Fig. 21 is similar to the processing in steps S73 and S74 of Fig. 18 except that the processing is performed by the encoding unit 114 instead of the prediction unit 119, the description will be omitted.

In a case where it is determined in step S162 that the Affine flags are set to 1 in equal to or greater than the predetermined number of blocks out of the blocks a to e, or the blocks f and g, the encoding unit 114 determines that there is a high possibility that the Affine flag of the PU to be processed is set to 1. Then, the encoding unit 114 advances the processing to step S163.

In step S163, the encoding unit 114 encodes the Affine flag with CABAC by using that there is a high possibility that the Affine flag is set to 1, as the context of the probability model, and completes the Affine flag encoding processing.

On the other hand, in a case where it is determined in step S161 that the size H is not smaller than the size W, the processing proceeds to step S164. Since the processing of steps S164 to S166 is similar to steps S75 to S77 of Fig. 18 except that the processing is performed by the encoding unit 114 instead of the control unit 101, the description will be omitted.

In a case where it is determined in step S165 that the Affine flags are set to 1 in equal to or greater than the predetermined number of blocks out of the blocks a to c, f, and g, or the blocks d and e, the encoding unit 114 determines that there is a high possibility that the Affine flag of the PU to be processed is set to 1. Then, the encoding unit 114 advances the processing to step S163.

Furthermore, in a case where it is determined in step S166 that the Affine flags are set to 1 in equal to or greater than the predetermined number of blocks out of the blocks a to g, the encoding unit 114 determines that there is a high possibility that the Affine flag of the PU to be processed is set to 1. Then, the encoding unit 114 advances the processing to step S163.

On the other hand, in a case where it is determined in step S162 that the Affine flags are set to 1 in less than the predetermined number of blocks out of the blocks a to e, or the blocks f and g, the encoding unit 114 determines that there is a low possibility that the Affine flag of the PU to be processed is set to 1. Then, the encoding unit 114 advances the processing to step S167.

Furthermore, in a case where it is determined in step S165 that the Affine flags are set to 1 in less than the predetermined number of blocks out of the blocks a to c, f and g, or blocks d and e, the encoding unit 114 determines that there is a low possibility that the Affine flag of the PU to be processed is set to 1. Then, the encoding unit 114 advances the processing to step S167.

Moreover, in a case where it is determined in step S166 that the Affine flags are set to 1 in less than the predetermined number of blocks out of the blocks a to g, the encoding unit 114 determines that there is a low possibility that the Affine flag of the PU to be processed is set to 1. Then, the encoding unit 114 advances the processing to step S167.

In step S167, the encoding unit 114 encodes the Affine flag with CABAC by using that there is a low possibility that the Affine flag is set to 1, as the context, and completes the Affine flag encoding processing.

As described above, in a case where the inter-prediction processing by affine transformation is performed, the image encoding device 100 generates the predicted image P of the PU on the basis of two motion vectors of vertices arranged in a direction of the side having a larger size out of the size W in the x direction and the size H in the y direction of the PU. Thus, the influence on the accuracy of the predicted image P can be suppressed of the error generated in the motion vector of the vertex of the rectangular PU.

As a result, the predicted image P of a rectangular PU can be generated with high accuracy. Thus, in a case where the quantization transformation coefficient level level is not zero, an amount of information of the quantization transformation coefficient level level can be reduced, and the coding efficiency can be improved. Furthermore, in a case where the quantization transformation coefficient level level is zero, the image quality of the decoded image can be improved.

Furthermore, since the image encoding device 100 performs affine transformation on the basis of two motion vectors, the overhead can be reduced and the coding efficiency can be improved as compared with a case where affine transformation is performed on the basis of three motion vectors.

(Configuration example of image decoding device)

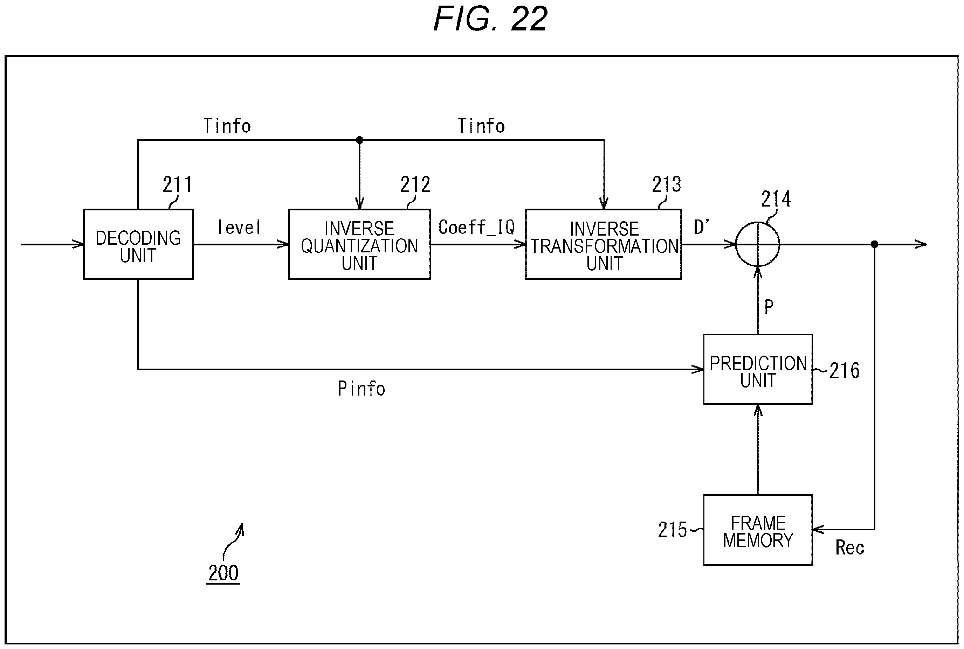

Fig. 22 is a block diagram illustrating a configuration example of an embodiment of the image decoding device as the image processing device to which the present technology is applied that decodes the encoded stream generated by the image encoding device 100 of Fig. 10. An image decoding device 200 of Fig. 22 decodes the encoded stream generated by the image encoding device 100 by a decoding method corresponding to an encoding method in the image encoding device 100. For example, the image decoding device 200 implements technology devised for HEVC and technology devised by the JVET.

Note that, in Fig. 22, main processing parts, data flows, and the like are illustrated, and the ones illustrated in Fig. 22 are not necessarily all. That is, in the image decoding device 200, there may be a processing part not illustrated as a block in Fig. 22, or a processing or data flow not illustrated as an arrow or the like in Fig. 22.

The image decoding device 200 of Fig. 22 includes a decoding unit 211, an inverse quantization unit 212, an inverse transformation unit 213, a calculation unit 214, a frame memory 215, and a prediction unit 216. The image encoding device 100 decodes the encoded stream generated by the image encoding device 100 for each CU.

Specifically, the decoding unit 211 of the image decoding device 200 decodes the encoded stream generated by the image encoding device 100 with a predetermined decoding method corresponding to an encoding method in the encoding unit 114. For example, the decoding unit 211 decodes the encoding parameters (header information Hinfo, prediction information Pinfo, transformation information Tinfo, and the like) and the quantization transformation coefficient level level from a bit string of the encoded stream along the definition in the syntax table. The decoding unit 211 splits an LCU on the basis of the split flag included in the encoding parameters, and sequentially sets a CU corresponding to each quantization transformation coefficient level level as a CU (PU, TU) to be decoded.

The decoding unit 211 supplies the encoding parameters to each block. For example, the decoding unit 211 supplies the prediction information Pinfo to the prediction unit 216, supplies the transformation information Tinfo to the inverse quantization unit 212 and the inverse transformation unit 213, and supplies the header information Hinfo to each block. Furthermore, the decoding unit 211 supplies the quantization transformation coefficient level level to the inverse quantization unit 212.

On the basis of the transformation information Tinfo supplied from the decoding unit 211, the inverse quantization unit 212 scales (inversely quantizes) the value of the quantization transformation coefficient level level supplied from the decoding unit 211, and derives the transformation coefficient Coeff_IQ. The inverse quantization is inverse processing of the quantization performed by the quantization unit 113 (Fig. 10) of the image encoding device 100. Note that, the inverse quantization unit 115 (Fig. 10) performs inverse quantization similar to that by the inverse quantization unit 212. The inverse quantization unit 212 supplies the obtained transformation coefficient Coeff_IQ to the inverse transformation unit 213.

The inverse transformation unit 213 performs inverse orthogonal transformation or the like on the transformation coefficient Coeff_IQ supplied from the inverse quantization unit 212 on the basis of the transformation information Tinfo and the like supplied from the decoding unit 211, and derives the prediction residual D'. The inverse orthogonal transformation is inverse processing of the orthogonal transformation performed by the transformation unit 112 (Fig. 10) of the image encoding device 100. Note that, the inverse transformation unit 116 performs inverse orthogonal transformation similar to that by the inverse transformation unit 213. The inverse transformation unit 213 supplies the obtained prediction residual D' to the calculation unit 214.

The calculation unit 214 adds the prediction residual D' supplied from the inverse transformation unit 213 and the predicted image P corresponding to the prediction residual D' together, to derive the local decoded image Rec. The calculation unit 214 reconstructs the decoded image for each picture by using the obtained local decoded image Rec, and outputs the obtained decoded image to the outside of the image decoding device 200. Furthermore, the calculation unit 214 supplies the local decoded image Rec also to the frame memory 215.

The frame memory 215 reconstructs the decoded image for each picture by using the local decoded image Rec supplied from the calculation unit 214, and stores the decoded image in a buffer in the frame memory 215. The frame memory 215 reads the decoded image specified by the prediction unit 216 from the buffer as a reference image, and supplies the image to the prediction unit 216. Furthermore, the frame memory 215 may store the header information Hinfo, the prediction information Pinfo, the transformation information Tinfo, and the like related to generation of the decoded image in the buffer in the frame memory 215.

On the basis of the mode information pred_mode_flag of the prediction information Pinfo, the prediction unit 216 acquires, as a reference image, a decoded image at the same time as that of the CU to be encoded stored in the frame memory 215. Then, using the reference image, the prediction unit 216 performs, on the PU to be encoded, the intra-prediction processing in the intra-prediction mode indicated by the intra-prediction mode information.

Furthermore, on the basis of the mode information pred mode flag of the prediction information Pinfo and the reference image specifying information, the prediction unit 216 acquires, as a reference image, the decoded image at a time different from that of the CU to be encoded stored in the frame memory 215. Similarly to the prediction unit 119 of Fig. 10, on the basis of the Merge flag, the Affine flag, and the motion vector information, the prediction unit 216 performs, on the reference image, motion compensation in the translation mode or the affine transformation mode, and performs the inter-prediction processing in the merge mode or the AMVP mode. The prediction unit 216 supplies the predicted image P generated as a result of the intra-prediction processing or the inter-prediction processing to the calculation unit 214.

(Processing of image decoding device)

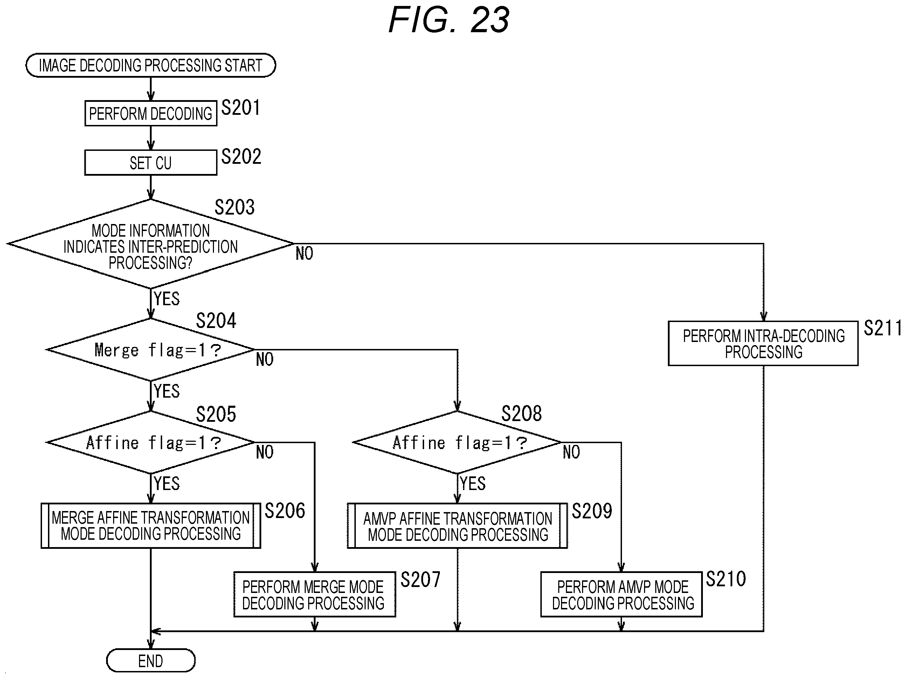

Fig. 23 is a flowchart describing image decoding processing in the image decoding device 200 of Fig. 22.

In step S201, the decoding unit 211 decodes the encoded stream supplied to the image decoding device 200, and obtains the encoding parameters and the quantization transformation coefficient level level. The decoding unit 211 supplies the encoding parameters to each block. Furthermore, the decoding unit 211 supplies the quantization transformation coefficient level level to the inverse quantization unit 212.

In step S202, the decoding unit 211 splits the LCU on the basis of the split flag included in the encoding parameters, and sets the CU corresponding to each quantization transformation coefficient level level as the CU (PU, TU) to be decoded. The processing in steps S203 to S211 as described later is performed for each CU (PU, TU) to be decoded.

Since the processing of steps S203 to S205 is similar to the processing of steps S12 to S14 of Fig. 16 except that the processing is performed by the prediction unit 216 instead of the prediction unit 119, the description will be omitted.

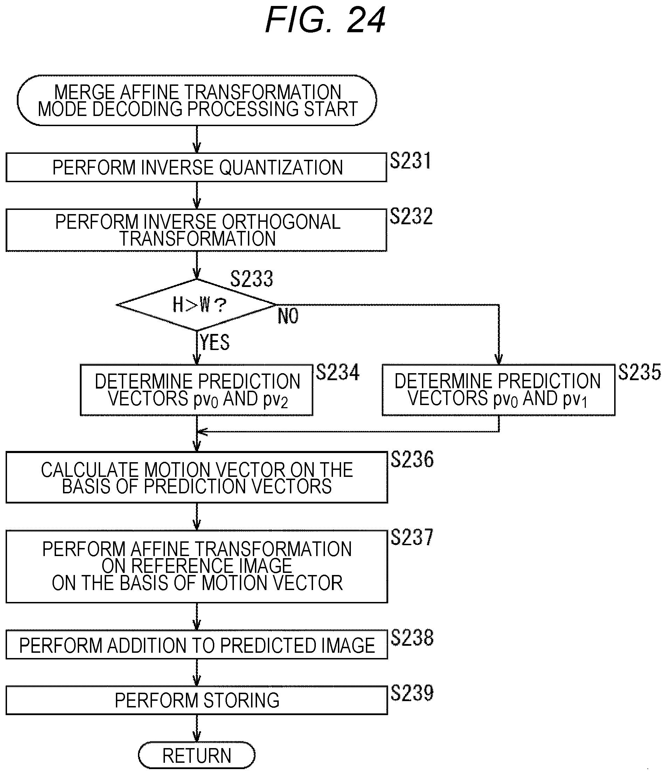

In a case where it is determined in step S205 that the Affine flag is set to 1, the processing proceeds to step S206. In step S206, the prediction unit 216 performs merge affine transformation mode decoding processing that decodes an image to be decoded by using the predicted image P generated by performing motion compensation in the affine transformation mode and performing the inter-prediction processing in the merge mode. Details of the merge affine transformation mode decoding processing will be described with reference to Fig. 24 as described later. After completion of the merge affine transformation mode decoding processing, the image decoding processing is completed.

On the other hand, in a case where it is determined in step S205 that the Affine flag is not set to 1, in other words, in a case where the Affine flag is set to 0, the processing proceeds to step S207. In step S207, the prediction unit 216 performs merge mode decoding processing that decodes an image to be decoded by using the predicted image P generated by performing motion compensation in the translation mode and performing the inter-prediction processing in the merge mode. After completion of the merge mode decoding processing, the image decoding processing is completed.

Furthermore, in a case where it is determined in step S204 that the Merge flag is not set to 1, in other words, in a case where the Merge flag is set to 0, in step S208, the prediction unit 216 determines whether or not the Affine flag of the prediction information Pinfo is set to 1. In a case where it is determined in step S208 that the Affine flag is set to 1, the processing proceeds to step S209.

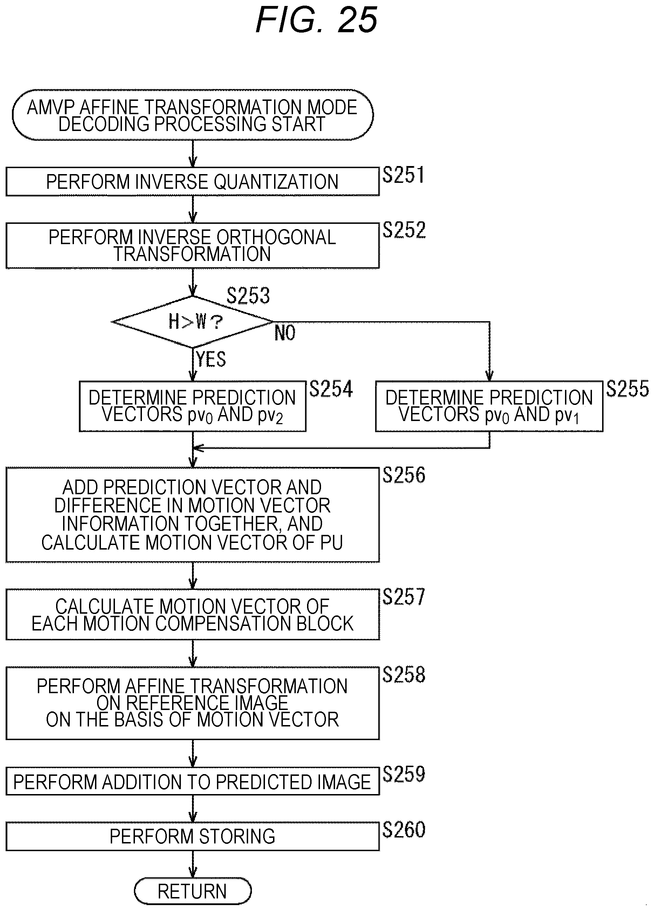

In step S209, the prediction unit 216 performs AMVP affine transformation mode decoding processing that decodes an image to be decoded by using the predicted image P generated by performing motion compensation in the affine transformation mode and performing the inter-prediction processing in the AMVP mode. Details of the AMVP affine transformation mode decoding processing will be described with reference to Fig. 25 as described later. After completion of the AMVP affine transformation mode decoding processing, the image decoding processing is completed.

On the other hand, in a case where it is determined in step S208 that the Affine flag is not set to 1, in other words, in a case where the Affine flag is set to 0, the processing proceeds to step S210.

In step S210, the prediction unit 216 performs AMVP mode decoding processing that decodes an image to be decoded by using the predicted image P generated by performing motion compensation in the translation mode and performing the inter-prediction processing in the AMVP mode. After completion of the AMVP mode decoding processing, the image decoding processing is completed.

Furthermore, in a case where it is determined in step S203 that the inter-prediction processing is not indicated, in other words, in a case where the mode information pred_mode_flag indicates the intra-prediction processing, the processing proceeds to step S211.

In step S211, the prediction unit 216 performs intra-decoding processing that decodes an image to be decoded by using the predicted image P generated by the intra-prediction processing. Then, the image decoding processing is completed.

Fig. 24 is a flowchart describing the merge affine transformation mode decoding processing in step S206 of Fig. 23.

In step S231, the inverse quantization unit 212 inversely quantizes the quantization transformation coefficient level level obtained by the processing in step S201 of Fig. 23 to derive the transformation coefficient Coeff_IQ. The inverse quantization is inverse processing of the quantization performed in step S108 (Fig. 19) of the image coding processing, and is processing similar to the inverse quantization performed in step S109 (Fig. 19) of the image encoding processing.

In step S232, the inverse transformation unit 213 performs inverse orthogonal transformation and the like on the transformation coefficient Coeff_IQ obtained in the processing in step S231, and derives the prediction residual D'. The inverse orthogonal transformation is inverse processing of the orthogonal transformation performed in step S107 (Fig. 19) of the image encoding processing, and is processing similar to the inverse orthogonal transformation performed in step S110 (Fig. 19) of the image encoding processing.

Since the processing in steps S233 to S237 is similar to the processing in steps S101 to S105 of Fig. 19 except that the processing is performed by the prediction unit 216 instead of the prediction unit 119, the description will be omitted.

In step S238, the calculation unit 214 adds the prediction residual D' supplied from the inverse transformation unit 213 to the predicted image P supplied from the prediction unit 216, and derives the local decoded image Rec. The calculation unit 214 reconstructs the decoded image for each picture by using the obtained local decoded image Rec, and outputs the obtained decoded image to the outside of the image decoding device 200. Furthermore, the calculation unit 214 supplies the local decoded image Rec to the frame memory 215.

In step S239, the frame memory 215 reconstructs the decoded image for each picture by using the local decoded image Rec supplied from the calculation unit 214, and stores the decoded image in the buffer in the frame memory 215. Then, the processing returns to step S206 of Fig. 23, and the image decoding processing is completed.

Fig. 25 is a flowchart describing the AMVP affine transformation mode decoding processing in step S209 of Fig. 23.

Since the processing in steps S251 and S252 of Fig. 25 is similar to the processing in steps S231 and S232 of Fig. 24, the description will be omitted.

Since the processing in steps S253 to S258 is similar to the processing in steps S131 to S136 of Fig. 20 except that the processing is performed by the prediction unit 216 instead of the prediction unit 119, the description will be omitted.

Since the processing in steps S259 and S260 is similar to the processing in steps S238 and S239 of Fig. 24, the description will be omitted.

As described above, in a case where the inter-prediction processing by affine transformation is performed, the image decoding device 200 generates the predicted image P of the PU on the basis of two motion vectors of vertices arranged in a direction of the side having a larger size out of the size W in the x direction and the size H in the y direction of the PU. Thus, the influence on the accuracy of the predicted image P can be suppressed of the error generated in the motion vector of the vertex of the rectangular PU. As a result, the predicted image P of a rectangular PU can be generated with high accuracy.

Note that, in a case where the image encoding device 100 and the image decoding device 200 perform intra-BC prediction processing instead of the intra-prediction processing or the inter-prediction processing, motion compensation in the intra BC prediction processing may be performed similarly to motion compensation in the inter-prediction processing.

<Second embodiment>

(Description of computer to which the present disclosure is applied)

A series of processing steps described above can be executed by hardware, or can be executed by software. In a case where the series of processing steps is executed by software, a program constituting the software is installed in a computer. Here, the computer includes a computer incorporated in dedicated hardware, and a computer capable of executing various functions by installation of various programs, for example, a general purpose personal computer, and the like.

Fig. 26 is a block diagram illustrating a configuration example of hardware of the computer that executes the above-described series of processing steps by the program.

In a computer 800, a central processing unit (CPU) 801, a read only memory (ROM) 802, and a random access memory (RAM) 803 are connected to each other by a bus 804.

Moreover, an input/output interface 810 is connected to the bus 804. The input/output interface 810 is connected to an input unit 811, an output unit 812, a storage unit 813, a communication unit 814, and a drive 815.

The input unit 811 includes a keyboard, a mouse, a microphone, and the like. The output unit 812 includes a display, a speaker, and the like. The storage unit 813 includes a hard disk, a nonvolatile memory, or the like. The communication unit 814 includes a network interface and the like. The drive 815 drives a removable medium 821 such as a magnetic disk, an optical disk, a magneto-optical disk, or a semiconductor memory.

In the computer 800 configured as described above, for example, the CPU 801 loads the program stored in the storage unit 813 to the RAM 803 via the input/output interface 810 and the bus 804 to execute the above-described series of processing steps.

The program executed by the computer 800 (CPU 801) can be provided, for example, by being recorded in the removable medium 821 as a package medium or the like. Furthermore, the program can be provided via a wired or wireless transmission medium such as a local area network, the Internet, or digital satellite broadcasting.

In the computer 800, the program can be installed to the storage unit 813 via the input/output interface 810 by mounting the removable medium 821 to the drive 815. Furthermore, the program can be installed to the storage unit 813 by receiving with the communication unit 814 via the wired or wireless transmission medium. Besides, the program can be installed in advance to the ROM 802 and the storage unit 813.

Note that, the program executed by the computer 800 can be a program by which the processing is performed in time series along the order described herein, and can be a program by which the processing is performed in parallel or at necessary timing such as when a call is performed.

<Third embodiment>

Fig. 27 illustrates an example of a schematic configuration of a television device to which the above-described embodiment is applied. A television device 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts a signal of a desired channel from a broadcast signal received via the antenna 901, and demodulates the extracted signal. Then, the tuner 902 outputs an encoded bit stream obtained by the demodulation to the demultiplexer 903. In other words, the tuner 902 has a role as a transmission unit in the television device 900, the transmission unit receiving the encoded stream in which the image is encoded.

The demultiplexer 903 separates a video stream and an audio stream of a program to be viewed from the encoded bit stream, and outputs the separated streams to the decoder 904. Furthermore, the demultiplexer 903 extracts auxiliary data such as an electronic program guide (EPG) from the encoded bit stream, and supplies the extracted data to the control unit 910. Note that, the demultiplexer 903 may perform descrambling in a case where the encoded bit stream is scrambled.

The decoder 904 decodes the video stream and audio stream input from the demultiplexer 903. Then, the decoder 904 outputs video data generated by decoding processing to the video signal processing unit 905. Furthermore, the decoder 904 outputs audio data generated by the decoding processing to the audio signal processing unit 907.

The video signal processing unit 905 reproduces the video data input from the decoder 904, and causes the display unit 906 to display the video. Furthermore, the video signal processing unit 905 may cause the display unit 906 to display an application screen supplied via the network. Furthermore, the video signal processing unit 905 may perform additional processing, for example, noise removal or the like depending on a setting, for the video data. Moreover, the video signal processing unit 905 may generate an image of a graphical user interface (GUI), for example, a menu, a button, a cursor, or the like, and superimpose the generated image on an output image.

The display unit 906 is driven by a drive signal supplied from the video signal processing unit 905, and displays the video or image on a video plane of a display device (for example, a liquid crystal display, a plasma display, or an organic electro luminescence display (OELD) (organic EL display), or the like).

The audio signal processing unit 907 performs reproduction processing such as D/A conversion and amplification on the audio data input from the decoder 904, and outputs audio from the speaker 908. Furthermore, the audio signal processing unit 907 may perform additional processing such as noise removal on the audio data.

The external interface unit 909 is an interface for connecting the television device 900 to an external device or a network. For example, the video stream or the audio stream received via the external interface unit 909 may be decoded by the decoder 904. In other words, the external interface unit 909 also has a role as the transmission unit in the television device 900, the transmission unit receiving the encoded stream in which the image is encoded.

The control unit 910 includes a processor such as a CPU, and memories such as a RAM and a ROM. The memories store a program executed by the CPU, program data, EPG data, data acquired via the network, and the like. The program stored by the memories is read and executed by the CPU at the time of activation of the television device 900, for example. The CPU executes the program, thereby controlling operation of the television device 900 depending on an operation signal input from the user interface unit 911, for example.

The user interface unit 911 is connected to the control unit 910. The user interface unit 911 includes, for example, buttons and switches for a user to operate the television device 900, a reception unit of a remote control signal, and the like. The user interface unit 911 detects operation by the user via these components, generates an operation signal, and outputs the generated operation signal to the control unit 910.

The bus 912 connects the tuner 902, the demultiplexer 903, the decoder 904, the video signal processing unit 905, the audio signal processing unit 907, the external interface unit 909, and the control unit 910 to each other.

In the television device 900 configured as described above, the decoder 904 may have the function of the above-described image decoding device 200. That is, the decoder 904 may decode the coded data with the method described in each of the embodiments described above. By doing so, the television device 900 can obtain an effect similar to each of the embodiments described above with reference to Figs. 10 to 25.

Furthermore, in the television device 900 configured as described above, the video signal processing unit 905 may encode image data supplied from the decoder 904, for example, and the obtained coded data may be output to the outside of the television device 900 via the external interface unit 909. Then, the video signal processing unit 905 may have the function of the above-described image encoding device 100. That is, the video signal processing unit 905 may encode the image data supplied from the decoder 904 with the method described in each of the embodiments described above. By doing so, the television device 900 can obtain an effect similar to each of the embodiments described above with reference to Figs. 10 to 25.

<Fourth embodiment>

Fig. 28 illustrates an example of a schematic configuration of a mobile phone to which the above-described embodiment is applied. A mobile phone 920 includes an antenna 921, a communication unit 922, an audio codec 923, a speaker 924, a microphone 925, a camera unit 926, an image processing unit 927, a demultiplexing unit 928, a recording/reproducing unit 929, a display unit 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 connects the communication unit 922, the audio codec 923, the camera unit 926, the image processing unit 927, the demultiplexing unit 928, the recording/reproducing unit 929, the display unit 930, and the control unit 931 to each other.

The mobile phone 920 performs operations such as transmission/reception of audio signals, transmission/reception of an e-mail or image data, imaging of an image, and recording of data, in various operation modes including an audio call mode, a data communication mode, a photographing mode, and a videophone mode.

In the audio call mode, an analog audio signal generated by the microphone 925 is supplied to the audio codec 923. The audio codec 923 converts the analog audio signal into audio data, and performs A/D conversion on the converted audio data and compresses the data. Then, the audio codec 923 outputs the compressed audio data to the communication unit 922. The communication unit 922 encodes and modulates the audio data to generate a transmission signal. Then, the communication unit 922 transmits the generated transmission signal to a base station (not illustrated) via the antenna 921. Furthermore, the communication unit 922 performs amplification and frequency conversion on a radio signal received via the antenna 921, to acquire a reception signal. Then, the communication unit 922 demodulates and decodes the reception signal to generate audio data, and outputs the generated audio data to the audio codec 923. The audio codec 923 performs decompression and D/A conversion on the audio data to generate an analog audio signal. Then, the audio codec 923 supplies the generated audio signal to the speaker 924 to output audio.

Furthermore, in the data communication mode, for example, the control unit 931 generates character data constituting the e-mail depending on operation by a user via the operation unit 932. Furthermore, the control unit 931 causes the display unit 930 to display characters. Furthermore, the control unit 931 generates e-mail data in response to a transmission instruction from the user via the operation unit 932, and outputs the generated e-mail data to the communication unit 922. The communication unit 922 encodes and modulates the e-mail data to generate a transmission signal. Then, the communication unit 922 transmits the generated transmission signal to a base station (not illustrated) via the antenna 921. Furthermore, the communication unit 922 performs amplification and frequency conversion on a radio signal received via the antenna 921, to acquire a reception signal. Then, the communication unit 922 demodulates and decodes the reception signal to restore the e-mail data, and outputs the restored e-mail data to the control unit 931. The control unit 931 causes the display unit 930 to display contents of the e-mail, and also supplies the e-mail data to the recording/reproducing unit 929 to write the e-mail data in its storage medium.

The recording/reproducing unit 929 includes an arbitrary readable and writable storage medium. For example, the storage medium may be a built-in storage medium such as a RAM or a flash memory, or may be an external storage medium such as a hard disk, a magnetic disk, a magneto-optical disk, an optical disk, a universal serial bus (USB) memory, or a memory card.

Furthermore, in the photographing mode, for example, the camera unit 926 images a subject to generate image data, and outputs the generated image data to the image processing unit 927. The image processing unit 927 encodes the image data input from the camera unit 926, supplies an encoded stream to the recording/reproducing unit 929 to write the encoded stream in its storage medium.

Moreover, in an image display mode, the recording/reproducing unit 929 reads the encoded stream recorded in the storage medium, and outputs the stream to the image processing unit 927. The image processing unit 927 decodes the encoded stream input from the recording/reproducing unit 929, and supplies image data to the display unit 930 to display the image.

Furthermore, in the videophone mode, for example, the demultiplexing unit 928 multiplexes a video stream encoded by the image processing unit 927 and an audio stream input from the audio codec 923, and outputs a multiplexed stream to the communication unit 922. The communication unit 922 encodes and modulates the stream to generate a transmission signal. Then, the communication unit 922 transmits the generated transmission signal to a base station (not illustrated) via the antenna 921. Furthermore, the communication unit 922 performs amplification and frequency conversion on a radio signal received via the antenna 921, to acquire a reception signal. These transmission signal and reception signal may include an encoded bit stream. Then, the communication unit 922 demodulates and decodes the reception signal to restore the stream, and outputs the restored stream to the demultiplexing unit 928. The demultiplexing unit 928 separates a video stream and an audio stream from the input stream, and outputs the video stream to the image processing unit 927, and the audio stream to the audio codec 923. The image processing unit 927 decodes the video stream to generate video data. The video data is supplied to the display unit 930, and a series of images are displayed by the display unit 930. The audio codec 923 performs decompression and D/A conversion on the audio stream to generate an analog audio signal. Then, the audio codec 923 supplies the generated audio signal to the speaker 924 to output audio.

In the mobile phone 920 configured as described above, for example, the image processing unit 927 may have the function of the above-described image encoding device 100. That is, the image processing unit 927 may encode the image data with the method described in each of the embodiments described above. By doing so, the mobile phone 920 can obtain an effect similar to each of the embodiments described above with reference to Figs. 10 to 25.

Furthermore, in the mobile phone 920 configured as described above, for example, the image processing unit 927 may have the function of the above-described image decoding device 200. That is, the image processing unit 927 may decode the coded data with the method described in each of the embodiments described above. By doing so, the mobile phone 920 can obtain an effect similar to each of the embodiments described above with reference to Figs. 10 to 25.

<Fifth embodiment>

Fig. 29 illustrates an example of a schematic configuration of a recording/reproducing device to which the above-described embodiment is applied. A recording/reproducing device 940 encodes, for example, audio data and video data of a received broadcast program and records encoded data in a recording medium. Furthermore, the recording/reproducing device 940 may encode, for example, audio data and video data acquired from another device, and record the encoded data in the recording medium. Furthermore, the recording/reproducing device 940 reproduces data recorded in the recording medium on a monitor and a speaker, for example, in response to an instruction from a user. At this time, the recording/reproducing device 940 decodes the audio data and the video data.

The recording/reproducing device 940 includes a tuner 941, an external interface (I/F) unit 942, an encoder 943, a hard disk drive (HDD) unit 944, a disk drive 945, a selector 946, a decoder 947, an on-screen display (OSD) unit 948, a control unit 949, and a user interface (I/F) unit 950.

The tuner 941 extracts a signal of a desired channel from a broadcast signal received via an antenna (not illustrated), and demodulates the extracted signal. Then, the tuner 941 outputs an encoded bit stream obtained by the demodulation to the selector 946. In other words, the tuner 941 has a role as a transmission unit in the recording/reproducing device 940.

The external interface unit 942 is an interface for connecting the recording/reproducing device 940 to an external device or a network. The external interface unit 942 may be, for example, an institute of electrical and electronic engineers (IEEE) 1394 interface, a network interface, a USB interface, a flash memory interface, or the like. For example, the video data and audio data received via the external interface unit 942 are input to the encoder 943. In other words, the external interface unit 942 has a role as the transmission unit in the recording/reproducing device 940.

The encoder 943 encodes the video data and audio data in a case where the video data and audio data input from the external interface unit 942 are not encoded. Then, the encoder 943 outputs an encoded bit stream to the selector 946.

The HDD unit 944 records, in an internal hard disk, an encoded bit stream in which content data such as video and audio data are compressed, various programs, and other data. Furthermore, the HDD unit 944 reads these data from the hard disk at the time of reproduction of video and audio.

The disk drive 945 performs recording and reading of data on the mounted recording medium. The recording medium mounted on the disk drive 945 may be, for example, a digital versatile disc (DVD) disk (DVD-Video, DVD-random access memory (DVD-RAM), DVD-recordable (DVD-R), DVD-rewritable (DVD-RW), DVD+recordable (DVD+R), DVD+rewritable (DVD+RW), or the like) or a Blu-ray (registered trademark) disk, or the like.

At the time of recording of video and audio, the selector 946 selects an encoded bit stream input from the tuner 941 or the encoder 943, and outputs the selected encoded bit stream to the HDD unit 944 or the disk drive 945. Furthermore, at the time of reproduction of video and audio, the selector 946 outputs the encoded bit stream input from the HDD unit 944 or the disk drive 945 to the decoder 947.

The decoder 947 decodes the encoded bit stream to generate video data and audio data. Then, the decoder 947 outputs the generated video data to the OSD unit 948. Furthermore, the decoder 947 outputs the generated audio data to an external speaker.

The OSD unit 948 reproduces the video data input from the decoder 947, and displays the video. Furthermore, the OSD unit 948 may superimpose an image of GUI, for example, a menu, a button, a cursor, or the like on the video to be displayed.

The control unit 949 includes a processor such as a CPU, and memories such as a RAM and a ROM. The memories store a program executed by the CPU, program data, and the like. The program stored by the memories is read and executed by the CPU at the time of activation of the recording/reproducing device 940, for example. The CPU executes the program, thereby controlling operation of the recording/reproducing device 940 depending on an operation signal input from the user interface unit 950, for example.

The user interface unit 950 is connected to the control unit 949. The user interface unit 950 includes, for example, buttons and switches for a user to operate the recording/reproducing device 940, a reception unit of a remote control signal, and the like. The user interface unit 950 detects operation by the user via these components, generates an operation signal, and outputs the generated operation signal to the control unit 949.

In the recording/reproducing device 940 configured as described above, for example, the encoder 943 may have the function of the above-described image encoding device 100. That is, the encoder 943 may encode the image data by the method described in each of the embodiments described above. By doing so, the recording/reproducing device 940 can obtain an effect similar to each of the embodiments described above with reference to Figs. 10 to 25.

Furthermore, in the recording/reproducing device 940 configured as described above, for example, the decoder 947 may have the function of the above-described image decoding device 200. That is, the decoder 947 may decode the coded data with the method described in each of the embodiments described above. By doing so, the recording/reproducing device 940 can obtain an effect similar to each of the embodiments described above with reference to Figs. 10 to 25.

<Sixth embodiment>

Fig. 30 illustrates an example of a schematic configuration of an imaging device to which the above-described embodiment is applied. An imaging device 960 images a subject to generate an image, encodes image data, and records the encoded image data in a recording medium.

The imaging device 960 includes an optical block 961, an imaging unit 962, a signal processing unit 963, an image processing unit 964, a display unit 965, an external interface (I/F) unit 966, a memory unit 967, a media drive 968, an OSD unit 969, a control unit 970, a user interface (I/F) unit 971, and a bus 972.

The optical block 961 is connected to the imaging unit 962. The imaging unit 962 is connected to the signal processing unit 963. The display unit 965 is connected to the image processing unit 964. The user interface unit 971 is connected to the control unit 970. The bus 972 connects the image processing unit 964, the external interface unit 966, the memory unit 967, the media drive 968, the OSD unit 969, and the control unit 970 to each other.

The optical block 961 includes a focus lens, an aperture mechanism, and the like. The optical block 961 forms an optical image of the subject on an imaging plane of the imaging unit 962. The imaging unit 962 includes an image sensor such as a charge coupled device (CCD) or complementary metal oxide semiconductor (CMOS) image sensor, and converts the optical image formed on the imaging plane into an image signal as an electric signal by photoelectric conversion. Then, the imaging unit 962 outputs the image signal to the signal processing unit 963.

The signal processing unit 963 performs various types of camera signal processing such as knee correction, gamma correction, and color correction, on the image signal input from the imaging unit 962. The signal processing unit 963 outputs the image data after the camera signal processing to the image processing unit 964.

The image processing unit 964 encodes the image data input from the signal processing unit 963 to generate coded data. Then, the image processing unit 964 outputs the generated coded data to the external interface unit 966 or the media drive 968. Furthermore, the image processing unit 964 decodes coded data input from the external interface unit 966 or the media drive 968 to generate image data. Then, the image processing unit 964 outputs the generated image data to the display unit 965. Furthermore, the image processing unit 964 may output the image data input from the signal processing unit 963 to the display unit 965 to display the image. Furthermore, the image processing unit 964 may superimpose display data acquired from the OSD unit 969 on the image to be output to the display unit 965.

The OSD unit 969 generates an image of GUI, for example, a menu, a button, or a cursor, or the like, and outputs the generated image to the image processing unit 964.

The external interface unit 966 is configured as, for example, a USB input/output terminal. The external interface unit 966 connects the imaging device 960 and the printer together , for example, at the time of printing of an image. Furthermore, a drive is connected to the external interface unit 966 as necessary. For example, a removable medium such as a magnetic disk or an optical disk is mounted in the drive, and a program read from the removable medium can be installed in the imaging device 960. Moreover, the external interface unit 966 may be configured as a network interface connected to a network such as a LAN or the Internet. In other words, the external interface unit 966 has a role as a transmission unit in the imaging device 960.

The recording medium mounted in the media drive 968 may be an arbitrary readable and writable removable medium, for example, a magnetic disk, a magneto-optical disk, an optical disk, a semiconductor memory, or the like. Furthermore, the recording medium may be fixedly mounted to the media drive 968, and, for example, a non-portable storage unit may be configured, such as a built-in hard disk drive or solid state drive (SSD).

The control unit 970 includes a processor such as a CPU, and memories such as a RAM and a ROM. The memories store a program executed by the CPU, program data, and the like. The program stored by the memories is read and executed by the CPU at the time of activation of the imaging device 960, for example. The CPU executes the program, thereby controlling operation of the imaging device 960 depending on an operation signal input from the user interface unit 971, for example.

The user interface unit 971 is connected to the control unit 970. The user interface unit 971 includes, for example, buttons, switches, or the like for a user to operate the imaging device 960. The user interface unit 971 detects operation by the user via these components, generates an operation signal, and outputs the generated operation signal to the control unit 970.

In the imaging device 960 configured as described above, for example, the image processing unit 964 may have the function of the above-described image encoding device 100. That is, the image processing unit 964 may encode the image data with the method described in each of the embodiments described above. By doing so, the imaging device 960 can obtain an effect similar to each of the embodiments described above with reference to Figs. 10 to 25.

Furthermore, in the imaging device 960 configured as described above, for example, the image processing unit 964 may have the function of the above-described image decoding device 200. That is, the image processing unit 964 may decode the coded data with the method described in each of the embodiments described above. By doing so, the imaging device 960 can obtain an effect similar to each of the embodiments described above with reference to Figs. 10 to 25.

<Seventh embodiment>

Furthermore, the present technology can also be implemented as any configuration to be mounted on a device constituting an arbitrary device or system, for example, a processor as a system large scale integration (LSI) or the like, a module using a plurality of processors and the like, a unit using a plurality of modules and the like, a set in which other functions are further added to the unit, or the like (in other words, a configuration of a part of the device). Fig. 31 illustrates an example of a schematic configuration of a video set to which the present technology is applied.

In recent years, multi-functionalization of an electronic device has progressed, and in a case where a configuration of a part of the electronic device is implemented as selling, providing, or the like in development and manufacturing of the electronic device, not only a case of implementation as a configuration having one function, but also a case is often seen of implementation as one set having a plurality of functions by combination of related functions.

A video set 1300 illustrated in Fig. 31 has such a multi-functionalized configuration, in which a device having a function related to encoding and decoding of an image (the function may be related to either one or both of the encoding and decoding) is combined with a device having another function related the function.

As illustrated in Fig. 31, the video set 1300 includes a group of modules such as a video module 1311, an external memory 1312, a power management module 1313, and a front-end module 1314, and devices having related functions such as a connectivity 1321, a camera 1322, and a sensor 1323.

A module is a component having a united function, in which several component functions related to each other are united together. Although the specific physical configuration is arbitrary, for example, a configuration is conceivable in which a plurality of processors each having a function, electronic circuit elements such as resistors and capacitors, another device, and the like are arranged on a wiring board or the like to be integrated together. Furthermore, it is also conceivable to combine a module with another module, a processor, and the like to form a new module.

In the case of the example of Fig. 31, the video module 1311 is a combination of configurations having functions related to image processing, and includes an application processor, a video processor, a broadband modem 1333, and an RF module 1334.

A processor is a component in which configurations each having a predetermined function are integrated on a semiconductor chip by a system on a chip (SoC), and some are called system large scale integration (LSI) or the like, for example. The configuration having the predetermined function may be a logic circuit (hardware configuration), may be a CPU, a ROM, a RAM, and the like, and a program (software configuration) executed using them, or may be a combination of both. For example, a processor may include a logic circuit, a CPU, a ROM, a RAM, and the like, some functions may be implemented by the logic circuit (hardware configuration), and other functions may be implemented by a program (software configuration) executed in the CPU.

The application processor 1331 in Fig. 31 is a processor that executes an application related to image processing. To implement a predetermined function, the application executed in the application processor 1331 can perform not only arithmetic processing but also control of components inside and outside the video module 1311, for example, a video processor 1332 or the like, as necessary.

The video processor 1332 is a processor having functions related to (one or both of) the encoding and decoding of the image.

The broadband modem 1333 performs conversion, to an analog signal, on data (digital signal) to be transmitted by wired or wireless (or both) broadband communication performed over a broadband line such as the Internet or a public telephone line network, or the like by digital modulation or the like, and performs conversion, to data (digital signal), on an analog signal received by the broadband communication by demodulation. The broadband modem 1333 processes arbitrary information, for example, image data processed by the video processor 1332, a stream in which the image data is encoded, an application program, setting data, or the like.

The RF module 1334 is a module that performs frequency conversion, modulation/demodulation, amplification, filter processing, and the like, on a radio frequency (RF) signal transmitted and received via an antenna. For example, the RF module 1334 performs frequency conversion and the like on a baseband signal generated by the broadband modem 1333 to generate an RF signal. Furthermore, for example, the RF module 1334 performs frequency conversion and the like on an RF signal received via the front-end module 1314 to generate a baseband signal.

Note that, as illustrated by a dotted line 1341 in Fig. 31, the application processor 1331 and the video processor 1332 may be integrated to form one processor.

The external memory 1312 is a module provided outside the video module 1311 and including a storage device used by the video module 1311. The storage device of the external memory 1312 may be implemented by any physical configuration, but in general, the storage device is often used for storing large capacity data such as image data on a frame basis, so that the storage device is desirably implemented by a relatively inexpensive and large capacity semiconductor memory, for example, a dynamic random access memory (DRAM).

The power management module 1313 manages and controls power supply to the video module 1311 (each component in the video module 1311).

The front-end module 1314 is a module that provides a front-end function (a circuit at a transmission/reception end on an antenna side) to the RF module 1334. As illustrated in Fig. 31, the front-end module 1314 includes, for example, an antenna unit 1351, a filter 1352, and an amplification unit 1353.

The antenna unit 1351 includes an antenna that transmits and receives radio signals and its peripheral component. The antenna unit 1351 transmits a signal supplied from the amplification unit 1353 as a radio signal, and supplies a received radio signal to the filter 1352 as an electric signal (RF signal). The filter 1352 performs filter processing and the like on the RF signal received via the antenna unit 1351, and supplies the processed RF signal to the RF module 1334. The amplification unit 1353 amplifies the RF signal supplied from the RF module 1334 and supplies the signal to the antenna unit 1351.

The connectivity 1321 is a module having a function related to connection with the outside. The physical configuration of the connectivity 1321 is arbitrary. For example, the connectivity 1321 includes a component having a communication function other than a communication standard supported by the broadband modem 1333, an external input/output terminal, and the like.

For example, the connectivity 1321 may include a module having a communication function conforming to a wireless communication standard such as Bluetooth (registered trademark), IEEE 802.11 (for example, wireless fidelity (Wi-Fi) (registered trademark)), near field communication (NFC), or Infrared data association (IrDA), an antenna that transmits and receives a signal conforming to the standard, and the like. Furthermore, for example, the connectivity 1321 may include a module having a communication function conforming to a wired communication standard such as universal serial bus (USB), or High-Definition Multimedia Interface (HDMI) (registered trademark), or a terminal conforming to the standard. Moreover, for example, the connectivity 1321 may have another data (signal) transmission function such as analog input/output terminal.

Note that, the connectivity 1321 may include a device to which data (signal) is transmitted. For example, the connectivity 1321 may include a drive (including not only a removable medium drive but also a hard disk, a solid state drive (SSD), network attached storage (NAS), and the like) that reads/writes data from/to a recording medium such as a magnetic disk, an optical disk, a magneto-optical disk, or a semiconductor memory. Furthermore, the connectivity 1321 may include image and audio output devices (monitor, speaker, and the like).

The camera 1322 is a module having a function of imaging a subject and obtaining image data of the subject. The image data obtained by imaging by the camera 1322 is supplied to the video processor 1332 and encoded, for example.

The sensor 1323 is a module having an arbitrary sensor function, for example, an audio sensor, an ultrasonic sensor, an optical sensor, an illuminance sensor, an infrared sensor, an image sensor, a rotation sensor, an angle sensor, an angular velocity sensor, a velocity sensor, an acceleration sensor, a tilt sensor, a magnetic identification sensor, an impact sensor, a temperature sensor, or the like. Data detected by the sensor 1323 is supplied to the application processor 1331, for example, and used by an application or the like.

The component described as a module in the above may be implemented as a processor, or conversely, the component described as a processor may be implemented as a module.

In the video set 1300 configured as described above, the present technology can be applied to the video processor 1332 as described later. The video set 1300 can therefore be implemented as a set to which the present technology is applied.

(Configuration example of video processor)

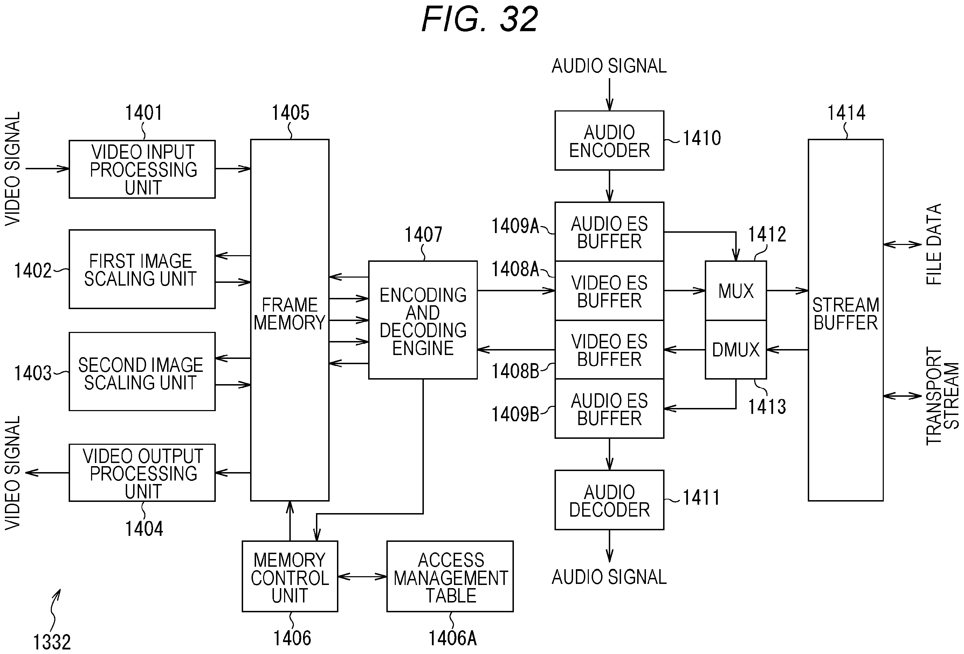

Fig. 32 illustrates an example of a schematic configuration of the video processor 1332 (Fig. 31) to which the present technology is applied.

In the case of the example of Fig. 32, the video processor 1332 includes a function of receiving input of a video signal and an audio signal and encoding the signals with a predetermined format, and a function of decoding the encoded video data and audio data to reproduce and output the video signal and the audio signal.

As illustrated in Fig. 32, the video processor 1332 includes a video input processing unit 1401, a first image scaling unit 1402, a second image scaling unit 1403, a video output processing unit 1404, a frame memory 1405, and a memory control unit 1406. Furthermore, the video processor 1332 includes an encoding and decoding engine 1407, video elementary stream (ES) buffers 1408A and 1408B, and audio ES buffers 1409A and 1409B. Moreover, the video processor 1332 includes an audio encoder 1410, an audio decoder 1411, a multiplexing unit (multiplexer (MUX)) 1412, a demultiplexing unit (demultiplexer (DMUX)) 1413, and a stream buffer 1414.

The video input processing unit 1401 acquires the video signal input from, for example, the connectivity 1321 (Fig. 31) or the like, and converts the signal into digital image data. The first image scaling unit 1402 performs format conversion, image scaling processing, and the like on the image data. The second image scaling unit 1403 performs, on the image data, image scaling processing depending on a format at an output destination via the video output processing unit 1404, and format conversion, image scaling processing, and the like similar to those by the first image scaling unit 1402. The video output processing unit 1404 performs format conversion, conversion to an analog signal, and the like on the image data, to make a reproduced video signal and output the signal to, for example, the connectivity 1321 or the like.

The frame memory 1405 is a memory for image data shared by the video input processing unit 1401, the first image scaling unit 1402, the second image scaling unit 1403, the video output processing unit 1404, and the encoding and decoding engine 1407. The frame memory 1405 is implemented as a semiconductor memory such as a DRAM, for example.

The memory control unit 1406 receives a synchronization signal from the encoding and decoding engine 1407, and controls access of write and read to the frame memory 1405 in accordance with an access schedule to the frame memory 1405 written in an access management table 1406A. The access management table 1406A is updated by the memory control unit 1406 depending on processing executed by the encoding and decoding engine 1407, the first image scaling unit 1402, the second image scaling unit 1403, or the like.

The encoding and decoding engine 1407 performs encoding processing of image data, and decoding processing of a video stream that is data in which image data is encoded. For example, the encoding and decoding engine 1407 encodes image data read from the frame memory 1405 and sequentially writes the encoded image data as a video stream in the video ES buffer 1408A. Furthermore, for example, a video stream is sequentially read from the video ES buffer 1408B and decoded, and sequentially written as image data in the frame memory 1405. The encoding and decoding engine 1407 uses the frame memory 1405 as a work area, in these encoding and decoding. Furthermore, the encoding and decoding engine 1407 outputs a synchronization signal to the memory control unit 1406, for example, at the timing of start of the processing for each macroblock.

The video ES buffer 1408A buffers a video stream generated by the encoding and decoding engine 1407, and supplies the video stream to the multiplexing unit (MUX) 1412. The video ES buffer 1408B buffers a video stream supplied from the demultiplexing unit (DMUX) 1413 and supplies the video stream to the encoding and decoding engine 1407.

The audio ES buffer 1409A buffers an audio stream generated by the audio encoder 1410, and supplies the audio stream to the multiplexing unit (MUX) 1412. The audio ES buffer 1409B buffers an audio stream supplied from the demultiplexing unit (DMUX) 1413, and supplies the audio stream to the audio decoder 1411.

The audio encoder 1410 performs, for example, digital conversion on an audio signal input from, for example, the connectivity 1321 or the like, and encodes the audio signal with a predetermined format, for example, an MPEG audio format, an AudioCode number 3 (AC3) format, or the like. The audio encoder 1410 sequentially writes, in the audio ES buffer 1409A, an audio stream that is data in which the audio signal is encoded. The audio decoder 1411 decodes an audio stream supplied from the audio ES buffer 1409B, performs, for example, conversion into an analog signal, or the like, to make a reproduced audio signal, and supplies the signal to, for example, the connectivity 1321 or the like.

The multiplexing unit (MUX) 1412 multiplexes the video stream and the audio stream. The multiplexing method (in other words, the format of a bit stream generated by multiplexing) is arbitrary. Furthermore, at the time of multiplexing, the multiplexing unit (MUX) 1412 can add predetermined header information and the like to the bit stream. That is, the multiplexing unit (MUX) 1412 can convert the format of the stream by multiplexing. For example, the multiplexing unit (MUX) 1412 multiplexes the video stream and the audio stream, thereby performing conversion to a transport stream that is a bit stream of a format for transfer. Furthermore, for example, the multiplexing unit (MUX) 1412 multiplexes the video stream and the audio stream, thereby performing conversion to data (file data) of a file format for recording.

The demultiplexing unit (DMUX) 1413 demultiplexes the bit stream in which the video stream and the audio stream are multiplexed with a method corresponding to multiplexing by the multiplexing unit (MUX) 1412. That is, the demultiplexing unit (DMUX) 1413 extracts the video stream and the audio stream (separates the video stream and the audio stream) from the bit stream read from the stream buffer 1414. That is, the demultiplexing unit (DMUX) 1413 can convert the format of the stream by inverse multiplexing (inverse conversion of conversion by the multiplexing unit (MUX) 1412). For example, the demultiplexing unit (DMUX) 1413 acquires a transport stream supplied from the connectivity 1321, the broadband modem 1333, or the like via the stream buffer 1414, for example, and demultiplexes the transport stream, thereby being able to perform conversion into a video stream and an audio stream. Furthermore, for example, the demultiplexing unit (DMUX) 1413 acquires, via the stream buffer 1414, file data read from various recording media by the connectivity 1321, for example, and demultiplexes the file data, thereby being able to perform conversion into a video stream and an audio stream.

The stream buffer 1414 buffers the bit stream. For example, the stream buffer 1414 buffers a transport stream supplied from the multiplexing unit (MUX) 1412 and supplies the transport stream to, for example, the connectivity 1321, the broadband modem 1333, or the like at a predetermined timing or on the basis of a request from the outside, or the like.

Furthermore, for example, the stream buffer 1414 buffers file data supplied from the multiplexing unit (MUX) 1412, supplies the file data to, for example, the connectivity 1321 or the like at a predetermined timing or on the basis of a request from the outside, or the like, and records the file data in various recording media.

Moreover, the stream buffer 1414 buffers a transport stream acquired via, for example, the connectivity 1321, the broadband modem 1333, or the like, and supplies the transport stream to the demultiplexing unit (DMUX) 1413 at a predetermined timing or on the basis of a request from the outside, or the like.

Furthermore, the stream buffer 1414 buffers file data read from various recording media in, for example, the connectivity 1321, or the like, and supplies the file data to the demultiplexing unit (DMUX) 1413 at a predetermined timing or on the basis of a request from the outside, or the like.

Next, an example will be described of operation of the video processor 1332 having such a configuration. For example, the video signal input from the connectivity 1321 or the like to the video processor 1332 is converted into digital image data of a predetermined format such as the 4:2:2Y/Cb/Cr format in the video input processing unit 1401, and is sequentially written in the frame memory 1405. The digital image data is read by the first image scaling unit 1402 or the second image scaling unit 1403, and is subjected to format conversion into a predetermined format such as a 4:2:0Y/Cb/Cr format, and scaling processing, and is again written in the frame memory 1405. The image data is encoded by the encoding and decoding engine 1407, and written as a video stream in the video ES buffer 1408A.

Furthermore, the audio signal input from the connectivity 1321 or the like to the video processor 1332 is encoded by the audio encoder 1410, and written as an audio stream in the audio ES buffer 1409A.

The video stream of the video ES buffer 1408A and the audio stream of the audio ES buffer 1409A are read by the multiplexing unit (MUX) 1412 to be multiplexed, and converted into a transport stream, file data, or the like. The transport stream generated by the multiplexing unit (MUX) 1412 is buffered in the stream buffer 1414, and then output to an external network via, for example, the connectivity 1321, the broadband modem 1333, or the like. Furthermore, the file data generated by the multiplexing unit (MUX) 1412 is buffered in the stream buffer 1414, and then output to, for example, the connectivity 1321 or the like, and recorded in various recording media.

Furthermore, the transport stream input from the external network to the video processor 1332 via, for example, the connectivity 1321, the broadband modem 1333, or the like is buffered in the stream buffer 1414, and then demultiplexed by the demultiplexing unit (DMUX) 1413. Furthermore, for example, the file data read from various recording media in, for example, the connectivity 1321 or the like, and input to the video processor 1332 is buffered in the stream buffer 1414, and then demultiplexed by the demultiplexing unit (DMUX) 1413. That is, the transport stream or file data input to the video processor 1332 is separated into a video stream and an audio stream by the demultiplexing unit (DMUX) 1413.

The audio stream is supplied to the audio decoder 1411 via the audio ES buffer 1409B to be decoded, and an audio signal is reproduced. Furthermore, the video stream is written in the video ES buffer 1408B, and then sequentially read by the encoding and decoding engine 1407 to be decoded, and written in the frame memory 1405. The decoded image data is subjected to scaling processing by the second image scaling unit 1403, and written in the frame memory 1405. Then, the decoded image data is read by the video output processing unit 1404, subjected to format conversion into a predetermined format such as the 4:2:2Y/Cb/Cr format, and further converted into an analog signal, and a video signal is reproduced and output.

In a case where the present technology is applied to the video processor 1332 configured as described above, it is sufficient that the present technology according to each of the above-described embodiments is applied to the encoding and decoding engine 1407. That is, for example, the encoding and decoding engine 1407 may have the function of the above-described image encoding device 100 or the image decoding device 200, or the functions of both. By doing so, the video processor 1332 can obtain an effect similar to each of the embodiments described above with reference to Figs. 10 to 25.

Note that, in the encoding and decoding engine 1407, the present technology (in other words, the function of the image encoding device 100 or the function of the image decoding device 200, or both) may be implemented by hardware such as a logic circuit, may be implemented by software such as a built-in program, or may be implemented by both of hardware and software.

(Another configuration example of video processor)

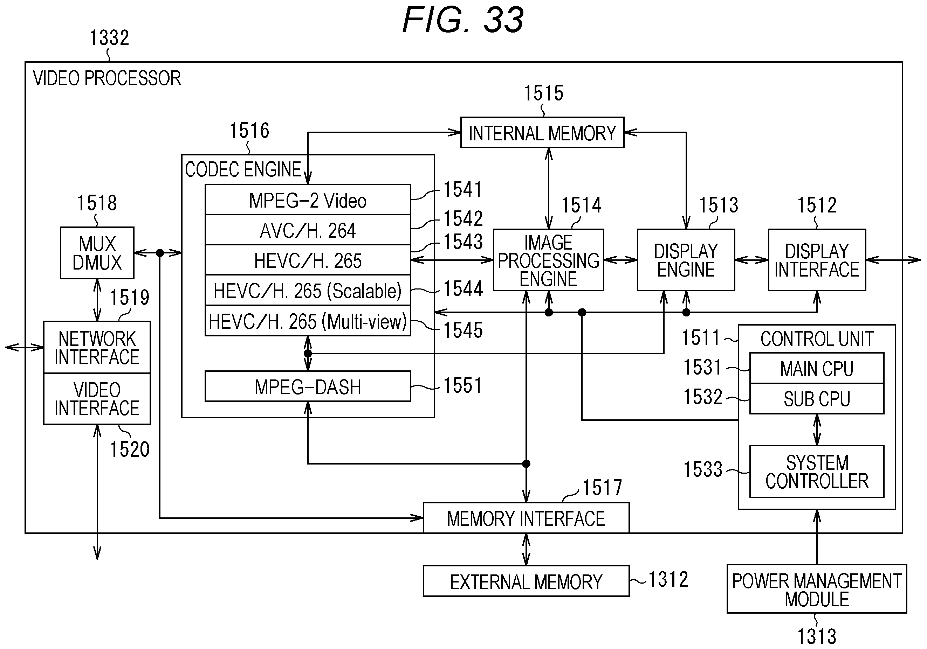

Fig. 33 illustrates another example of the schematic configuration of the video processor 1332 to which the present technology is applied. In the case of the example of Fig. 33, the video processor 1332 has a function of encoding and decoding video data with a predetermined format.

Specifically, as illustrated in Fig. 33, the video processor 1332 includes a control unit 1511, a display interface 1512, a display engine 1513, an image processing engine 1514, and an internal memory 1515. Furthermore, the video processor 1332 includes a codec engine 1516, a memory interface 1517, a multiplexing and demultiplexing unit (MUX DMUX) 1518, a network interface 1519, and a video interface 1520.

The control unit 1511 controls operation of each processing part in the video processor 1332, such as the display interface 1512, the display engine 1513, the image processing engine 1514, and the codec engine 1516.

As illustrated in Fig. 33, the control unit 1511 includes, for example, a main CPU 1531, a sub CPU 1532, and a system controller 1533. The main CPU 1531 executes a program or the like for controlling the operation of each processing part in the video processor 1332. The main CPU 1531 generates a control signal in accordance with the program or the like, and supplies the control signal to each processing part (that is, controls the operation of each processing part) . The sub CPU 1532 plays an auxiliary role of the main CPU 1531. For example, the sub CPU 1532 executes a child process, a subroutine, or the like of the program or the like executed by the main CPU 1531. The system controller 1533 controls operations of the main CPU 1531 and the sub CPU 1532, such as specifying programs to be executed by the main CPU 1531 and the sub CPU 1532.

Under the control of the control unit 1511, the display interface 1512 outputs image data to, for example, the connectivity 1321 or the like. For example, the display interface 1512 converts the image data of digital data into an analog signal to make a reproduced video signal, and outputs the signal, or the image data of the digital data as it is, to a monitor device or the like of the connectivity 1321.

Under the control of the control unit 1511, the display engine 1513 performs various types of conversion processing such as format conversion, size conversion, and color gamut conversion on the image data so that the image data conforms to hardware specifications of the monitor device or the like that displays the image.

Under the control of the control unit 1511, the image processing engine 1514 performs predetermined image processing on the image data, for example, filter processing for image quality improvement, or the like.

The internal memory 1515 is a memory provided inside the video processor 1332, and shared by the display engine 1513, the image processing engine 1514, and the codec engine 1516. The internal memory 1515 is used for exchanging data between the display engine 1513, the image processing engine 1514, and the codec engine 1516, for example. For example, the internal memory 1515 stores data supplied from the display engine 1513, the image processing engine 1514, or the codec engine 1516, and outputs the data to the display engine 1513, the image processing engine 1514, or the codec engine 1516 as necessary (for example, in response to a request). The internal memory 1515 may be implemented by any storage device, but in general, the internal memory 1515 is often used for storing small capacity data such as image data on a block basis and parameters, so that the internal memory 1515 is desirably implemented by a semiconductor memory of a relatively small capacity (for example, as compared with the external memory 1312) but high response speed, for example, a static random access memory (SRAM).

The codec engine 1516 performs processing related to encoding and decoding of image data. The encoding and decoding format supported by the codec engine 1516 is arbitrary, and the number of formats may be one or plural. For example, the codec engine 1516 may have codec functions of a plurality of the encoding and decoding formats, and may encode image data or decode coded data with one selected from the formats.

In the example illustrated in Fig. 33, the codec engine 1516 includes, as a functional block of processing related to codec, for example, MPEG-2 Video 1541, AVC/H.264 1542, HEVC/H.265 1543, HEVC/H.265 (Scalable) 1544, HEVC/H.265 (Multi-view) 1545, and MPEG-DASH 1551.

The MPEG-2 Video 1541 is a functional block that encodes and decodes image data with the MPEG-2 format. The AVC/H.264 1542 is a functional block that encodes and decodes image data with the AVC format. The HEVC/H.265 1543 is a functional block that encodes and decodes image data with the HEVC format. The HEVC/H.265 (Scalable) 1544 is a functional block that performs scalable encoding and scalable decoding of image data with the HEVC format. The HEVC/H.265 (Multi-view) 1545 is a functional block that performs multi-viewpoint encoding and multi-view decoding of image data with the HEVC format.

The MPEG-DASH 1551 is a functional block that transmits and receives image data with the MPEG-dynamic adaptive streaming over HTTP (MPEG-DASH) format. MPEG-DASH is a technology that performs streaming of video by using hypertext transfer protocol (HTTP), and, as one of its features, selects and transmits, on a segment basis, an appropriate one from a plurality of coded data with different resolutions and the like prepared in advance. The MPEG-DASH 1551 performs generation of a stream conforming to a standard, transmission control of the stream, and the like, and the MPEG-2 Video 1541 to the HEVC/H.265 (Multi-view) 1545 are used for encoding and decoding of image data.

The memory interface 1517 is an interface for the external memory 1312. Data supplied from the image processing engine 1514 and the codec engine 1516 is supplied to the external memory 1312 via the memory interface 1517. Furthermore, the data read from the external memory 1312 is supplied to the video processor 1332 (the image processing engine 1514 or the codec engine 1516) via the memory interface 1517.

The multiplexing and demultiplexing unit (MUX DMUX) 1518 performs multiplexing and demultiplexing of various data related to an image such as a bit stream of coded data, image data, and a video signal. Methods of the multiplexing and demultiplexing are arbitrary. For example, at the time of multiplexing, the multiplexing and demultiplexing unit (MUX DMUX) 1518 not only can combine a plurality of data into one, but also can add predetermined header information or the like to the data. Furthermore, at the time of demultiplexing, the multiplexing and demultiplexing unit (MUX DMUX) 1518 not only can split one data into a plurality of data, but also can add predetermined header information or the like to each split data. That is, the multiplexing and demultiplexing unit (MUX DMUX) 1518 can convert the format of data by multiplexing and demultiplexing. For example, the multiplexing and demultiplexing unit (MUX DMUX) 1518 multiplexes bit streams, thereby being able to perform conversion to the transport stream that is the bit stream of the format for transfer, and the data (file data) of the file format for recording. Of course, reverse conversion is also possible by demultiplexing.

The network interface 1519 is an interface for the broadband modem 1333, the connectivity 1321, and the like, for example. The video interface 1520 is an interface for the connectivity 1321, the camera 1322, and the like, for example.

Next, an example will be described of operation of the video processor 1332. For example, when a transport stream is received from the external network via the connectivity 1321, the broadband modem 1333, or the like, the transport stream is supplied to the multiplexing and demultiplexing unit (MUX DMUX) 1518 via the network interface 1519 to be demultiplexed, and decoded by the codec engine 1516. The image data obtained by decoding by the codec engine 1516 is, for example, subjected to predetermined image processing by the image processing engine 1514, subjected to predetermined conversion by the display engine 1513, and supplied to, for example, the connectivity 1321 or the like via the display interface 1512, and the image is displayed on a monitor. Furthermore, for example, the image data obtained by decoding by the codec engine 1516 is re-encoded by the codec engine 1516, multiplexed by the multiplexing and demultiplexing unit (MUX DMUX) 1518 to be converted into file data, output to, for example, the connectivity 1321 or the like via the video interface 1520, and recorded in various recording media.

Moreover, for example, the file data of the coded data in which the image data is encoded, read from the recording medium (not illustrated) by the connectivity 1321 or the like, is supplied to the multiplexing and demultiplexing unit (MUX DMUX) 1518 via the video interface 1520 to be demultiplexed, and decoded by the codec engine 1516. The image data obtained by decoding by the codec engine 1516 is subjected to predetermined image processing by the image processing engine 1514, subjected to predetermined conversion by the display engine 1513, and supplied to, for example, the connectivity 1321 or the like via the display interface 1512, and the image is displayed on the monitor. Furthermore, for example, the image data obtained by decoding by the codec engine 1516 is re-encoded by the codec engine 1516, multiplexed by the multiplexing and demultiplexing unit (MUX DMUX) 1518 to be converted into a transport stream, supplied to, for example, the connectivity 1321, the broadband modem 1333, or the like via the network interface 1519, and transmitted to another device (not illustrated).

Note that, image data and other data are exchanged between the processing parts in the video processor 1332 by using, for example, the internal memory 1515 and the external memory 1312. Furthermore, the power management module 1313 controls power supply to the control unit 1511, for example.

In a case where the present technology is applied to the video processor 1332 configured as described above, it is sufficient that the present technology according to each of the above-described embodiments is applied to the codec engine 1516. That is, for example, it is sufficient that the codec engine 1516 has the function of the above-described image encoding device 100 or the image decoding device 200, or the functions of both. By doing so, the video processor 1332 can obtain an effect similar to each of the embodiments described above with reference to Figs. 10 to 25.

Note that, in the codec engine 1516, the present technology (in other words, the function of the image encoding device 100) may be implemented by hardware such as a logic circuit, may be implemented by software such as a built-in program, or may be implemented by both of hardware and software.

Two examples have been described of the configuration of the video processor 1332 in the above; however, the configuration of the video processor 1332 is arbitrary and may be other than the above two examples. Furthermore, the video processor 1332 may be configured as one semiconductor chip, but may be configured as a plurality of semiconductor chips. For example, a three-dimensional layered LSI may be used in which a plurality of semiconductors is layered. Furthermore, the video processor 1332 may be implemented by a plurality of LSIs.

(Application example to device)

The video set 1300 can be incorporated in various devices that process image data. For example, the video set 1300 can be incorporated in the television device 900 (Fig. 27), the mobile phone 920 (Fig. 28), the recording/reproducing device 940 (Fig. 29), the imaging device 960 (Fig. 30), and the like. By incorporating the video set 1300 in a device, the device can obtain an effect similar to each of the embodiments described above with reference to Figs. 10 to 25.

Note that, even a part of each component of the video set 1300 described above can be implemented as a configuration to which the present technology is applied, as long as the part includes the video processor 1332. For example, only the video processor 1332 can be implemented as a video processor to which the present technology is applied. Furthermore, for example, as described above, the processor indicated by the dotted line 1341, the video module 1311, or the like can be implemented as a processor, a module, or the like to which the present technology is applied. Moreover, for example, the video module 1311, the external memory 1312, the power management module 1313, and the front-end module 1314 can be combined and implemented as a video unit 1361 to which the present technology is applied. Even in the case of any of the configurations, an effect can be obtained similar to each of the embodiments described above with reference to Figs. 10 to 25.

That is, as long as configurations include the video processor 1332, any of the configurations can be incorporated in various devices that process image data similarly to the case of the video set 1300. For example, the video processor 1332, the processor indicated by the dotted line 1341, the video module 1311, or the video unit 1361 can be incorporated in the television device 900 (Fig. 27), the mobile phone 920 (Fig. 28), the recording/reproducing device 940 (Fig. 29), the imaging device 960 (Fig. 30), and the like. Then, by incorporating any of the configurations to which the present technology is applied, the device can obtain an effect similar to each of the embodiments described above with reference to Figs. 10 to 25, similarly to the case of the video set 1300.

<Eighth embodiment>

Furthermore, the present technology can also be applied to a network system including a plurality of devices. Fig. 34 illustrates an example of a schematic configuration of the network system to which the present technology is applied.

A network system 1600 illustrated in Fig. 34 is a system in which devices exchange information regarding an image (moving image) via a network. A cloud service 1601 of the network system 1600 is a system that provides a service related to the image (moving image) for terminals such as a computer 1611, an audio visual (AV) device 1612, a portable information processing terminal 1613, and an internet of things (IoT) device 1614 communicably connected to the cloud service 1601. For example, the cloud service 1601 provides the terminals with a providing service of image (moving image) contents, such as so-called moving image distribution (on-demand or live distribution). Furthermore, for example, the cloud service 1601 provides a backup service that receives and stores image (moving image) contents from the terminals. Furthermore, for example, the cloud service 1601 provides a service that mediates exchange of the image (moving image) contents between the terminals.

The physical configuration of the cloud service 1601 is arbitrary. For example, the cloud service 1601 may include various servers such as a server that stores and manages moving images, a server that distributes moving images to the terminals, a server that acquires moving images from the terminals, and a server that manages users (terminals) and billing, and an arbitrary network such as the Internet or a LAN

The computer 1611 includes an information processing device, for example, a personal computer, a server, a workstation, or the like. The AV device 1612 includes an image processing device, for example, a television receiver, a hard disk recorder, a game device, a camera, or the like. The portable information processing terminal 1613 includes a portable information processing device, for example, a notebook personal computer, a tablet terminal, a mobile phone, a smartphone, or the like. The IoT device 1614 includes an arbitrary object that performs processing related to an image, for example, a machine, a home appliance, furniture, another object, an IC tag, a card type device, or the like. Each of these terminals has a communication function, and can connect (establish a session) to the cloud service 1601 to exchange information (in other words, communicate) with the cloud service 1601. Furthermore, each terminal can also communicate with another terminal. Communication between the terminals may be performed via the cloud service 1601, or may be performed without intervention of the cloud service 1601.

When the present technology is applied to the network system 1600 as described above and image (moving image) data is exchanged between the terminals or between the terminal and the cloud service 1601, the image data may be encoded and decoded as described above in each of the embodiments. That is, the terminals (the computer 1611 to the IoT device 1614) and the cloud service 1601 may each have the functions of the above-described image encoding device 100 and the image decoding device 200. By doing so, the terminals (the computer 1611 to the IoT device 1614) and the cloud service 1601 exchanging the image data can obtain an effect similar to each of the embodiments described above with reference to Figs. 10 to 25.

Note that, various types of information regarding coded data (bit stream) may be multiplexed into the coded data and transmitted or recorded, or may be transmitted or recorded as separate data associated with the coded data without being multiplexed into the coded data. Here, a term "associate" means that, for example, when processing one data, the other data is made to be usable (linkable). That is, the data associated with each other may be collected as one data, or may be individual data. For example, information associated with coded data (image) may be transmitted on a transmission line different from that for the coded data (image). Furthermore, for example, the information associated with the coded data (image) may be recorded in a recording medium different from that for the coded data (image) (or in a different recording area of the same recording medium). Note that, this "association" may be a part of data, not the entire data. For example, an image and information corresponding to the image may be associated with each other in an arbitrary unit such as a plurality of frames, one frame, or a portion within a frame.

Furthermore, as described above, in this specification, terms "combine", "multiplex", "add", "integrate", "include", "store", "put in", "enclose, "insert", and the like mean to combine a plurality of objects into one, for example, to combine coded data and metadata into one, and the terms mean one method of the "associate" described above.

Note that, the advantageous effects described in the specification are merely examples, and the advantageous effects of the present technology are not limited to them and may include other effects.

Furthermore, the embodiment of the present disclosure is not limited to the embodiments described above, and various modifications are possible without departing from the gist of the present disclosure.

Note that, the present disclosure can also adopt the following configurations.

(1) An image processing device including
a prediction unit that generates a predicted image of a block on the basis of motion vectors of two vertices arranged in a direction of a side having a larger size out of a size in a longitudinal direction and a size in a lateral direction of the block.

(2) The image processing device according to (1), in which
the prediction unit generates the predicted image of the block on the basis of the motion vectors of the two vertices arranged in the direction of the side having the larger size out of the size in the longitudinal direction and the size in the lateral direction of the block, in a case where a predicted image of an adjacent block adjacent to a vertex of a side in the direction of the side having the larger size out of the size in the longitudinal direction and the size in the lateral direction of the block is generated on the basis of motion vectors of two vertices arranged in a direction of a side having a larger size out of a size in a longitudinal direction and a size in a lateral direction of the adjacent block.

(3) The image processing device according to (1) or (2), further including
an encoding unit that encodes multiple vectors prediction information indicating that the predicted image of the block is generated on the basis of the motion vectors of the two vertices arranged in the direction of the side having the larger size out of the size in the longitudinal direction and the size in the lateral direction of the block.

(4) The image processing device according to (3), in which
the encoding unit encodes the multiple vectors prediction information on the basis of whether or not a predicted image of an adjacent block adjacent to a vertex of a side in the direction of the side having the larger size out of the size in the longitudinal direction and the size in the lateral direction of the block is generated on the basis of motion vectors of two vertices arranged in a direction of a side having a larger size out of a size in a longitudinal direction and a size in a lateral direction of the adjacent block.

(5) The image processing device according to (4), in which
the encoding unit switches contexts of a probability model in encoding of the multiple vectors prediction information on the basis of whether or not the predicted image of the adjacent block is generated on the basis of the motion vectors of the two vertices arranged in the direction of the side having the larger size out of the size in the longitudinal direction and the size in the lateral direction of the adjacent block.

(6) The image processing device according to (4), in which
the encoding unit switches codes of the multiple vectors prediction information on the basis of whether or not the predicted image of the adjacent block is generated on the basis of the motion vectors of the two vertices arranged in the direction of the side having the larger size out of the size in the longitudinal direction and the size in the lateral direction of the adjacent block.

(7) The image processing device according to any of (4) to (6), in which

the encoding unit encodes the multiple vectors prediction information to cause a code amount to become small in a case where the predicted image of the adjacent block is generated on the basis of the motion vectors of the two vertices arranged in the direction of the side having the larger size out of the size in the longitudinal direction and the size in the lateral direction of the adjacent block, as compared with a case where the predicted image of the adjacent block is not generated on the basis of the motion vectors of the two vertices arranged in the direction of the side having the larger size out of the size in the longitudinal direction and the size in the lateral direction of the adjacent block.

(8) The image processing device according to any of (1) to (7), in which

the prediction unit generates the predicted image of the block by performing affine transformation of a reference image of the block on the basis of the motion vectors of the two vertices arranged in the direction of the side having the larger size out of the size in the longitudinal direction and the size in the lateral direction of the block.

(9) The image processing device according to any one of (1) to (8), in which

the block is generated by recursive repetition of splitting of one block into at least one of a horizontal direction or a vertical direction.

(10) An image processing method including

a step of, by an image processing device,

generating a predicted image of a block on the basis of motion vectors of two vertices arranged in a direction of a side having a larger size out of a size in a longitudinal direction and a size in a lateral direction of the block.

REFERENCE SIGNS LIST

| 100 | Image encoding device |
|---|---|
| 114 | Encoding unit |
| 119 | Prediction unit |
| 121, 131, 191, 193 | PU |
| 200 | Image decoding device |
| 216 | Prediction unit |

**Claims**

1. An image processing device comprising
   a prediction unit that generates a predicted image of a block on a basis of motion vectors of two vertices arranged in a direction of a side having a larger size out of a size in a longitudinal direction and a size in a lateral direction of the block.

2. The image processing device according to claim 1, wherein
   the prediction unit generates the predicted image of the block on the basis of the motion vectors of the two vertices arranged in the direction of the side having the larger size out of the size in the longitudinal direction and the size in the lateral direction of the block, in a case where a predicted image of an adjacent block adjacent to a vertex of a side in the direction of the side having the larger size out of the size in the longitudinal direction and the size in the lateral direction of the block is generated on a basis of motion vectors of two vertices arranged in a direction of a side having a larger size out of a size in a longitudinal direction and a size in a lateral direction of the adjacent block.

3. The image processing device according to claim 1, further comprising
   an encoding unit that encodes multiple vectors prediction information indicating that the predicted image of the block is generated on the basis of the motion vectors of the two vertices arranged in the direction of the side having the larger size out of the size in the longitudinal direction and the size in the lateral direction of the block.

4. The image processing device according to claim 3, wherein
   the encoding unit encodes the multiple vectors prediction information on a basis of whether or not a predicted image of an adjacent block adjacent to a vertex of a side in the direction of the side having the larger size out of the size in the longitudinal direction and the size in the lateral direction of the block is generated on a basis of motion vectors of two vertices arranged in a direction of a side having a larger size out of a size in a longitudinal direction and a size in a lateral direction of the adjacent block.

**5.** The image processing device according to claim 4, wherein
the encoding unit switches contexts of a probability model in encoding of the multiple vectors prediction information on the basis of whether or not the predicted image of the adjacent block is generated on the basis of the motion vectors of the two vertices arranged in the direction of the side having the larger size out of the size in the longitudinal direction and the size in the lateral direction of the adjacent block.

**6.** The image processing device according to claim 4, wherein
the encoding unit switches codes of the multiple vectors prediction information on the basis of whether or not the predicted image of the adjacent block is generated on the basis of the motion vectors of the two vertices arranged in the direction of the side having the larger size out of the size in the longitudinal direction and the size in the lateral direction of the adjacent block.

**7.** The image processing device according to claim 4, wherein
the encoding unit encodes the multiple vectors prediction information to cause a code amount to become small in a case where the predicted image of the adjacent block is generated on the basis of the motion vectors of the two vertices arranged in the direction of the side having the larger size out of the size in the longitudinal direction and the size in the lateral direction of the adjacent block, as compared with a case where the predicted image of the adjacent block is not generated on the basis of the motion vectors of the two vertices arranged in the direction of the side having the larger size out of the size in the longitudinal direction and the size in the lateral direction of the adjacent block.

**8.** The image processing device according to claim 1, wherein
the prediction unit generates the predicted image of the block by performing affine transformation of a reference image of the block on the basis of the motion vectors of the two vertices arranged in the direction of the side having the larger size out of the size in the longitudinal direction and the size in the lateral direction of the block.

**9.** The image processing device according to claim 1, wherein
the block is generated by recursive repetition of splitting of one block into at least one of a horizontal direction or a vertical direction.

**10.** An image processing method comprising
a step of, by an image processing device,
generating a predicted image of a block on a basis of motion vectors of two vertices arranged in a direction of a side having a larger size out of a size in a longitudinal direction and a size in a lateral direction of the block.

*FIG. 1*

FIG. 2

EP 3 570 547 A1

FIG. 3

EP 3 570 547 A1

FIG. 4

EP 3 570 547 A1

FIG. 5

*FIG. 6*

EP 3 570 547 A1

*FIG. 7*

EP 3 570 547 A1

FIG. 8

EP 3 570 547 A1

FIG. 9

## FIG. 10

EP 3 570 547 A1

# FIG. 11

A

B

EP 3 570 547 A1

# FIG. 12

FIG. 13

EP 3 570 547 A1

# FIG. 14

A

B

EP 3 570 547 A1

FIG. 15

EP 3 570 547 A1

## FIG. 16

```
        ( IMAGE ENCODING PROCESSING START )
                         │
                         ▼
              ┌──────────────────────────┐ S11
              │  SET ENCODING PARAMETERS │
              └──────────────────────────┘
                         │
                         ▼
                      S12
           ◇ MODE INFORMATION              ◇──NO──────────────────────┐
           ◇ INDICATES INTER-PREDICTION ◇                             │
           ◇ PROCESSING?                ◇                             ▼
                         │                              ┌──────────────────────────┐ S20
                        YES                             │ PERFORM INTRA-ENCODING   │
                         │                              │ PROCESSING               │
                      S13                               └──────────────────────────┘
           ◇ Merge flag=1? ◇──NO───────────┐                         │
                         │                  │                         │
                        YES                 │                         │
                         │                  │                         │
                      S14                 S17                         │
           ◇ Affine flag=1? ◇──NO──┐  ◇ Affine flag=1? ◇──NO──┐      │
                         │          │         │                │      │
                        YES         │        YES               │      │
                         ▼          │         ▼                │      │
        ┌────────────────────┐ S15  │  ┌────────────────────┐ S18   │
        │ PERFORM MERGE AFFINE│     │  │ PERFORM AMVP AFFINE │       │
        │ TRANSFORMATION MODE │     │  │ TRANSFORMATION MODE │       │
        │ ENCODING PROCESSING │     │  │ ENCODING PROCESSING │       │
        └────────────────────┘     │  └────────────────────┘        │
                         │          ▼         │                ▼      │
                         │  ┌──────────────┐ S16  ┌──────────────────┐ S19
                         │  │ PERFORM MERGE │     │ PERFORM AMVP MODE │  │
                         │  │ MODE ENCODING │     │ ENCODING PROCESSING│ │
                         │  │ PROCESSING    │     └──────────────────┘  │
                         │  └──────────────┘         │                  │
                         ▼        │                  ▼                  │
                         ◄────────┴──────────────────┴──────────────────┘
                         │
                         ▼
                    ( END )
```

EP 3 570 547 A1

# FIG. 17

INTER-PREDICTION PROCESSING MODE
SETTING PROCESSING START

PERFORM MERGE MODE ENCODING
PROCESSING, AND CALCULATE RD COST $J_{MRG}$ — S41

PERFORM AMVP MODE ENCODING
PROCESSING, AND CALCULATE RD COST $J_{AMVP}$ — S42

PERFORM MERGE AFFINE TRANSFORMATION MODE
ENCODING PROCESSING, AND CALCULATE RD COST $J_{MRGAFFINE}$ — S43

PERFORM AMVP AFFINE TRANSFORMATION MODE ENCODING
PROCESSING, AND CALCULATE RD COST $J_{AMVPAFFINE}$ — S44

S45
$J_{MRG}$ IS SMALLEST? — NO

YES

Merge flag=1
Affine flag=0 — S46

S47
$J_{AMVP}$ IS SMALLEST? — NO

YES

Merge flag=0
Affine flag=0 — S48

S49
$J_{MRGAFFINE}$ IS SMALLEST? — NO

YES

Merge flag=1
Affine flag=1 — S50

S51
Merge flag=0
Affine flag=1

END

# FIG. 18

INTER-PREDICTION PROCESSING MODE
SETTING PROCESSING START

PERFORM MERGE MODE ENCODING
PROCESSING, AND CALCULATE RD COST $J_{MRG}$    **S71**

PERFORM AMVP MODE ENCODING
PROCESSING, AND CALCULATE RD COST $J_{AMVP}$    **S72**

**S73** H <W ?  NO

**S75** H >W ?  NO

YES

**S74** Affine flags
ARE SET TO 1 IN
EQUAL TO OR GREATER
THAN PREDETERMINED NUMBER OF
BLOCKS AMONG BLOCKS a
TO e OR BLOCKS f
AND g?    NO

YES

**S76** Affine flags
ARE SET TO 1 IN
EQUAL TO OR GREATER
THAN PREDETERMINED NUMBER OF
BLOCKS AMONG BLOCKS a TO c,
f, AND g OR BLOCKS d
AND e?    NO

YES

**S77** Affine flags
ARE SET TO 1 IN EQUAL TO
OR GREATER THAN PREDETERMINED
NUMBER OF BLOCKS
AMONG BLOCKS a
TO g?    NO

YES

PERFORM MERGE AFFINE TRANSFORMATION
MODE ENCODING PROCESSING,
AND CALCULATE RD COST $J_{MRGAFFINE}$    **S78**

PERFORM AMVP AFFINE TRANSFORMATION
MODE ENCODING PROCESSING, AND
CALCULATE RD COST $J_{AMVPAFFINE}$    **S79**

**S80** $J_{MRG}$ IS
SMALLEST?    NO

YES

Merge flag=1
Affine flag=0    **S81**

**S82** $J_{AMVP}$ IS
SMALLEST?    NO

YES

Merge flag=0
Affine flag=0    **S83**

**S84** $J_{MRGAFFINE}$
IS SMALLEST?    NO

YES

Merge flag=1
Affine flag=1    **S85**

Merge flag=0
Affine flag=1    **S86**

END

# FIG. 19

```
( MERGE AFFINE TRANSFORMATION MODE )
    ENCODING PROCESSING START
```

S101

H > W ?

NO

YES

DETERMINE PREDICTION VECTORS $pv_0$ AND $pv_2$  — S102

DETERMINE PREDICTION VECTORS $pv_0$ AND $pv_1$  — S103

CALCULATE MOTION VECTOR ON THE BASIS OF PREDICTION VECTORS — S104

PERFORM AFFINE TRANSFORMATION ON REFERENCE IMAGE ON THE BASIS OF MOTION VECTOR — S105

CALCULATE DIFFERENCE BETWEEN IMAGE AND PREDICTION IMAGE — S106

PERFORM ORTHOGONAL TRANSFORMATION — S107

PERFORM QUANTIZATION — S108

PERFORM INVERSE QUANTIZATION — S109

PERFORM INVERSE ORTHOGONAL TRANSFORMATION — S110

PERFORM ADDITION TO PREDICTED IMAGE — S111

PERFORM STORING — S112

PERFORM ENCODING — S113

( END )

53

# FIG. 20

AMVP AFFINE TRANSFORMATION MODE
ENCODING PROCESSING START

S131
H>W ?

NO

YES

DETERMINE PREDICTION
VECTORS $pv_0$ AND $pv_2$ | S132

DETERMINE PREDICTION
VECTORS $pv_0$ AND $pv_1$ | S133

ADD PREDICTION VECTOR AND
DIFFERENCE IN MOTION VECTOR
INFORMATION TOGETHER, AND
CALCULATE MOTION VECTOR OF PU | S134

CALCULATE MOTION VECTOR OF
EACH MOTION COMPENSATION BLOCK | S135

PERFORM AFFINE TRANSFORMATION
ON REFERENCE IMAGE
ON THE BASIS OF MOTION VECTOR | S136

CALCULATE DIFFERENCE BETWEEN
IMAGE AND PREDICTION IMAGE | S137

PERFORM ORTHOGONAL TRANSFORMATION | S138

PERFORM QUANTIZATION | S139

PERFORM INVERSE QUANTIZATION | S140

PERFORM INVERSE ORTHOGONAL
TRANSFORMATION | S141

PERFORM ADDITION TO PREDICTED IMAGE | S142

PERFORM STORING | S143

PERFORM ENCODING | S144

END

## FIG. 21

Affine flag ENCODING PROCESSING START

S161
H<W?

NO →

YES ↓

S162
Affine flags ARE SET
TO 1 IN EQUAL TO OR GREATER
THAN PREDETERMINED NUMBER OF BLOCKS
AMONG BLOCKS a TO e
OR BLOCKS f AND g?

NO →

YES ↓

S164
H>W?

NO →

YES ↓

S165
Affine flags ARE SET
TO 1 IN EQUAL TO OR GREATER
THAN PREDETERMINED NUMBER OF BLOCKS
AMONG BLOCKS a TO c, f, AND g
OR BLOCKS d AND e?

YES

NO ↓

S166
Affine flags ARE SET
TO 1 IN EQUAL TO OR GREATER
THAN PREDETERMINED NUMBER OF
BLOCKS AMONG BLOCKS
a TO g?

NO

YES ↓

ENCODE Affine flag BY USING THAT
THERE IS HIGH POSSIBILITY THAT
Affine flag IS SET TO 1, AS CONTEXT
S163

ENCODE Affine flag BY USING THAT
THERE IS LOW POSSIBILITY THAT
Affine flag IS SET TO 1, AS CONTEXT
S167

END

EP 3 570 547 A1

FIG. 22

EP 3 570 547 A1

## FIG. 23

IMAGE DECODING PROCESSING START

PERFORM DECODING — S201

SET CU — S202

S203
MODE INFORMATION INDICATES INTER-PREDICTION PROCESSING?
NO → PERFORM INTRA-DECODING PROCESSING — S211

YES

S204
Merge flag=1?
NO

YES

S205
Affine flag=1?
NO

YES

MERGE AFFINE TRANSFORMATION MODE DECODING PROCESSING — S206

PERFORM MERGE MODE DECODING PROCESSING — S207

S208
Affine flag=1?
NO

YES

AMVP AFFINE TRANSFORMATION MODE DECODING PROCESSING — S209

PERFORM AMVP MODE DECODING PROCESSING — S210

END

# FIG. 24

```
┌──────────────────────────────────────┐
│  MERGE AFFINE TRANSFORMATION         │
│  MODE DECODING PROCESSING START      │
└──────────────────────────────────────┘
                  │
                  ▼
┌──────────────────────────────────────┐
│   PERFORM INVERSE QUANTIZATION       │ S231
└──────────────────────────────────────┘
                  │
                  ▼
┌──────────────────────────────────────┐
│   PERFORM INVERSE ORTHOGONAL         │ S232
│   TRANSFORMATION                     │
└──────────────────────────────────────┘
                  │
                  ▼       S233
              ╱───────╲
             ╱  H>W ?  ╲──── NO ──────────────┐
              ╲───────╱                        │
                  │ YES                        │
                  ▼                            ▼
┌──────────────────────┐ S234   ┌──────────────────────┐ S235
│ DETERMINE PREDICTION │        │ DETERMINE PREDICTION │
│ VECTORS $pv_0$ AND $pv_2$ │        │ VECTORS $pv_0$ AND $pv_1$ │
└──────────────────────┘        └──────────────────────┘
                  │◄────────────────────────────┘
                  ▼
┌──────────────────────────────────────┐
│  CALCULATE MOTION VECTOR ON THE      │ S236
│  BASIS OF PREDICTION VECTORS         │
└──────────────────────────────────────┘
                  │
                  ▼
┌──────────────────────────────────────┐
│  PERFORM AFFINE TRANSFORMATION       │ S237
│  ON REFERENCE IMAGE                  │
│  ON THE BASIS OF MOTION VECTOR       │
└──────────────────────────────────────┘
                  │
                  ▼
┌──────────────────────────────────────┐
│  PERFORM ADDITION TO PREDICTED IMAGE │ S238
└──────────────────────────────────────┘
                  │
                  ▼
┌──────────────────────────────────────┐
│   PERFORM STORING                    │ S239
└──────────────────────────────────────┘
                  │
                  ▼
            ┌──────────┐
            │  RETURN  │
            └──────────┘
```

# FIG. 25

AMVP AFFINE TRANSFORMATION MODE
DECODING PROCESSING START

PERFORM INVERSE QUANTIZATION — S251

PERFORM INVERSE ORTHOGONAL
TRANSFORMATION — S252

S253

H > W ?

NO →

YES ↓

DETERMINE PREDICTION
VECTORS $pv_0$ AND $pv_2$ — S254

DETERMINE PREDICTION
VECTORS $pv_0$ AND $pv_1$ — S255

ADD PREDICTION VECTOR AND
DIFFERENCE IN MOTION VECTOR
INFORMATION TOGETHER, AND
CALCULATE MOTION VECTOR OF PU — S256

CALCULATE MOTION VECTOR OF
EACH MOTION COMPENSATION BLOCK — S257

PERFORM AFFINE TRANSFORMATION
ON REFERENCE IMAGE
ON THE BASIS OF MOTION VECTOR — S258

PERFORM ADDITION TO PREDICTED IMAGE — S259

PERFORM STORING — S260

RETURN

*FIG. 26*

CPU 801 — ROM 802 — RAM 803

804

810

INPUT/OUTPUT INTERFACE

INPUT UNIT 811 — OUTPUT UNIT 812 — STORAGE UNIT 813 — COMMUNICATION UNIT 814 — DRIVE 815

REMOVABLE MEDIUM 821

800

# FIG. 27

EP 3 570 547 A1

# FIG. 28

921

920

922

**COMMUNICATION UNIT**

923

**AUDIO CODEC**

924

925

926 — **CAMERA UNIT**

**DEMULTIPLEXING UNIT** — 928

927 — **IMAGE PROCESSING UNIT**

**RECORDING/ REPRODUCING UNIT** — 929

**DISPLAY UNIT** — 930

933

**CONTROL UNIT**

**OPERATION UNIT**

931

932

EP 3 570 547 A1

# FIG. 29

## FIG. 30

EP 3 570 547 A1

## FIG. 31

# FIG. 32

VIDEO SIGNAL →

1401
VIDEO INPUT PROCESSING UNIT

1402 — FIRST IMAGE SCALING UNIT

1403 — SECOND IMAGE SCALING UNIT

VIDEO SIGNAL ←

VIDEO OUTPUT PROCESSING UNIT
1404

1405
FRAME MEMORY

1407
ENCODING AND DECODING ENGINE

MEMORY CONTROL UNIT
1406

ACCESS MANAGEMENT TABLE
1406A

AUDIO SIGNAL ↓

AUDIO ENCODER — 1410

1409A — AUDIO ES BUFFER

1408A — VIDEO ES BUFFER

VIDEO ES BUFFER
1408B

AUDIO ES BUFFER
1409B

AUDIO DECODER — 1411

AUDIO SIGNAL ↓

1412
MUX

DMUX
1413

1414
STREAM BUFFER

FILE DATA

TRANSPORT STREAM

1332

EP 3 570 547 A1

# FIG. 33

EP 3 570 547 A1

# FIG. 34

CLOUD SERVICE ~1601

| COMPUTER | AV DEVICE | PORTABLE INFORMATION PROCESSING TERMINAL | IoT DEVICE |
| 1611 | 1612 | 1613 | 1614 |

1600

**EP 3 570 547 A1**

## INTERNATIONAL SEARCH REPORT

| | International application No. |
|---|---|
| | PCT/JP2017/047373 |

**A. CLASSIFICATION OF SUBJECT MATTER**
Int. Cl. H04N19/54(2014.01)i, H04N19/70(2014.01)i

According to International Patent Classification (IPC) or to both national classification and IPC

**B. FIELDS SEARCHED**

Minimum documentation searched (classification system followed by classification symbols)
Int. Cl. H04N19/00-19/98

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Feng Zou et al., "Improved affine motion prediction", Joint Video Exploration Team (JVET) of ITU-T SG 16 WP 3 and ISO/IEC JTC 1/SC 29/WG 11 3rd Meeting: Geneva, CH, 26 May – 1 June 2016, [JVET-C0062_v2] | 1-10 |
| A | JP 2012-165278 A (JVC KENWOOD CORP.) 30 August 2012, paragraph [0051], fig. 4 (Family: none) | 1-10 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANLE CHEN et al.** Algorithm Description of Joint Exploration Test Model 4 (JVET-C1001). *JVET of ITU-T SG16 WP3 and ISO/IEC JTC1/SC29/WG11,* 26 May 2016
- **FENG ZOU.** Improved affine motion prediction (JVET-C0062). *JVET of ITU-T SG16 WP3 and ISO/IEC JTC1/SC29/WG11,* 26 June 2016

- EE2.1: Quadtree plus binary tree structure integration with JEM tools (JVET-C0024). *JVET of ITU-T SG16 WP3 and ISO/IEC JTC1/SC29/WG11,* 16 May 2016